# EUROPÄISCHE PATENTSCHRIFT

(11) **EP 4 444 535 B1**
(45) Veröffentlichungstag und Bekanntmachung des Hinweises auf die Patenterteilung: **25.11.2026**
(21) Anmeldenummer: 22836066.5
(22) Anmeldetag: 12.12.2022
(51) Int. Cl.: B29C 71/00, B29C 64/35, B29C 64/379, B33Y 40/20

(54) **VORRICHTUNG ZUR BEHANDLUNG VON POLYMERELEMENTEN, UND VERFAHREN**
DEVICE FOR TREATING POLYMER ELEMENTS, AND METHOD
DISPOSITIF DE TRAITEMENT D'ÉLÉMENTS POLYMÈRES ET PROCÉDÉ

(30) Priorität: 10.12.2021 DE 102021132733; 11.03.2022 DE 102022105806; 30.06.2022 DE 102022116370
(43) Veröffentlichungstag der Anmeldung: 16.10.2024
(73) Patentinhaber: 84J GmbH & Co. KG, 93444 Bad Koetzling (DE)
(72) Erfinder: NEUHAEUSER, Jakob, 82266 Inning (DE)
(74) Vertreter: Bobbert & Partner Patentanwälte PartmbB
(86) Internationale Anmeldenummer: PCT/EP2022/085461
(87) Internationale Veröffentlichungsnummer: WO 2023/105090

(56) Entgegenhaltungen:
- EP-A1- 3 590 693
- WO-A1-2020/099096
- US-A1- 2009 283 119
- US-A1- 2019 375 158
- US-A1- 2021 114 304

## Beschreibung

Die vorliegende Erfindung betrifft eine Vorrichtung zur Behandlung von Polymerelementen (hierin auch kurz: Elemente) gemäß Anspruch 1, ein entsprechendes Verfahren gemäß Anspruch 23, eine Steuervorrichtung für die Vorrichtung gemäß Anspruch 28 sowie einen Wärmereaktor gemäß Anspruch 29 und eine Baugruppeneinheit gemäß Anspruch 30 bzw. gemäß jeweils der Oberbegriffe oder Gattungsbegriffe dieser Ansprüche. Additive Verfahren, auch dreidimensionale (3D) Druckverfahren genannt, gibt es in unterschiedlichen Formen ausgehend von Baustoffen in flüssiger, viskoser, fester oder pulverförmiger Form, wie beispielsweise Selektives Lasersintern (SLS), Multijetfusion (MJF), Highspeed Sintering (HSS), Fused Deposition Modelling (FDM) oder Fused Filament Fabrication (FFF).

Materialien, die oft bei additiven Fertigungsprozessen verwendet werden, sind beispielsweise thermoplastische Polymere wie Polyamid und Polypropylen oder thermoplastische Elastomere, wie unter anderem thermoplastisches Polyurethan (TPU), thermo-plastische Polyamide (TPA), thermoplastische Copolyesterverbindungen (TPC).

Diese Polymerelemente haben oft eine unerwünscht raue Oberfläche mit einem Mittenrauwert (Ra-Wert) von bis zu 20 µm und mehr.

Aus der Praxis sind Vorrichtungen zur Behandlung von Polymerelementen bekannt.

Wenn in der vorliegenden Anmeldung von Rauheit einer Oberfläche gesprochen wird, bezieht sich dies auf Rₐ-Werte, d. h. arithmetische mittlere Rauheitswerte, sofern der Kontext nichts anderes besagt.

Wenn hierin von "Polymerelementen" die Rede ist, so sind dies in einigen Ausführungsformen Elemente, welche mindestens einen Anteil oder gewissen Anteil an Polymeren beinhalten und/oder aus mindestens einem Polymer und mindestens einem Füllstoff bestehen wie beispielsweise Fasern oder Glaskugeln. Erfindungsmäßig können Polymerelemente behandelt werden, die bevorzugt in einem additiven Fertigungsverfahren erhalten wurden, wie beispielsweise Selektives Lasersintern (SLS), Multijetfusion (MJF), Highspeed Sintering (HSS), Fused Deposition Modelling (FDM), Fused Filament Fabrication (FFF), Fused Granulate Fabrication (FGF) oder einem Binder-Jetting-Prozess. Auch mit DLP-, SLA- und MJM-Prozessen erhaltene Polymerelemente sowie mit anderen additiven Fertigungsverfahren hergestellte Polymerelemente können mit dem Verfahren der vorliegenden Erfindung behandelt werden.

Das Dokument EP 3 590 693 A1 offenbart eine Vorrichtung zur Behandlung von Polymerelementen, die durch ein additives Fertigungsverfahren gemäß des Oberbegriffs von Anspruch 1 gewonnen wurden.

Eine Aufgabe der vorliegenden Erfindung ist es, eine weitere Vorrichtung zur Behandlung von Polymerelementen anzugeben. Ferner sollen ein Verfahren, eine Steuervorrichtung sowie ein Wärmereaktor hierzu angegeben werden.

Die erfindungsgemäße Aufgabe wird durch eine Vorrichtung zur Behandlung von Polymerelementen mit den Merkmalen des Anspruchs 1 gelöst, ferner durch ein Verfahren mit den Merkmalen des Anspruchs 12. Erfindungsgemäß wird eine Vorrichtung zur Behandlung von Polymerelementen mittels eines Behandlungsmediums vorgeschlagen, wobei die Polymerelemente zumindest teilweise durch einen additiven Herstellungsprozess erhalten wurden. Die Vorrichtung umfasst eine Kammer zur Aufnahme der zu behandelnden Polymerelemente, wobei die Kammer eine seitliche Wandung, einen Boden und eine, vorzugsweise stirnseitige oder obere, Öffnung aufweist. Diese vorzugsweise stirnseitige Öffnung ist optional die einzige Öffnung der Kammer und kann mittels eines Deckels, der ebenfalls von der erfindungsgemäßen Vorrichtung umfasst sein kann, oder einer Tür, Klappe, oder dergleichen (im Folgenden austauschbar durch "Deckel" ersetzt), insbesondere fluiddicht, verschlossen werden.

Eine abweichende Anordnung der Öffnung, beispielsweise in der Wandung der Kammer, die je nach Ausführungsform ebenfalls mit einem Deckel zu ihrem Verschließen versehen sein kann, ist ebenfalls von der vorliegenden Erfindung umfasst.

Die Vorrichtung umfasst optional eine Vorrichtung zum Aufnehmen und/oder Lagern der Polymerelemente im Inneren der Kammer, beispielsweise ein Gestell, ein Ständer, eine Stellage, ein Rack oder dergleichen. Eine solche Aufnahmevorrichtung kann entweder ortsfest in Bezug zur Kammer ausgebildet oder darin bewegbar angeordnet sein, wie beispielsweise drehbar, kippbar und/oder schwenkbar. Sie kann herausnehmbar sein.

Erfindungsgemäß umfasst die Vorrichtung weiter eine erste Heizvorrichtung und optional eine zweite Heizvorrichtung. Optional sind mehr als zwei Heizvorrichtungen von der Vorrichtung umfasst.

Die Vorrichtung umfasst optional eine Vakuum- oder Unterdruckvorrichtung oder einen Anschluss hierfür, mittels welcher innerhalb der fluiddicht verschlossenen Kammer ein Unterdruck erzeugt werden kann.

Erfindungsgemäß wird ein Verfahren zur Behandlung von Polymerelementen vorgeschlagen, wobei solche Elemente zumindest teilweise durch einen additiven Herstellungsprozess erhalten wurden.

Das erfindungsgemäße Verfahren umfasst ein Bereitstellen einer Vorrichtung, vorzugsweise einer erfindungsgemäßen Vorrichtung, weiter ein Bereitstellen der zu behandelnden Polymerelemente in der Kammer der erfindungsgemäßen Vorrichtung sowie ein Bereitstellen eines, vorzugsweise flüssigen, Behandlungsmediums in der Kammer der Vorrichtung. Optional liegt das Behandlungsmedium frei in der Kammer vor, kann sich demnach auf dem Boden der Kammer oder in einer optionalen, nachstehend erläuterten Sicke frei verteilen, nachdem sie in flüssiger Form in den Boden oder in die Sicke eingebracht wurde.

Das Verfahren umfasst ferner als weiteren Schritt einen Erwärmungsschritt zum Erwärmen der Polymerelemente in der Kammer unter Einsatz der ersten Heizvorrichtung oder nur der ersten Heizvorrichtung. Dieser Schritt wird hierin auch als Verfahrensschritt a) oder Vorbehandlungsschritt bezeichnet. Die Polymerelemente werden in diesem Schritt auf eine für den folgenden Verfahrensschritt b) optimale Temperatur gebracht.

Weiter ist ein Verdampfungsschritt zum Verdampfen des Behandlungsmediums in der Kammer und/oder außerhalb derselben mittels einer Heizvorrichtung, etwa der zweiten Heizvorrichtung oder nur der optionalen zweiten Heizvorrichtung, vom erfindungsgemäßen Verfahren umfasst. Dieser Schritt wird hierin auch als Verfahrensschritt b) bezeichnet.

Optional kann außerdem ein Kühlschritt zum Kühlen der Polymerelemente vom Verfahren umfasst sein. Dieser Schritt wird hierin auch als Verfahrensschritt c) bezeichnet.

Erfindungsgemäß wird weiter eine Steuervorrichtung für eine erfindungsgemäße Vorrichtung vorgeschlagen, welche konfiguriert ist, die vorstehend genannten weiteren Schritte a) (Erwärmungsschritt), b) (Verdampfungsschritt) und/oder c) (Kühlschritt) des erfindungsgemäßen Verfahrens im Zusammenspiel mit der Vorrichtung zu regeln oder zu steuern.

Der erfindungsgemäße Wärmereaktor weist ein Rohr und eine Aufnahmevorrichtung zur Aufnahme des flüssigen Behandlungsmediums auf. Das Rohr weist auf oder steht in Verbindung mit wenigstens zwei Heizvorrichtungen, welche unterschiedlichen Abstand von der Aufnahmevorrichtung für das flüssige Behandlungsmedium oder dem darin vorliegenden, flüssigen Behandlungsmedium haben.

Die erfindungsgemäße Baugruppeneinheit dient zur Verwendung im Inneren einer Kammer zur Aufnahme der zu behandelnden Polymerelemente einer Vorrichtung zur Behandlung von Polymerelementen, die durch einen additiven Herstellungsprozess erhalten wurden, mittels eines Behandlungsmediums. Die Baugruppeneinheit weist auf: ein Gestell zum Anordnen im Inneren der Kammer, **z. B.** durch Aufstellen auf einem Boden oder zu seiner Fixierung am Boden oder an anderem Abschnitt der Kammer, wobei das Gestell aufweist oder verbunden ist mit ein(em) Magnetfeldabnehmer, einer Umwälzvorrichtung und optional einer Aufnahmevorrichtung für die zu bearbeiteten Polymerelemente.

Erfindungsgemäße Ausführungsformen können manche, einige oder alle der folgenden Merkmale in beliebiger Kombination aufweisen, soweit dies für den Fachmann nicht erkennbar technisch unmöglich ist.

Bei allen folgenden Ausführungen ist der Gebrauch des Ausdrucks "kann sein" bzw. "kann haben" usw. synonym zu "ist vorzugsweise" bzw. "hat vorzugsweise" usw. zu verstehen und soll erfindungsgemäße Ausführungsformen erläutern.

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann daher beispielsweise bei der Angabe "ein" oder "einem" stets "wenigstens ein" oder "wenigstens einem" mit. Dieses Verständnis ist ebenso von der vorliegenden Erfindung mit umfasst wie die Auslegung, dass ein Zahlenwort wie beispielsweise "ein" alternativ als "genau ein" gemeint sein kann, wo immer dies für den Fachmann erkennbar technisch möglich ist. Beides ist von der vorliegenden Erfindung umfasst und gilt für alle hierin verwendeten Zahlenworte.

Wann immer hierin von Raumangaben, wie **z. B.** von "oben", "unten", "links" oder "rechts", die Rede ist, versteht der Fachmann hierunter die Anordnung in den hier angehängten Figuren und/oder im Gebrauchszustand. "Unten" ist dem Erdmittelpunkt oder dem unteren Rand der Figur näher als "oben".

Vorteilhafte Weiterentwicklungen der vorliegenden Erfindung sind jeweils Gegenstand von Unteransprüchen und Ausführungsformen.

Wenn hierin von einer Ausführungsform die Rede ist, so stellt diese eine erfindungsgemäße, beispielhafte Ausführungsform dar.

Wenn hierin offenbart ist, dass der erfindungsgemäße Gegenstand ein oder mehrere Merkmale in einer bestimmten Ausführungsform aufweist, so ist hierin jeweils auch offenbart, dass der erfindungsgemäße Gegenstand genau dieses oder diese Merkmale in anderen, ebenfalls erfindungsgemäßen Ausführungsformen ausdrücklich nicht aufweist, **z. B.** im Sinne eines Disclaimers. Für jede hierin genannte Ausführungsform gilt somit, dass die gegenteilige Ausführungsform, beispielsweise als Negation formuliert, ebenfalls offenbart ist.

Wenn hierin Verfahrensschritte genannt sind, so ist die erfindungsgemäße Vorrichtung oder die erfindungsgemäße Steuervorrichtung in einigen Ausführungsform konfiguriert, um eine, mehrere oder alle dieser Verfahrensschritte, insbesondere wenn dies automatisch durchführbare Schritte sind, in beliebiger Kombination auszuführen oder entsprechende Vorrichtungen, welche sich vorzugsweise namentlich an die Bezeichnung des jeweiligen Verfahrensschritts anlehnen (z. B. "Ermitteln" als Verfahrensschritt und "Vorrichtung zum Ermitteln" für die Vorrichtung, usw.) und welche ebenfalls Teil der erfindungsgemäßen Vorrichtung(en) sein oder hiermit in Signalverbindung verbunden sein können, entsprechend anzusteuern.

Wenn hierin von programmiert oder konfiguriert die Rede ist, so können diese Begriffe in manchen Ausführungsformen gegeneinander austauschbar sein.

Wenn hierin von einer Signal- oder Kommunikationsverbindung zweier Komponenten die Rede ist, so kann hierunter eine im Gebrauch bestehende Verbindung zu verstehen sein. Ebenso kann hierunter zu verstehen sein, dass eine Vorbereitung zu einer solchen (kabelgebundenen, kabellosen oder auf andere Weise umgesetzten) Signalverbindung besteht, beispielsweise durch eine Kopplung beider Komponenten, etwa mittels *pairing,* usw.

Unter *pairing* versteht man einen Prozess, der im Zusammenhang mit Rechnernetzwerken erfolgt, um eine anfängliche Verknüpfung zwischen Rechnereinheiten zum Zwecke der Kommunikation herzustellen. Das bekannteste Beispiel hierfür ist das Herstellen einer Bluetooth-Verbindung, mittels welcher verschiedene Einrichtungen (z. B. Smartphone, Kopfhörer) miteinander verbunden werden. *Pairing* wird gelegentlich auch als *bonding* bezeichnet.

Die Steuervorrichtung kann die Ausführung aller oder im Wesentlichen aller Verfahrensschritte veranlassen. Das erfindungsgemäße Verfahren kann im Wesentlichen oder vollständig von der Steuervorrichtung ausgeführt werden. Es kann teilweise von der Steuervorrichtung ausgeführt werden, insbesondere können jene Schritte von der Steuervorrichtung ausgeführt werden, welche ein menschliches Zutun und/oder ein Bereitstellen nicht erfordern oder betreffen. Die Steuervorrichtung kann als reine Steuervorrichtung oder auch als Regelvorrichtung dienen.

Die Steuervorrichtung kann programmiert sein, um das erfindungsgemäße Verfahren in jeder hierin offenbarten Ausführungsform ausführen zu lassen oder zu veranlassen, etwa durch Steuerbefehle an die hierzu erforderlichen Komponenten und/oder Aktoren, insbesondere wie hierin offenbart. Die Steuervorrichtung kann hierzu in Signalkommunikation mit den erforderlichen Komponenten stehen oder hierzu vorbereitet sein.

Die Begriffe "Additive Manufacturing, additive Fertigung, additive Fertigungsverfahren", wie sie in der vorliegenden Anmeldung verwendet werden, umfassen verschiedene Verfahren, bei denen Polymermaterial, insbesondere Polymerpulver, computergesteuert zu dreidimensionalen Objekten verarbeitet wird, wie beispielsweise SLS, MJF, HSS, FFF, FDM, FGM, SLS, DLP und MJM.

Der Begriff "Element", wie er in der vorliegenden Anmeldung verwendet wird, bezieht sich auf ein Produkt, das durch additive Fertigung erhalten wurde. Alternativ findet der Ausdruck "Bauteil" die gleiche oder dieselbe Bedeutung.

Ein Element kann aus einem beliebigen verwendbaren Polymer hergestellt sein oder daraus bestehen.

In manchen Ausführungsformen umfasst der Begriff "Elemente" Polymerelemente und umgekehrt.

Der Begriff "Polymer", wie er in der vorliegenden Anmeldung verwendet wird, umfasst Polymere, die aus einer Art von Monomer oder aus zwei oder mehr Arten von Monomeren erhalten werden. Er umfasst Homopolymere, Copolymere, Blockpolymere und Mischungen verschiedener Polymertypen, insbesondere von hierin genannten.

Der Begriff "Behandlungsmedium", wie er in der vorliegenden Anmeldung verwendet wird, bezieht sich z. B. auf ein festes, gelartiges, flüssiges oder ein gasförmiges Medium oder Gemisch, beispielsweise umfassend organische Lösungsmittel oder Gemische daraus, zur Behandlung mindestens eines Polymerelements, wobei hier bevorzugt solche Aggregatzustände bei etwa 20°C zu verstehen sind.

Ein mehrwertiger Alkohol ist eine organische Verbindung, die mindestens zwei OH-Gruppen trägt und gegebenenfalls weitere Substituenten oder funktionelle Gruppen aufweisen kann, wie beispielsweise Glykol, Propylenglykol, Triethylenglykol oder Polyethylenglykol.

Der Begriff "Weichmacher", wie er in der vorliegenden Anmeldung verwendet wird, bezieht sich auf eine Verbindung, die die Plastizität eines Materials erhöhen kann, insbesondere die Flexibilität von Polymeren erhöhen kann, beispielsweise indem sie die Anziehung zwischen Polymerketten verringert.

Beispiele für Weichmacher sind aromatische Ester wie Phthalate, Benzoate, aliphatische Ester wie Citrate, Adipate, Sebacate, cycloaliphatische Ester wie Cyclohexandicarbonsäurealkylester, biobasierte Verbindungen wie Citrate, fette Öle und ätherische Öle wie Campher, aus Öl abgeleitete Verbindungen wie Sojaölderivate.

Der Begriff "Funktionalisierungsmittel", wie er in der vorliegenden Anmeldung verwendet wird, bezieht sich auf ein Mittel, das dem Element bzw. der Oberfläche des Elements eine Funktion hinzufügt oder einführt.

Die Funktion kann eine chemische, physikalische, ästhetische, haptische, schützende usw. Funktion sein.

Der Begriff "Kammer", wie er in der vorliegenden Anmeldung verwendet wird, kann auch als Behandlungskammer, als Prozesskammer oder Hauptkammer bezeichnet werden. In der Kammer werden die Polymerelemente behandelt. Eine Kammer kann zumindest teilweise aus einer Kammerwand gebildet sein. Eine Kammer kann aus einer seitlichen Wandung oder Kammerwand, Boden und Deckel gebildet sein. Anschlüsse, zu- oder wegführende Leitungen, Anbauten und/oder dergleichen zählen in solchen Ausführungsformen nicht zur Kammer oder bilden diese nicht, in anderen Ausführungsformen schon.

Die Kammer kann in manchen Ausführungsformen optional einen Innenbehälter, insbesondere zur Aufnahme der Polymerelemente, aufweisen.

Der Begriff "Wandung", wie er in der vorliegenden Anmeldung verwendet wird, kann die Kammerwand bezeichnen.

In einigen Ausführungsformen ist die Wandung aus wenigstens einem Material gefertigt, in anderen aus genau einem Material.

In einigen Ausführungsformen kann die Wandung, beispielsweise an ihrer Oberseite oder oberen Stirnseite, mit mindestens einer Fläche und/oder einer Vorrichtung zur Abdichtung und/oder mit einer Aufnahme für wenigstens ein Dichtelement, wie beispielsweise einen O-Ring oder einem elastischen U-Profil, versehen oder abgedichtet sein.

In manchen Ausführungsformen ist die Wandung optional mit wenigstens einer Oberflächenbeschichtung versehen.

Der Begriff "Boden", wie er in der vorliegenden Anmeldung verwendet wird, kann der Kammerboden sein. Er ist in einigen Ausführungsformen als der im Gebrauchszustand unten angeordnete bzw. der nach unten gerichtete Bereich der Kammer zu verstehen. In manchen Ausführungsformen kann der Boden auch in einer anderen Orientierung, wie beispielsweise horizontal, vertikal oder irgendwelche Winkel dazwischen, in Bezug zwischen seiner größten Flächengeometrie und der Erdoberfläche, ausgebildet sein. Der Boden kann also waagerecht, senkrecht oder in einem beliebigen Winkel dazwischen geneigt angeordnet sein, bezogen auf ein Lot zum Erdmittelpunkt. Die Ausrichtung des Bodens kann sodann auch die Orientierung der Wandung und/oder des Deckels bedingen, bevorzugt entsprechend der hierin offenbarten Ausführungsformen.

In manchen Ausführungsformen ist der Boden fest mit der Wandung verbunden, beispielsweise verschweißt, verklebt oder einstückig gefertigt. In anderen Ausführungsformen kann der Boden lösbar mit der Wandung in Verbindung stehen, beispielsweise durch Zentriervorrichtungen und/oder lösbare Fügeverbindungen wie Klemmvorrichtungen, Schrauben und/oder dergleichen.

In einigen Ausführungsformen sind die Wandung und/oder der Boden mit wenigstens einem Dichtelement zur relativen Abdichtung gegeneinander versehen, wie beispielsweise mit einem O-Ring oder einem (elastischen) U-Profil.

In manchen Ausführungsformen weist der Boden wenigstens ein oder genau ein Material auf oder ist hieraus gefertigt.

In einigen Ausführungsformen ist der Boden optional mit wenigstens einer Oberflächenbeschichtung versehen.

Der Begriff "Deckel", wie er in der vorliegenden Anmeldung verwendet wird, kann auch als "Kammerdeckel" bezeichnet werden. Er schließt den Innenraum der Kammer beispielsweise nach oben hin ab.

In manchen Ausführungsformen steht der Deckel in lösbarer Verbindung mit der Kammer bzw. deren Wandung. Er kann in bestimmten Ausführungsformen abgenommen oder angehoben werden, vorzugsweise ohne Einsatz eines Werkzeugs.

In einigen Ausführungsformen kann der Deckel mit Zentriervorrichtungen versehen sein. Sie können auf die Geometrie der Wandung, insbesondere im stirnseitigen Bereich der Kammer, abgestimmt sein.

In manchen Ausführungsformen kann der Deckel mit mindestens einer Vorrichtung versehen und/oder mit mindestens einer Geometrie ausgestattet sein, wie beispielsweise mit einer Nut, welche zur Aufnahme wenigstens eines Dichtelements, wie z. B. einem O-Ring, dient, oder in welche das optionale Dichtelement ganz oder abschnittsweise eingelegt ist.

In manchen Ausführungsformen kann der Deckel mit einer Nut, einer Tasche, einer Vertiefung oder einem Absatz versehen sein, wobei dieser im Bezug zur innenliegenden Planfläche des Deckels abgesetzte, zurückgesetzte oder abgefräste Bereich als Dichtfläche gegenüber einem Dichtelement dienen kann, wie beispielsweise für ein elastisches U-Profil z. B. aus Silikon gefertigt, welches sich planseitig und umlaufend auf die Wandung aufgesteckt befindet.

In einigen Ausführungsformen weist der Deckel wenigstens ein oder genau ein Material auf oder ist hieraus gefertigt.

In manchen Ausführungsformen ist der Deckel optional mit wenigstens einer Oberflächenbeschichtung versehen.

In manchen Ausführungsformen sind der Deckel oder die Decke der Kammer nicht-planar.

In einigen Ausführungsformen ist der Deckel mit einem drehbaren, kippbaren und/oder schiebbaren Maschinenelement ausgestattet, welches bevorzugt in mechanischer Verbindung mit der Kammerwand und/oder dem Gehäuse der Vorrichtung steht. Dieses Maschinenelement kann ein Scharnier und/oder eine Linear- oder Bogenführung zwischen Deckel und Kammerwand und/oder zwischen Deckel und Gehäuse der Vorrichtung sein.

Der Begriff "Innenwandung", wie er in der vorliegenden Anmeldung verwendet wird beschreibt den zum Inneren der Kammer gerichteten Bereich oder den zum Inneren der Kammer gerichteten Abschnitt der Wandung, des Bodens und/oder des Deckels.

In einigen Ausführungsformen ist die Innenwandung mit wenigstens einer Oberflächenbeschichtung versehen.

In einigen Ausführungsformen hat das, oder ein, Material von Wandung, Innenwandung, Boden und/oder Deckel eine Wärmeleitfähigkeit von mindestens 50 W/(m*K), bevorzugt von über 100W/(m*K), und besonders bevorzugt von über 150W/(m*K).

In manchen Ausführungsformen ist die Wandung, Innenwandung, der Boden und/oder Deckel größtenteils oder vollständig aus Aluminium oder einer Aluminiumlegierung gefertigt.

In einigen Ausführungsformen ist die Innenwandung glatt oder relativ glatt ausgeführt. Sie weist in diesen Ausführungsformen insbesondere keine oder nahezu keine Geometrien oder Vorrichtungen auf, welche die Oberfläche der Wandung zumindest lokal betrachtet wesentlich verändern oder erhöhen würden. Auf diese Weise ist insbesondere vorgesehen, einen möglichst gleichmäßigen Wärmeübergang und/oder Wärmeeintrag bevorzugt über die gesamte Innenwandung zu erwirken.

In manchen Ausführungsformen ist die Innenwandung zumindest in Teilbereichen in Bezug auf die Rauheit nicht glatt oder überwiegend nicht glatt ausgeführt, sondern weist zumindest Teilbereiche auf, die eine wiederkehrende Veränderung des Höhenprofils im Bereich von mindestens 0,1 mm, bevorzugt von mindestens 0,5 mm, wie mindestens 1 mm darstellen kann. Solche zumindest Teilbereiche mit einer über das standardmäßige Rauheitsprofil von Oberflächen hinaus gehenden Profilabweichung, oftmals als Welligkeit oder auch Gestaltabweichung zweiter Orientierung bezeichnet, kann beispielsweise in Form von Präge- Dreh- und/oder Fräsprofilen erzeugt werden oder bereits beim Urformen der Halbzeuge für die Vorrichtung zumindest in Ansätzen eingebracht sein. In einigen Ausführungsformen weisen zumindest Teilbereiche der Innenwandung wie beispielsweise nur der Boden und/oder der Deckel abgerundete und/oder scharfkantige Nuten oder Taschen auf, beispielsweise durch Fräsen oder Drehen verarbeitet, welche eine Tiefe von mindestens 0,3 mm, bevorzugt 0,5 mm und besonders bevorzugt mindestens 0,8 mm aufweisen, wie beispielsweise zwischen 1,5 und 5 mm. Der mittlere Abstand dieser bevorzugt spanend erzeugten Vertiefungen kann zwischen 0,5 mm und 50 mm, bevorzugt zwischen 1 mm und 10 mm liegen.

In einigen Ausführungsformen kann die Kammer oder deren Wandung, zumindest abschnittsweise, in Form eines Zylinders ausgeführt sein.

In manchen Ausführungsformen hat die Kammer einen Innendurchmesser, welcher bevorzugt weniger als 600 mm, besonders bevorzugt weniger als 500 mm, beispielsweise 250 mm bis 400 mm, aufweist.

In einigen Ausführungsformen hat die Kammer eine innere Höhe von weniger als 800 mm, besonders bevorzugt von weniger als 650 mm, wie beispielsweise 350 mm bis 600 mm.

In manchen Ausführungsformen ist die Kammer aus einem im Querschnitt kreisrunden oder nahezu kreisrunden Segment ausgeführt. Ein solches Segment oder ein solcher Teilbereich der Kammer hat bevorzugt die Form eines Rohrabschnitts und kann eine Wandungsstärke von 1 mm bis 20 mm aufweisen, bevorzugt von 2 mm bis 10 mm und besonders bevorzugt von 3 mm bis 6 mm.

In einigen Ausführungsformen ist der Boden und/oder der Deckel der Kammer vollständig oder zumindest abschnittsweise eben, planar oder als Fläche ausgestaltet, wobei eine zumindest geringfügige und/oder teilweise Gestaltabweichung der zweiten Orientierung hierbei nicht berücksichtigt wird, wie beispielsweise bis zu 7 mm oder bis zu 4 mm Höhendifferenz.

Ein solcher, zumindest überwiegend, ebener oder planarer Abschnitt kann in manchen Ausführungsformen zumindest abschnittsweise oder über den größeren Teil seiner Fläche eine Stärke von 2 mm bis 30 mm aufweisen, bevorzugt von 4 mm bis 20 mm und besonders bevorzugt von 6 mm bis 15 mm.

In manchen Ausführungsformen können der Boden und/oder der Deckel gewölbt sein beispielsweise in Form einer Kuppe, einer Kugel oder eines Kugelabschnitts, insbesondere in Form sogenannter Klöpperböden.

In einigen Ausführungsformen können der Boden und/oder der Deckel, beispielsweise im Zentrum, mindestens eine geringere Wandstärke oder Dicke als in einem radial äußeren Abschnitt des Bodens und/oder des Deckels aufweisen. Diese dünneren Abschnitte des Bodens sind vorgesehen und geeignet, für energetische Strahlung und/oder Magnetfelder besser durchgängig zu sein und/oder eine kürzere Wegstrecke zu einem oder mehreren geeigneten Abnehmer(n) der energetischen Strahlung und/oder der Magnetfelder auf der Gegenseite des Bodens zu bieten. Solche Teilbereiche mit reduzierter Wandstärke sollen vorzugsweise dick genug sein, um sich aufgrund der durch den Unterdruck auftretenden Kräfte so wenig wie möglich oder nötig zu deformieren.

Eine solche, dünnere oder geringere Wandstärke kann sich z. B. über einem flächigen Bereich von bis zu etwa 500 cm², bevorzugt zwischen 10 cm² und 300 cm^{2,} wie beispielsweise zwischen 30 cm² und 150 cm², erstrecken und ist bevorzugt in einer kreisrunden Form ausgeführt. Bevorzugt ist eine solche Verjüngung der Wandstärke als Kreistasche ausgeführt mit einem Durchmesser von 20 mm bis 250 mm, besonders bevorzugt mit einem Durchmesser von 50 mm bis 120 mm, wie 70 mm bis 100 mm und/oder bevorzugt mit einer Tiefe von 1 mm bis 25 mm, besonders bevorzugt von 2 mm bis 15 mm, wie 3 mm bis 10 mm oder 5 mm bis 8 mm. Die zumindest überwiegende Wandstärke oder die gemittelte Wandstärke im Bereich einer solchen Kreistasche kann damit bevorzugt ein Maß von 1 mm bis 15 mm, besonders bevorzugt von 2 mm bis 10 mm, wie 3 mm bis 6 mm, betragen.

Was hierin zur Kreistasche ausgeführt ist, kann für Taschen gelten, welche in Draufsicht nicht kreisförmig sind, wie beispielsweise eine Langloch- oder Rechtecktasche.

In manchen Ausführungsformen sind Verjüngungen der Wandstärke, beispielsweise durch Taschen und/oder Kreistaschen auf einer oder beiden der einander gegenüberliegenden Seiten oder Planseiten vorgesehen, bevorzugt in konzentrischer Anordnung.

In manchen Ausführungsformen ist eine Umwälzvorrichtung in der Kammer vorgesehen. Sie kann ein Propeller sein oder einen solchen umfassen.

In bestimmten Ausführungsformen weist die Umwälzvorrichtung ein umlaufendes Segment an ihrem radialen Ende und/oder eine umlaufende und/oder sie entlang ihres Umfangs umgebende Einhausung auf. In manchen Ausführungsformen ist die Umwälzvorrichtung ganz oder teilweise in einer schacht- oder zylinderförmigen Struktur angeordnet.

In einigen Ausführungsformen weist die Vorrichtung weiter einen Magnetantrieb zum Antreiben der Umwälzvorrichtung auf.

In manchen Ausführungsformen weist die Vorrichtung eine Steuervorrichtung zum Betreiben von Komponenten der Vorrichtung auf.

In einigen Ausführungsformen ist die Steuervorrichtung programmiert, um die Umwälzvorrichtung während einer laufenden Behandlung der Polymerelemente in der Kammer einmal oder mehrfach abwechselnd in gegenläufigen Drehrichtungen und/oder mit unterschiedlichen Drehgeschwindigkeiten rotieren zu lassen.

In manchen Ausführungsformen weist die Vorrichtung oder die Kammer eine Öffnung der Kammer oder ihrer Wandung oder ihres Bodens zu einem Äußeren der Kammer auf. Die Vorrichtung kann ein Ventil oder eine andere Verschlussvorrichtung aufweisen zum Öffnen und Verschließen der Öffnung gegenüber dem Äußeren. Die Öffnung kann zusätzlich zu dem Anschluss für die Vakuum- oder Unterdruckvorrichtung vorgesehen sein.

In einigen Ausführungsformen ist die Steuervorrichtung programmiert, um die Vakuum- oder Unterdruckvorrichtung, z. B. während einer laufenden Behandlung der Polymerelemente in der Kammer oder während diese nach Behandlung noch in der Kammer vorliegen, und der Deckel z. B. noch nicht wieder geöffnet wurde, zum Absaugen aus dem Inneren der Kammer oder zum Anstreben von Unterdruck in der Kammer anzusteuern und zeitgleich, oder zeitlich überlappend, hierzu das Ventil derart zu betätigen, dass über die Öffnung vom Äußeren her Gas oder Luft in die Kammer einströmen kann.

In manchen Ausführungsformen ist in der Kammer wenigstens eine Vorrichtung zur Änderung der Strömungsrichtung und/oder Strömungseigenschaften vorgesehen, insbesondere ausgestaltet als ein Leitblech.

Gemäß der Erfindung weist die Vorrichtung wenigstens einen Wärmereaktor auf, welcher wenigstens eine Heizvorrichtung (oder Heizzone) aufweist, welche in oder an einem Rohr des Wärmereaktors angeordnet ist. Der Wärmereaktor weist weiter eine Aufnahmevorrichtung für das Behandlungsmedium in flüssigem Zustand auf oder ist hiermit verbunden.

In einigen Ausführungsformen ist der Wärmereaktor angeordnet, um ganz oder im Wesentlichen außerhalb der Kammer vorgesehen zu sein, und/oder derart, dass sein Inneres über eine Öffnung der Kammer oder ihrer Wandung oder ihres Bodens mit dem Inneren der Kammer in Fluidverbindung steht oder gebracht werden kann.

In manchen Ausführungsformen weist die Vorrichtung weiter einen Kondensator auf. Dieser kann zwischen der Kammer und der Vakuum- oder Unterdruckvorrichtung angeordnet sein, z. B. in der Unterdruckleitung oder dem Anschluss für die Vakuum- oder Unterdruckvorrichtung.

In einigen Ausführungsformen weist die Vorrichtung weiter eine Mehrzahl von Heizvorrichtungen auf, die an Deckel, Boden und/oder Wandung vorgesehen sein können.

In manchen Ausführungsformen sind Deckel, Boden und/oder Wandung aus wärmeleitfähigem Material, welches **z. B.** eine Wärmeleitfähigkeit, Wärmeleitzahl oder Wärmeleitkoeffizient von wenigstens 75 W/(m*K) aufweist, insbesondere Aluminium, gefertigt oder weisen ein solches Material aufweisen.

In einigen Ausführungsformen weist die Vorrichtung weiter einen Magnetfeldabnehmer auf.

In manchen Ausführungsformen weist die Vorrichtung ein herausnehmbares Gestell auf, welches optional die Aufnahmevorrichtung, z. B. eine Auflage- Aufspann- und/oder Aufhängevorrichtung, zum Aufnehmen und/oder Lagern der Polymerelemente im Inneren der Kammer, aufweist.

In manchen Ausführungsformen weist das Gestell auf oder ist verbunden mit dem Magnetfeldabnehmer, der Umwälzvorrichtung und/oder der Aufnahmevorrichtung für die zu bearbeitenden Polymerelemente.

In einigen Ausführungsformen steht die Kammer oder die Vorrichtung nicht mit einer weiteren Kammer in Fluidverbindung, insbesondere nicht mit einer solchen, aus welcher das Behandlungsmedium der Kammer vorgewärmt zugeführt werden würde, oder wobei die Kammer zugleich das Reservoir für das Behandlungsmedium ist.

In manchen Ausführungsformen läuft das Verfahren in einer Kammer, nicht in mehreren Kammern, ab.

In einigen Ausführungsformen umfasst das Verfahren, dass die Polymerelemente im Erwärmungsschritt auf eine erste Temperatur erwärmt werden; dass das Behandlungsmedium verdampft wird, wobei der Dampf des Behandlungsmediums insbesondere auf eine zweite Temperatur erhitzt oder auf der zweiten Temperatur gehalten wird; wobei das auf die zweite Temperatur temperierte Behandlungsmedium/-dampf für eine bestimmte Zeitdauer auf die Polymerelemente einwirkt; wobei das Einwirkenlassen des Behandlungsmediums und/oder dessen Dampfs auf die Polymerelemente vorzugsweise bewirkt, dass eine Oberfläche der Polymerelemente zumindest teilweise mit dem Behandlungsmedium bedeckt bzw. von diesem benetzt wird, womit vorzugsweise eine Veränderung der Oberflächeneigenschaften einhergeht. Es kann weiter das Abführen zumindest eines Teils des Behandlungsmediums nach der bestimmten Zeitdauer umfassen, wobei die Polymerelemente vom Beginn des Temperierens der Polymerelemente bis zum Abschluss des Abführens des Behandlungsmediums in einer geschlossenen Umgebung positioniert sind.

In manchen Ausführungsformen wird zeitgleich, oder zeitlich überlappend, während des Abführens zumindest eines Teils des Behandlungsmediums Gas oder Luft in die Kammer eingeführt oder eingelassen.

In einigen Ausführungsformen ist die erste Temperatur höher als die zweite Temperatur.

In manchen Ausführungsformen weist die Baugruppeneinheit weiter eine Antriebswelle auf, angeordnet zum Übertragen von Rotationenergie oder -bewegung vom Magnetfeldabnehmer auf die Umwälzvorrichtung.

In einigen Ausführungsformen weist die Baugruppeneinheit weiter ein Lochblech als mechanischen Schutz für die Umwälzvorrichtung auf. Das Lochblech, alternativ Maschengeflecht, kann vorzugsweise oberhalb der Umwälzvorrichtung angeordnet sein.

In manchen Ausführungsformen weist die Baugruppeneinheit weiter ein umlaufendes Segment auf, z. B. am radialen Ende der Umwälzvorrichtung. Ergänzend oder alternativ weist sie eine umlaufende Einhausung für die Umwälzvorrichtung auf, welche die Umwälzvorrichtung oder deren Rotationsachse, ganz oder teilweise, z. B. in einer schacht- oder zylinderförmigen Struktur, in Umfangsrichtung umgibt.

In manchen Ausführungsformen weist die Vorrichtung die Steuervorrichtung auf.

In einigen Ausführungsformen liegt die Steuervorrichtung in oder an der Vorrichtung vor, etwa gemeinsam mit weiteren Komponenten der Vorrichtung in einem gemeinsamen Gehäuse der Vorrichtung.

In manchen Ausführungsformen der erfindungsgemäßen Vorrichtung weist der Boden wenigstens eine Sicke auf.

Die Sicke kann als Auswölbung nach unten, konkav, als, insbesondere umlaufender, Graben oder Vertiefung, oder ähnlich ausgestaltet sein. Es können auch mehrere Sicken als umlaufende Vertiefungen oder nicht umlaufend ausgeführte Sicken oder Vertiefungen, wie beispielsweise als Segmenttaschen gefräste Bereiche verwendet werden.

In einigen Ausführungsformen sind der Boden und/oder die Sicke zumindest abschnittsweise von oder aus einem ersten Material oder mit einer ersten Materialstärke gebildet oder werden durch ein solches oder eine solche begrenzt. Die seitliche Wandung oder ein Abschnitt hiervon ist hierbei aus einem zweiten Material oder mit einer zweiten Materialstärke, welches sich vom ersten Material bzw. von der ersten Materialstärke unterscheidet.

In bestimmten Ausführungsformen sind der Boden und/oder die Sicke und/oder die Kreistasche zumindest abschnittsweise aus einem Kunststoff oder einer Keramik gefertigt.

In manchen Ausführungsformen der Vorrichtung ist die optionale zweite Heizvorrichtung dem Boden oder der Sicke zugeordnet. Sie kann optional in diese(n) integriert sein.

In einigen Ausführungsformen ist die erste Heizvorrichtung der Öffnung oder dem Deckel zugeordnet und/oder in diesen integriert.

In manchen Ausführungsformen ist die erste Heizvorrichtung dem Boden zugeordnet und/oder in diesen integriert.

In manchen Ausführungsformen ist die erste Heizvorrichtung wenigstens eine Heizmatte, welche vollumfänglich um den Umfang der Kammer oder zumindest um Teile hiervon herum angeordnet ist und/oder eine Heizschnur, mit der die Kammer oder die Wandung zumindest teilweise umwickelt ist.

In manchen Ausführungsformen ist die zweite Heizvorrichtung, die dem Boden oder der Sicke zugeordnet sein kann, in mehrere Bereiche bzw. Segmente unterteilt. Auf diese Weise kann der Prozess des Erwärmens, insbesondere Verfahrensschritte a) und b), weiter begünstigt oder beschleunigt werden. In diesen Ausführungsformen kann je nach Bedarf nur ein Teil des Bodens auf eine höhere Temperatur aufgeheizt werden, was **z. B.** bei weniger Bauteilen bzw. geringerer Glättung vorteilhaft sein kann. Zusätzlich kann auf diese Weise der Prozess des Behandelns und/oder des Glättens bevorzugt innerhalb eines Behandlungszyklus zyklisch bzw. wiederholt ausgeführt werden.

In einigen Ausführungsformen können mittels entsprechendem Aufheizen mehrerer Heizvorrichtungen bzw.

Heizvorrichtungssegmente unterschiedliche Behandlungsmedien, beispielsweise mit oder ohne Füllstoffe, wie z. B. Weichmacher oder Funktionalisierungsmittel wie Nanopartikel zeitgleich, zeitlich nacheinander oder überlappend angesteuert bzw. erwärmt werden.

In manchen Ausführungsformen wird das Behandlungsmedium nicht, oder nicht nur, frei auf dem Boden oder in der Sicke innerhalb der Kammer bevorratet oder für das erfindungsgemäße Verfahren zur Behandlung von Polymerelementen dort vorbereitet, sondern in mindestens einer eigens dafür vorgesehenen Aufnahmevorrichtung, welche sich in der Kammer befinden kann, etwa während der Behandlung der Polymerelemente. Ein Aufbringen oder Einbringen des Behandlungsmediums auf oder in wenigstens eine solche Aufnahmevorrichtungen kann entweder innerhalb oder außerhalb der Kammer erfolgen. Die Aufnahmevorrichtungen können z. B. unmittelbar vor der erfindungsgemäßen Behandlung oder in zeitlicher Trennung mit dem Behandlungsmedium befüllt werden.

Der Begriff "Aufnahmevorrichtung für das Behandlungsmedium", wie er in der vorliegenden Anmeldung verwendet wird, kann optional als Behälter ausgestaltet, dargestellt und als solcher bezeichnet werden. Ein "Behälter" kann erfindungsgemäß eine "Patrone", "Dose" oder "Kapsel" sein.

In einigen Ausführungsformen ist wenigstens eine Aufnahmevorrichtung zum Aufnehmen und/oder Abgeben von Behandlungsmedium vorgesehen. Sie liegt in manchen Ausführungsformen innerhalb und/oder außerhalb der Kammer vor und kann das Behandlungsmedium enthalten. Sie kann z. B. ein Volumen zwischen 1 ml und 1000 ml, bevorzugt zwischen 5 ml und 500 ml, besonders bevorzugt zwischen 10 ml und 200 ml, ganz besonders bevorzugt zwischen 15 ml und 100 ml ausbilden, wie beispielsweise zwischen 20 ml und 50 ml und/oder zur Aufnahme von Behandlungsmedien zumindest annähernd in den genannten Volumen dienen.

In einigen Ausführungsformen kann die Aufnahmevorrichtung neben dem Behandlungsmedium Stoffe wie Gase, Pulver, Partikel, Farbstoffe, Nanokörper, Fasern, weitere Flüssigkeiten und/oder Pasten bevorraten und/oder aufnehmen.

In manchen Ausführungsformen kann die Aufnahmevorrichtung in speziellen Formen ausgeführt sein, insbesondere mit einer Ausbildung von Kavitäten, oder auch in jeder beliebigen anderen Form und Größe.

In einigen Ausführungsformen ist das Material der Aufnahmevorrichtung insbesondere ein Material, welches zur Speicherung von erfindungsgemäßen Behandlungsmedien, insbesondere flüssigen Behandlungsmedien, geeignet und vorgesehen ist.

In manchen Ausführungsformen besteht die Aufnahmevorrichtung aus einem oder mehreren Materialien. Bevorzugte Materialien sind Metalle wie Aluminium, Messing oder Kupfer, Kunststoffe wie PEEK, Keramiken wie Siliziumkarbid, Aluminiumoxid oder SSiC Keramik, Kohlenstoff, Glas, Bio-Materialien oder Material-Compounds, Verbundstoffe, usw., sowie Kombinationen hiervon.

In einigen Ausführungsformen können wenigstens zwei Aufnahmevorrichtungen, falls mehrere Aufnahmevorrichtungen für Behandlungsmedien vorgesehen sind, voneinander verschiedene Größen aufweisen.

In manchen Ausführungsformen können unterschiedliche der Aufnahmevorrichtungen mit unterschiedlichen Behandlungsmedien und/oder unterschiedlichen Mengen befüllt sein oder beaufschlagt werden.

In einigen Ausführungsformen kann die Aufnahmevorrichtung nur einmal verwendet werden, in anderen mehrfach wiederverwendet werden.

In manchen Ausführungsformen kann die Aufnahmevorrichtung die nötige Menge des Behandlungsmediums für einen erfindungsgemäßen Oberflächenbehandlungszyklus aufnehmen oder bevorraten, in anderen für mehrere dieser Zyklen.

In manchen Ausführungsformen hat die Aufnahmevorrichtung für das Behandlungsmedium zumindest ansatzweise die Form eines Bechers oder einer Dose, beispielsweise mit einer zylindrischen Grundform.

In einigen Ausführungsformen hat die Aufnahmevorrichtung für das Behandlungsmedium einen äußeren Durchmesser von 20 mm bis 150 mm, bevorzugt von 30 mm bis 100 mm, wie beispielsweise zwischen 50 mm und 70 mm.

In manchen Ausführungsformen hat die Aufnahmevorrichtung für das Behandlungsmedium einen inneren Durchmesser von 10 mm bis 80 mm, beispielsweise zwischen 20 mm bis 60 mm.

In einigen Ausführungsformen hat die Aufnahmevorrichtung für das Behandlungsmedium eine Höhe von 20 mm bis 120 mm, beispielsweise zwischen 40 mm und 80 mm.

In manchen Ausführungsformen weist die Aufnahmevorrichtung für das Behandlungsmedium mindestens einen Deckel auf. Der Deckel ist in bestimmten Ausführungsformen geeignet und vorgesehen, das Innenvolumen, das zum Aufnehmen des Behandlungsmediums dient, zu bedecken und/oder abzudichten.

In manchen Ausführungsformen ist der Deckel gegenüber der Aufnahmevorrichtung für das Behandlungsmedium drehbar, kippbar und/oder verschiebbar gelagert.

In einigen Ausführungsformen ist der Deckel oder die Decke oder die obere Begrenzung der Kammer ganz oder zumindest abschnittsweise konvex ausgestaltet, also nach außen oder zum Äußeren der Kammer gewölbt. Auf diese Weise kann Kondensat, sollte es sich im oberen Bereich der Kammer bilden, seitlich in Richtung Boden abfließen ohne auf die Polymerelemente zu tropfen, was zumeist nachteilig ist.

In manchen Ausführungsformen kann der zweite Deckel durch mindestens ein selbstöffnendes Druckventil ersetzt oder ergänzt sein. Der Druck bzw. der Druckbereich für selbst regulierende Druckventile, bei dem sie öffnen, also die Fluidverbindung zwischen der Aufnahmevorrichtung und der Kammer herstellen oder die Durchflussmenge erweitern, kann bevorzugt mechanisch eingestellt werden, beispielsweise durch Drehen und Verändern der Federkonstante einer Druckfeder, ausgeführt vom Hersteller und/oder vom Kunden.

In manchen Ausführungsformen kann mindestens einer der hierin genannten Deckel und/oder Ventile durch Anlegen einer Magnetkraft, zumeist von außerhalb der Kammer, geöffnet und/oder verschlossen werden. Vorzugsweise befindet sich die Aufnahmevorrichtung für das Behandlungsmedium dazu einerseits auf dem Boden und gleichzeitig im näheren Bereich der Wandung der Kammer.

Hierzu kann ein, z. B. von außen indiziertes und ausreichend starkes, Magnetfeld auf mindestens ein ferromagnetisches und am ersten und/oder zweiten Deckel befestigtes und/oder eingearbeitetes oder von diesem umfasstes Element erwirkt werden, um damit mindestens den ersten oder den zweiten Deckel oder einen anderen Verschluss zu öffnen und/oder zu verschließen.

In manchen Ausführungsformen sind hierzu mindestens ein ferromagnetisches Element vorgesehen, welches von einem vorhandenen Magneten angezogen wird und somit beispielsweise eine Kippbewegung an mindestens einem der Deckel veranlasst. Eine Magnetkraft kann durch einen oder mehrere Permanent- oder Elektromagneten erzeugt werden.

Erfindungsgemäß können ferner auf Magnetismus beruhende Ausgestaltungen umfasst sein, durch welche z. B. bei Anlegen eines Magnetfelds mittels einer hierzu vorgesehenen Vorrichtung der erste und/oder der zweite Deckel oder ein anderes Verschlusselement geschlossen oder geöffnet wird. Kombinationen, welche sowohl ein Schließen als auch ein Öffnen mittels Magnetismus ermöglichen, sind ebenfalls von der vorliegenden Erfindung umfasst.

In manchen Ausführungsformen kann mindestens einer der hierin genannten Deckel und/oder Ventile durch mechanische Durchführungen durch den Boden, den Deckel und/oder die Kammerwand hindurch manipuliert werden, beispielsweise durch Längs- und/oder Drehbewegungen einer (abgedichteten) Wellendurchführung und/oder durch Fluiddurchführungen, beispielsweise um im Inneren der Kammer auf einen Gas- oder Fluidzylinder einzuwirken, z. B. mittels Drucks.

In einigen Ausführungsformen kann mindestens einer der hierin genannten Deckel mittels einer Wärmeverformungs- und/oder Schmelzvorrichtung, bevorzugt zumindest in Teilen aus einem Polymer gebildet, geöffnet werden, wobei ein solches Maschinenelement bevorzugt aus einem Thermoplast als Einweg-Komponente gefertigt sein kann.

Eine Wärmeverformungsvorrichtung kann so ausgeführt sein, dass sie in Form entsprechender Maschinenelemente den Deckel bis zum Überschreiten einer bestimmten Temperatur zumindest ansatzweise fluiddicht verschlossen hält, und erst beim Überschreiten einer Temperatur durch Spannungsverlust wie beispielsweise durch oder nach Verbiegung, bevorzugt im Zusammenspiel mit dem steigenden Druck auf den Deckel durch Druckanstieg innerhalb der Kapsel, öffnet.

Eine Schmelzvorrichtung kann in ähnlicher Weise verwendet werden, mit dem Unterschied, dass es in erster Linie keiner Verformung bedarf zum Öffnen, sondern dass das komplette thermische Aufschmelzen und/oder das thermische Durchtrennen beispielsweise einer Schnur oder eines Filaments ein temperaturgesteuertes Öffnen des Deckels herbeigeführt werden kann. Beispiele für solche Polymere sind Polyamid, Polypropylen oder Hochleistungspolymere wie PEI oder PPS. Beispielsweise können sich solche Deckel relativ reproduzierbar bei etwa 110°C, 135°C, 160°C, 171°C, 183°C, 207°C oder 230°C öffnen.

In manchen Ausführungsformen ist die Aufnahmevorrichtung für das Behandlungsmedium beispielsweise aus einem Metall oder einem anderen wärmeleitenden Material wie z. B. Aluminiumoxid ausgeführt.

In einigen Ausführungsformen ist die Aufnahmevorrichtung für das Behandlungsmedium oder zumindest Teile davon aus einem Material ausgeführt, welches für einen Wärmeeintrag durch Induktion und/oder Mikrowellen geeignet ist, wie beispielsweise aus einem Metall wie Stahl oder, Edelstahl oder einer Keramik wie Siliziumkarbid oder einem Graphit, oder sie weist zumindest ein solches Material auf, beispielsweise auch in granularer Form.

In manchen Ausführungsformen wird die Aufnahmevorrichtung oder ihr Innenraum mittels einer - z. B. der zweiten - Heizvorrichtung, beispielsweise in Form eines Widerstandsheizers, erwärmt, welche bevorzugt als mindestens eine Heizpatrone, beispielsweise im Zentrum oder im Innenraum der Aufnahmevorrichtung, ausgestaltet sein kann. In einer solchen Ausführungsform weist die Aufnahmevorrichtung für das Behandlungsmedium oder eine von dieser umfasste Kapsel optional, bevorzugt im Zentrum, einen zusätzlichen Zapfen, Vorsprung oder anderes Element aus wärmeleitendem Material, etwa Aluminium, auf, um die eingebrachte Wärme der Heizpatrone optimal auf die Fläche des Behälters oder der Kammer verteilen zu können. In einer solchen Ausführungsform ist der Kammerboden bevorzugt mit einem Durchbruch versehen, um auf diese Weise die elektrische Energie für die Heizpatrone einbringen zu können. Ein solcher Durchbruch kann auf eine bevorzugte Weise mittels eines Dichtelements, beispielsweise einem O-Ring, gegenüber dem Behälter oder Teilen des Behälters abgedichtet sein.

In einigen Ausführungsformen weist die Aufnahmevorrichtung eine weitere Vorrichtung auf, beispielsweise ausgestaltet als weitere Aufnahmevorrichtung oder Behälter, welche optional ihrerseits wenigstens eine (etwas) größere Abmessung aufweist. In diesen Ausführungsformen ist die weitere Vorrichtung beispielsweise aus einem weniger gut wärmeleitenden Material ausgeführt als die Aufnahmevorrichtung für das Behandlungsmedium und bildet somit eine thermische Isolierhülle um die Aufnahmevorrichtung herum.

In manchen Ausführungsformen kann die Aufnahmevorrichtung für das Behandlungsmedium und/oder die weitere Vorrichtung mit mindestens einer Beschichtung versehen sein, vorzugsweise auf ihrer Innenseite und/oder auf ihrer Außenseite.

In einigen Ausführungsformen kann die Energie, die die Vorrichtung zum Erwärmen und/oder Bewegen und/oder Manipulieren des Behandlungsmediums und/oder eines Funktionalisierungsmittels benötigt, mittels Induktion und/oder Mikrowellen und/oder Schall und/oder Ultraschall und/oder einer anderen, insbesondere kontaktlosen, Energieform eingebracht werden. Hierbei kann sich eine solche Energiequelle bzw. Teile davon außerhalb der Kammer befinden. Die (bevorzugt kontaktlos, also **z. B.** nicht per Wärmeleitung) eingeleitete oder eingebrachte Energie kann entweder durch das Behandlungsmedium oder die Behandlungsmedien selbst absorbiert werden und/oder durch mindestens eine spezielle Vorrichtung oder Aufnahmevorrichtung Energie aufnehmen, welche gleichzeitig zur Aufnahme und/oder Bevorratung von Behandlungsmedien dienen kann. Eine solche Vorrichtung zur Energieaufnahme kann beispielsweise ein Behältnis bevorzugt aus Metall und/oder aus ferromagnetischem Material sein, um durch die Einbringung von Induktionsenergie daraus resultierende Wärmeenergie an das Behandlungsmedium zumindest teilweise abzugeben oder zu übertragen.

In einigen Ausführungsformen ist die wenigstens eine Heizvorrichtung zum Erwärmen des Behandlungsmediums in Form einer Widerstandsheizung ausgeführt. Dabei kann die Durchführung zur Einleitung von Energie in die Kammer in Form von bevorzugt elektrischen Kontaktflächen oder Kontaktbereichen ausgestaltet sein, welche ausgeführt sind, um Heizvorrichtungen, insbesondere Widerstandsheizelemente innerhalb der Kammer mit Energie, bevorzugt mit elektrischer Energie zu versorgen.

In manchen Ausführungsformen ist das erste Material, aus oder mit welchem der Boden und/oder die Sicke gebildet oder begrenzt sind, Edelstahl oder weist Edelstahl auf.

In einigen Ausführungsformen ist das zweite Material, aus oder mit welchem die seitliche Wandung und/oder Abschnitte hiervon gebildet oder begrenzt sind, Aluminium oder weist Aluminium auf.

In manchen Ausführungsformen der Vorrichtung weist das zweite Material eine höhere Wärmeleitfähigkeit auf als das erste Material.

In einigen Ausführungsformen ist die Kammer, oder ihre Wandung, zumindest größtenteils, aus einem einzigen Material gefertigt, bevorzugt aus Aluminium oder Edelstahl.

In einigen Ausführungsformen ist die Kammer konisch ausgeführt, bevorzugt rechteckig oder zylindrisch konisch.

In einigen Ausführungsformen besteht die erfindungsgemäße Vorrichtung aus mehreren Kammern, welche relativ zeitgleich oder in zyklischer Abfolge betrieben werden können. In diesen Ausführungsformen kann ein Behandlungsmedium in flüssiger oder gasförmiger Form von einer Kammer in die nächste abgeleitet werden.

In einigen Ausführungsformen beträgt das Innenvolumen der Kammer der Vorrichtung weniger als 100 l, bevorzugt weniger als 60 l, besonders bevorzugt weniger als 40 l.

In manchen Ausführungsformen umfasst die Vorrichtung weiter mindestens eine Umwälzvorrichtung, beispielsweise einen Propeller oder Rotor, um innerhalb der Kammer vorhandene(s) Luft, Gas, Behandlungsmedium, dessen Dampf und/oder Funktionalisierungsmittel anzutreiben und/oder umzuwälzen und/oder zu verwirbeln.

In einigen Ausführungsformen kann dafür ein Magnetantrieb beispielsweise mittels Permanentmagneten und/oder mittels Elektromagnetismus verwendet werden, um beispielsweise die Drehbewegung eines Motors auf mindestens eine Umwälzvorrichtung zu übertragen. Alternativ kann eine Umwälzvorrichtung mittels einer mechanischen Durchführung, beispielsweise anhand einer durchgeführten Welle, betrieben werden, welche bevorzugt in oder am Boden mit elastischen Dichtelementen abgedichtet sein kann.

Wenn hierin von einer "Umwälzvorrichtung" die Rede ist, so können unter diesen Begriff Propeller, Lüfter, Verwirbelungsvorrichtungen und dergleichen verschiedenster Bauart, insbesondere wie hierin beschrieben, fallen.

In einigen Ausführungsformen kann ein Motor bzw. Antrieb als Schrittmotor, als Servomotor oder als Brushlessmotor ausgeführt sein.

In manchen Ausführungsformen wird die Umwälzvorrichtung bzw. der Propeller zeitweise mit einer Drehzahl zwischen 50 U/min und 6000 U/min betrieben, bevorzugt zwischen 500 U/min und 3000 U/min, besonders bevorzugt zwischen 800 U/min und 2000 U/min, wie beispielsweise zwischen 1000 U/min und 1750 U/min. Die Steuervorrichtung kann entsprechend programmiert sein, was auch für jeden anderen hierin offenbarten Verfahrensschritt gilt.

In einigen Ausführungsformen wird die Drehzahl während des Verfahrens verändert oder variiert. Die Drehrichtung kann in einigen Ausführungsformen in einer ersten Richtung Vorteile aufweisen, während in anderen Ausführungsformen die umgedrehte Drehrichtung bei der Wahl der gleichen Umwälzvorrichtung Vorteile im Verfahren bewirken kann.

In manchen Ausführungsformen wird die Drehrichtung der Umwälzvorrichtung während des Prozesses umgedreht, in einigen Ausführungsformen auch mehrmals hintereinander, wobei die Zeitspannen zwischen Zeiten, in welchen die Umwälzvorrichtung mit der einen Drehrichtung, und Zeiten, in welchen die Umwälzvorrichtung mit der anderen Drehrichtung gedreht wird, gleich oder unterschiedlich gewählt sein können.

Alternativ oder zusätzlich kann in einigen Ausführungsformen die Drehzahl während des Prozesses verändert werden, beispielsweise kontinuierlich oder alternierend.

In bestimmten Ausführungsformen kann die mindestens eine der vorhandenen Umwälzvorrichtungen zumindest zeitweise mit Drehzahlen zwischen 5000 U/min und 50000 U/min betrieben werden.

In einigen Ausführungsformen entspricht die Richtung des Ringstroms oder der erzeugten Bewegung des gasförmigen oder dampfförmigen Behandlungsmediums der Drehrichtung der Umwälzvorrichtung. Mit anderen Worten kann die Umwälzvorrichtung im Bereich der Wandung im Inneren der Kammer eine Bewegung der Luft- Dampf- und/oder Gasmoleküle erzeugen, die in manchen Ausführungsformen wendelförmig ausgeführt ist, bevorzugt schnell ansteigend, also mit einer hohen Steigung, und dabei die gleiche Drehrichtung aufweist, wie die Umwälzvorrichtung, und zwar bevorzugt unabhängig von der axialen Strömungsrichtung der Umwälzvorrichtung, also unabhängig davon, ob die Umwälzvorrichtung die Moleküle nach oben oder nach unten beschleunigt.

In einigen Ausführungsformen ist die Drehrichtung der mindestens einen Umwälzvorrichtung so gewählt, dass die Luft-Dampf- und/oder Gasmoleküle zumindest im unmittelbaren Bereich von dieser nach unten befördert werden. Die Umwälzvorrichtung fördert in diesen Ausführungsformen somit zu einem oberen Bereich der Kammer (z. B. zum Deckel hin), oder zeitweise zu einem oberen Bereich der Kammer. In anderen Ausführungsformen fördert die Umwälzvorrichtung in der entgegengesetzten Richtung, also auf einen unteren Bereich der Kammer (z. B. zum Boden hin).

In manchen Ausführungsformen ist die erforderliche Geschwindigkeit und/oder die Drehrichtung der Umwälzvorrichtung abhängig vom vorherrschenden Druck innerhalb der Kammer und wird bei Bedarf mittels der Steuervorrichtung angepasst und/oder geregelt, beispielsweise während des Einströmens von Behandlungsmedium oder dessen Dampfs und/oder dessen Nebels in die Kammer und einem damit einhergehenden Druckanstieg. Die Steuervorrichtung kann entsprechend programmiert sein, um die Rotationsgeschwindigkeit und die Drehrichtung der Umwälzvorrichtung in Abhängigkeit vom z. B. aktuell in der Kammer vorherrschenden oder sich ändernden Druck und/oder der aktuell vorherrschenden oder sich ändernden Temperatur festzulegen und/oder zu verändern.

In einigen Ausführungsformen werden während der Behandlung und/oder während des Glättens und/oder während des Funktionalisierens die Drehzahl und/oder die Drehrichtung der Umwälzvorrichtung verändert, bevorzugt mehrfach verändert, besonders bevorzugt innerhalb vorbestimmter Zeitspannen und/oder alternierend und/oder auf Basis von Kennwerten, wie beispielsweise Oberflächen-Messdaten von Bauteilen oder Testbauteilen innerhalb der Kammer, in anderen Ausführungsformen ist dies nicht der Fall.

In einigen Ausführungsformen dreht sich die Umwälzvorrichtung zumindest zu Beginn der Behandlung in eine erste Drehrichtung, beispielsweise von der gegenüberliegenden Seite des Motors betrachtet entgegen dem Uhrzeigersinn, oder alternativ genau anders herum. Auf diese Weise können in manchen Ausführungsformen die Luft-, Gas- und/oder Dampfmoleküle entweder von unten, oder von oben angesaugt werden, je nachdem, wie die Geometrie (beispielsweise Form und/oder die Schrägstellung und/oder der Winkel) der Flügel der mindestens einen Umwälzvorrichtung beschaffen ist.

In einigen Ausführungsformen ändert sich die Drehrichtung und/oder die Drehzahl der Umwälzvorrichtung Bezug nehmend auf die Änderung der hierin offenbarten Verfahrensschritte a), b), c), und/oder d), oder steht zumindest in Abhängigkeit mit diesen, wobei solche Änderungen zumindest annähernd zeitgleich mit dem Wechsel von einem Verfahrensschritt zum nächsten geschehen können, oder sie optional mit einem gewissen Zeitversatz im Vorlauf und/oder Nachgang tun und/oder sie es während mindestens eines der Verfahrensschritte einmalig oder mehrfach erfolgen, z. B. bewirkt durch die Steuervorrichtung.

In einigen Ausführungsformen sind innerhalb der Kammer Vorrichtungen zur Änderung der Strömungsrichtung und/oder der Strömungseigenschaften vorgesehen, womit die Luft-, Dampf-, Gas- und/oder Partikelströmungen, beispielsweise mindestens eines Behandlungsmediums und/oder eines Funktionalisierungsmittels, gezielt und/oder in messbarer Weise beeinflusst oder verändert werden können, vorzugsweise in vorbestimmten Kombinationen mit der Wirkung der mindestens einen Umwälzvorrichtung auf die Strömung und/oder der Gestalt und Größe der Innenwandung und/oder des vorherrschenden Drucks und/oder der vorherrschenden Temperatur in der Kammer.

Solche Vorrichtungen, die z. B. den hierin offenbarten Luft- und/oder Gasleitplatten entsprechen können, können aus Maschinenelementen gebildet sein. Sie können zur Veränderung und/oder Ablenkung von Luft- und/oder Gasstrom und/oder von Partikelströmungen oder Nanopartikelströmungen geeignet sein, wie beispielsweise anhand bionischer Oberflächen (Haifischhaut) der Innenwandung, Vorsprünge der Innenwandung, Zapfen, Folien, Röhren, Leitbleche, Prallbleche, Lochbleche und/oder Platten, wobei diese bevorzugt zumindest überwiegend quer zur Strömungsrichtung oder zur Hauptströmungsrichtung angeordnet sind.

In bestimmten Ausführungsformen können solche Vorrichtungen zumindest teilweise aus Lochblech gebildet sein. Dies kann von Vorteil sein, da in Abhängigkeit der Lochweite und/oder der Material- oder Stegbreite derart verwendet werden können, um dynamische Änderungen der Strömungseigenschaften und/oder Strömungsrichtungen bevorzugt in Abhängigkeit von vorherrschendem Druck und/oder Dampfdruck und/oder der Drehzahl und/oder der Strömungsgeschwindigkeit und/oder dem Volumenstrom der Umwälzvorrichtung durch eine Steuerung zu generieren. Vorzugweise sind solche Vorrichtungen nahe der Innenwandung, wie beispielsweise im näheren Bereich der Wandung, des Deckels und/oder des Bodens angebracht oder eingebracht, wobei solche Vorrichtungen in erster Linie dazu ausgeführt sein können, zumindest überwiegend oder teilweise laminare Strömungen in turbulente und/oder zumindest überwiegend oder teilweise turbulente Strömungen zu überführen.

In manchen Ausführungsformen können solche Vorrichtungen im Zentrum der Kammer oder deren Querschnitt angeordnet sein oder sich durch diesen erstrecken, beispielsweise zwischen, über und/oder unter den Polymerelementen.

In einigen Ausführungsformen liegen manche der Vorrichtungen zur Änderung der Strömung ganz oder überwiegend oder zumindest stellenweise an der Innenwandung an, in anderen Ausführungsformen bilden sie zumindest in großen Teilen einen Abstand zwischen 4 mm und 40 mm zur Innenwandung, bevorzugt zwischen 6 mm und 30 mm, besonders bevorzugt zwischen 8 mm und 25 mm, wie beispielsweise zwischen 10 mm und 20 mm.

Sind beispielsweise Leitbleche oder andere solche Vorrichtungen ca. 15 mm von der Innenwandung der Kammer entfernt angeordnet, dann strömt bei langsamerer Drehzahl und/oder weniger Gas in der Kammer (weniger Druck) der Strom an der Wandung entlang zwischen Wandung und den Leitblechen wird laminar und wendelförmig nach oben geführt. Wird die Strömungsgeschwindigkeit stärker erhöht, dann prallt schließlich der (breitere) Gasstrom an das Leitblech oder Prallblech und geht in eine turbulente Strömung über, wobei auch der Rest des Gasstroms näher an der Wandung relevant beeinflusst werden kann.

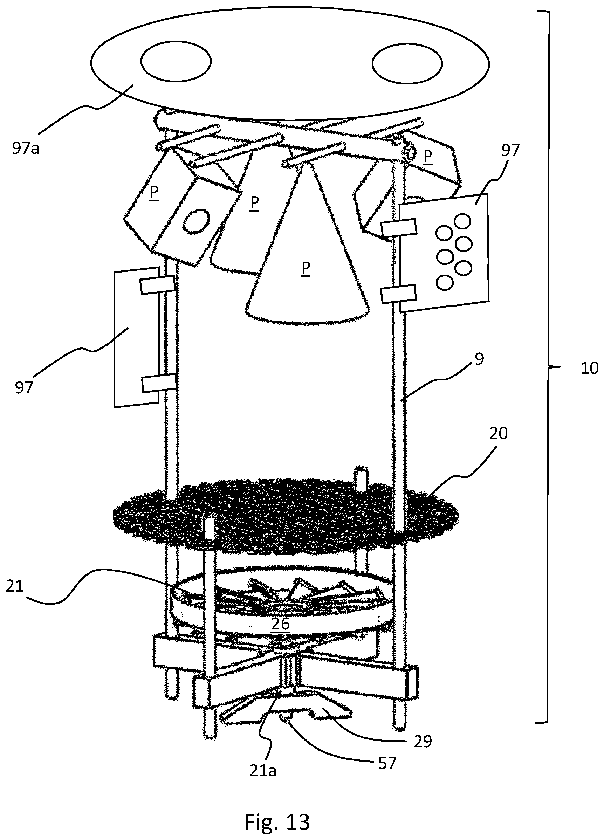

In manchen Ausführungsformen ist mindestens eine solche Vorrichtung an einer herausnehmbaren, erfindungsgemäßen Baugruppeneinheit, beispielsweise wie zur Fig. 13 beschrieben, befestigt.

In einigen Ausführungsformen kann eine erfindungsgemäße Baugruppeneinheit mit mindestens einem zumindest größtenteils flächig ausgebildeten Maschinenelement als Leitdeckel ausgestattet sein, beispielsweise einem blechartigen und/oder blechförmigen Maschinenelement. Dieses kann sich oberhalb der vorgesehenen Aufnahmeposition für die Polymerelemente P erstrecken, bevorzugt diese zumindest größtenteils überdecken.

Es kann ausgestaltet sein, eine geringere Menge an Luft-, Gas, Nebel,- und/oder Partikelströmung vom unmittelbaren Bereich des Deckels direkt in Richtung der Polymerelemente strömen zu lassen. Ein solches Maschinenelement als Leitdeckel, welcher beispielsweise in Richtung Deckel konvex gewölbt sein kann, kann bevorzugt in Abhängigkeit der Strömungsgeschwindigkeit Molekül- und/oder Partikelbewegungen oberhalb und unterhalb dieses Maschinenelements trennen und/oder strömen lassen. Ein solches Maschinenelement kann als eine zumindest teilweise agierende Trennbarriere zwischen Deckel und Polymerelementen dienen und bei einigen Polymermaterialien und/oder Geometrien der Polymerelemente wie beispielsweise große Oberflächen und/oder Polymerelemente mit stark ausgeprägten Kavitäten oder innenliegenden Konturen für Vorteile bei der Behandlung sorgen. So kann beispielsweise zumindest überwiegend von oben strömende oder wirkende Menge an Behandlungsmediumdampf und/oder -nebel reduziert werden und dementsprechend kann zumindest verhältnismäßig mehr Behandlungsmediumdampf und/oder -nebel verstärkt von unten und/oder von den Seiten her wirken.

In manchen Ausführungsformen verläuft die Orientierung der Oberflächen solcher Maschinenelemente zumindest teilweise und/oder ansatzweise parallel oder in im Wesentlichen gleichbleibendem Abstand zum Deckel und/oder zum Boden der Kammer.

In einigen Ausführungsformen kann ein solches Maschinenelement Aussparungen wie beispielsweise Kreistaschen aufweisen, die dazu ausgebildet sein können, Molekül- und/oder Partikelströmungen weiter zu optimieren und beispielsweise ein Strömen durch diese hindurch in Abhängigkeit der Strömungsgeschwindigkeiten in unterschiedlichen Mengen und/oder Orientierungen zu ermöglichen. Optional kann ein solches Maschinenelement alternativ oder zusätzlich an der Innenwandung, bevorzugt an der Innenseite des Deckels, angeordnet und/oder befestigt sein.

In einigen Ausführungsformen betragen die Abstände solcher Maschinenelemente zur Innenwandung, bevorzugt zum Deckel, zumindest des überwiegenden Bereichs oder der überwiegenden Fläche etwa zwischen 5 mm und 120 mm, bevorzugt zwischen 8 mm und 80 mm und besonders bevorzugt zwischen 10 mm und 60 mm, wie beispielsweise zwischen 12 mm und 40 mm oder zwischen 20 mm und 60 mm. Die zum oder auf den Boden projizierte Fläche, die ein solches Maschinenelement über den Polymerelementen aufspannen kann, liegt bevorzugt über 75 cm² und besonders bevorzugt über 150 cm², wie beispielsweise zwischen 250 cm² und 600 cm², wobei die Flächen bei mehreren solcher Maschinenelemente addiert werden.

Jede Vorrichtung, die dazu ausgestaltet ist, die Luft-, Dampf- und/oder Gasströmungen und/oder die Strömungen von Funktionalisierungsmitteln innerhalb der Kammer vorrangig im Bereich der Innenwandung und/oder der Polymerelemente gezielt zu verändern und/oder in prozessrelevanten Verhältnissen zu ändern, ist in manchen Ausführungsformen als eine solche Vorrichtung zur Änderung der Strömungsrichtung und/oder der Strömungseigenschaften zu betrachten. In anderen Ausführungsformen sind dies nur solche Vorrichtungen, welche gezielt und/oder ausschließlich zur Veränderung der Strömung wie beschrieben vorgesehen sind.

Prozessrelevante Veränderungen der Luft- und/oder Gasströmungen, ausgelöst durch erfindungsgemäße Vorrichtungen, lassen sich beispielsweise beurteilen, indem man zwei identische Polymerelemente oder bevorzugt zwei identische Polymerelementgruppen in der gleichen räumlichen Anordnung innerhalb der Kammer mit exakt den gleichen Behandlungsmedien, Parametern und Einstellungen behandelt und/oder glättet, einmal in einer Kammer mit und einmal in einer Kammer ohne Vorrichtungen zur Änderung der Strömung und/oder der Strömungseigenschaften. Im Anschluss können diese Polymerelemente und/oder Polymerelementgruppen detailliert miteinander verglichen werden. Zeigen sich beispielsweise an innenliegenden Konturen oder Oberflächen unterschiedliche Behandlungsergebnisse zweier identisch behandelter Elemente und/oder unterschiedliche Rauheitswerte, so lässt sich das auf die veränderten Strömungseigenschaften, bewirkt durch die Vorrichtungen zur Veränderung der Strömungseigenschaften, zurückführen.

In bevorzugten Ausführungsformen geht mit Vorrichtungen zur Veränderung der Strömungseigenschaften innerhalb der Kammer eine Verbesserung der Behandlung und/oder der Glättung mit niedrigeren Ra-Werten einher, also beispielsweise mit dem Effekt besser und gleichmäßiger geglätteter Oberflächen der Polymerelemente, beispielsweise an innenliegenden Konturen um einen niedrigeren Ra-Wert von 1, bevorzugt von 2, und besonders bevorzugt von 3.

In manchen Ausführungsformen haben Vorrichtungen zur Veränderung der Strömungseigenschaften, bevorzugt zur lokalen Überführung einer zumindest überwiegend laminaren Strömung in eine zumindest überwiegend turbulente Strömung prozessrelevante Oberflächen von insgesamt mehr als 10 cm², bevorzugt mehr als 25 cm², besonders bevorzugt mehr als 50 cm², wie beispielsweise mehr als 100 cm². Dabei sollen die Oberflächenangaben hierbei vorzugsweise als projizierte Flächen des gerichteten Molekülstroms betrachtet werden, also dass beispielsweise bei schräg zur Strömungsrichtung angestellten Blechen die tatsächliche, geometrische Fläche der Bleche größer ist. Der Begriff der prozessrelevanten Oberflächen bedeutet, dass nur die Oberflächen in dem Moment betrachtet werden sollen, die dem Molekularstrom entgegenwirken und beispielsweise nicht deren Rückseiten, und wobei die Flächen mehrerer Maschinenelemente zur Veränderung der Strömung vorzugsweise addiert werden.

In manchen Ausführungsformen haben solche Vorrichtungen ein Verhältnis der prozessrelevanten Oberflächen zum Kammervolumen von mindestens 0,2 cm² Liter, bevorzugt von mindestens 0,5 cm² Liter, und besonders bevorzugt von mindestens 1 cm² Liter, wie beispielsweise zwischen 1 cm^{2/}Liter und 10 cm² Liter, wobei die projizierten Flächen bevorzugt eine Breite von mindestens 5 mm, besonders bevorzugt von mindestens 10 mm aufweisen, um dem Molekülstrom und/oder Partikelstrom einen prozessrelevanten Strömungswiderstand zur Strömungsänderung bieten zu können.

In einigen Ausführungsformen ist die Umwälzvorrichtung so ausgebildet, dass sie eine aufsteigende Strömungsrichtung vom Boden zum Deckel, bevorzugt im näheren Bereich der Wandung der Kammer, ausführen oder erwirken kann, bevorzugt in Gestalt einer zumindest überwiegend laminaren Strömung. In manchen Ausführungsformen kann eine aufsteigende Strömung von Luft und/oder Gas und/oder Behandlungsmedium oder dessen Dampf)und/oder Funktionalisierungsmittel(n) gleichzeitig in eine radiale oder kreisförmige Bewegungsrichtung transportiert werden, also innerhalb einer bevorzugt zylindrischen Wandung spiral- oder wendelförmig nach oben strömen, z. B. auch unter Einsatz der optionalen Vorrichtungen zur Veränderung der Strömungseigenschaften. Aufgrund z. B. einer spiral- oder wendelförmigen Strömung erfährt das mindestens eine Medium innerhalb der Kammer auf dem Weg von unten nach oben eine längere Kontaktzeit an oder im näheren Bereich der Innenwandung und kann auf seinem Weg so mehr Wärmeenergie übertragen bekommen.

Die, oder eine, Strömungsgeschwindigkeit im Bereich der Innenwandung, etwa auf halber Höhe der Kammer gemessen, sollte in manchen Ausführungsformen mindestens 0,3 m/s betragen, bevorzugt mindestens 0,5 m/s, besonders bevorzugt mindestens 0,8 m/s, wie beispielsweise mindestens 1 m/s.

Die, oder eine, Strömungsgeschwindigkeit im Abstand von ca. 3 cm zur Umwälzvorrichtung gemessen, sollte in einigen Ausführungsformen mindestens 0,5 m/s betragen, bevorzugt mindestens 1 m/s, besonders bevorzugt mindestens 1,5 m/s, wie beispielsweise mindestens 2 m/s.

Die Umwälzvorrichtung kann so ausgebildet sein, dass sie zumindest teilweise und/oder stellenweise turbulente Strömungen, bevorzugt im näheren und/oder unmittelbaren Bereich der Elemente, ausführen oder erwirken kann. Solch turbulente Strömungen können durch verschiedene Maßnahmen erzielt werden, wie beispielsweise besondere Oberflächenstrukturen der Innenwandung, die Anbringung von Leitblechen bevorzugt im oberen Bereich der Kammer, die Veränderung des Drucks in der Kammer und/oder durch Veränderungen der Umwälzgeschwindigkeiten beispielsweise durch Veränderungen der Drehzahlen mindestens einer Umwälzvorrichtung und/oder eine oder mehrere Umkehrungen der Drehrichtung mindestens einer solchen.

Alternativ oder ergänzend können in manchen Ausführungsformen durch die gezielte Einleitung des Behandlungsmediums an vorbestimmten Positionen und/oder in vorbestimmten Mengen pro Zeiteinheit und/oder durch das Vorhandensein von speziellen Leitvorrichtungen für das strömende Behandlungsmedium wie beispielswiese Leitbleche an der Kammerwand, die während des Betriebs aktiv verstellbar ausgeführt sein können, und/oder durch Vorrichtungen zur Einhausung der mindestens einen Umwälzvorrichtung oder wenigstens eines Abschnitts hiervon, die ebenfalls aktiv, bevorzugt axial verstellbar ausgeführt sein können, die Oberflächeneigenschaften der Polymerelemente, die Intensität und/oder die Struktur der Glättung und/oder die mögliche Verklebung von bewegbaren Polymerelementen, wie beispielsweise einteiligen Scharnieren, und/oder eine Funktionalisierung von Elemente vorteilhaft beeinflusst werden.

In einigen Ausführungsformen ist die mindestens eine Umwälzvorrichtung nicht im direkten oder unmittelbar inneren Bereich der Kammer angeordnet, sondern befindet sich beispielsweise in einem Fluidbereich und/oder Strömungskanal außerhalb der Kammer und/oder der Kammer abgewandt, also innerhalb einer bevorzugt röhrenförmigen, beidseitig offenen Fluidverbindung von mindestens einer Stelle der Kammerwand zu einer anderen. Eine eingebaute Umwälzvorrichtung, wie ein oder mehrere Propeller, bevorzugt mittels magnetischem Antrieb, kann einen Molekül- und/oder Partikelstrom durch diesen Fluidkanal drängen, wobei die Gehäusewand eines solchen Fluidkanals mit Heiz- und/oder Kühlvorrichtungen und/oder anderen Vorrichtungen zur Einbringung von Energie, wie beispielsweise Strahlung, Ultraschall, Mikrowellen und/oder weiteren, hierin aufgeführten, ausgestattet sein kann. Die Umwälzvorrichtung kann in ihrer Drehzahl und/oder in ihrer Drehrichtung in allen hierin offenbarten Ausgestaltungen gesteuert oder geregelt werden.

In bestimmten Ausführungsformen ist ein solcher Fluidkanal an mindestens einem distalen Ende mit einem oder mehreren fluidischen Schnittstellen zur Innenwandung verbunden, wobei deren Querschnitte durch entsprechende Vorrichtungen optional durch eine Steuerung verschlossen und/oder verändert werden können. Mit anderen Worten kann ein solcher Fluidkanal optional mehrere Durchbrüche an der Gehäusewand aufweisen, und zwar sowohl mehrere auf der gerade saugenden Seite, wie auch auf der Seite mit beschleunigtem Gas- und/oder Partikelstrom.

In manchen Ausrührungsformen sind Vorrichtungen zur Änderung der Strömungsrichtung und/oder der Strömungseigenschaften innerhalb eines solchen Fluidkanals angebracht und/oder befinden sich im unmittelbaren Bereich der Schnittstellen zur Innenwandung der Kammer und/oder innerhalb eines gewissen Abstands im Inneren der Kammer, wie beispielsweise bis zu 20 mm, 40 mm, 60 mm oder 80 mm Abstand, wobei bevorzugt Leitbleche, Prallbleche und/oder Lochbleche verwendet werden können und/oder zumindest ansatzweise oder überwiegend laminare Gas,- Nebel-, Partikel- und/oder Nanopartikelströmungen in zumindest ansatzweise oder überwiegend turbulente Strömungen überführt werden.

In manchen Ausführungsform kann zwischen einem Abschnitt eines Fluidkanals mit mindestens einer integrierten Umwälzvorrichtung, und einem weiteren Abschnitt mit optional mindestens einer weiteren integrierten Umwälzvorrichtung, mindestens eine Sekundärkammer angeordnet sein, welche beispielsweise temperiert werden kann, wie beispielsweise beheizt und/oder gekühlt. Eine Sekundärkammer kann mit mindestens einem verschließbaren Ventil zur Atmosphäre und/oder zu einem Gasbehälter und/oder mindestens einem Bypass ausgestattet sein und/oder mindestens ein Inlay und/oder granulare Medien und/oder Funktionalisierungsmittel enthalten.

In manchen Ausführungsformen steht die erfindungsgemäße Vorrichtung nicht mit einer weiteren Kammer in Fluidverbindung. Insbesondere steht sie nicht mit einer solchen Kammer in Fluidverbindung, aus welcher das Behandlungsmedium der Kammer der erfindungsgemäßen Vorrichtung vorgewärmt zugeführt werden würde, oder wobei die weitere Kammer zugleich das Reservoir für das vorgewärmte Behandlungsmedium ist.

In einigen Ausführungsformen liegt das Behandlungsmedium in der Kammer der Vorrichtung in flüssiger Form vor.

In einigen Ausführungsformen des erfindungsgemäßen Verfahrens läuft das Verfahren in einer Kammer, nicht in mehreren Kammern ab.

In manchen Ausführungsformen können im Verfahrensschritt a) die Polymerelemente bezüglich anderer Eigenschaften gleichzeitig, nacheinander oder überlappend vorbehandelt werden. Beispielsweise können die Polymerelemente in diesem Schritt getrocknet werden. Eine Trocknung der Teile kann beispielsweise in Kombination mit dem Erzeugen eines Unterdrucks (Evakuieren) erfolgen.

In einigen Ausführungsformen des erfindungsgemäßen Verfahrens kann im Verfahrensschritt b) eine Verdampfung mindestens eines Behandlungsmediums entweder durch eine Temperaturerhöhung und/oder durch eine Absenkung des Drucks in der Kammer erzielt werden.

In manchen Ausführungsformen ist im Verfahrensschritt b) eine Kombination aus Temperaturerhöhung und Absenkung des Gasdrucks in der Kammer zum Erzielen einer Verdampfung umfasst. Alternativ oder ergänzend sind ferner weitere unterstützende Maßnahmen wie Schall, Ultraschall, Induktion und/oder Mikrowellen, wie hierin beschrieben, von der vorliegenden Erfindung umfasst.

In einigen Ausführungsformen erfolgen die Kombinationen von Temperaturerhöhung, insbesondere des Behandlungsmediums bzw. des näheren Bereichs um das Behandlungsmedium, und eine Reduzierung des Innendrucks der Kammer und/oder des Innendrucks der Aufnahmevorrichtung für das Behandlungsmedium in zeitlicher Abfolge nacheinander. Beispielsweise sind Temperaturerhöhung, Temperaturabsenkung, Druckerhöhung und Druckabsenkung im Verfahrensschritt b) in jeder denkbaren Kombination und zeitlichen Abfolge und Überschneidung möglich, mit oder ohne eine/r die Verdampfung unterstützenden Maßnahme, wie hierin beschrieben.

In manchen Ausführungsformen wird im Verfahrensschritt b) eine Umwälzung und/oder Verwirbelung innerhalb der Kammer erzeugt, beispielsweise durch entsprechende Umwälzvorrichtungen, wie **z. B.** Propeller.

In einigen Ausführungsformen kann die Umwälzung und/oder Verwirbelung im Verfahrensschritt b) in der Stärke und/oder ihrer Wirkrichtung variiert werden. So kann die Strömung innerhalb der Kammer je nach Bedarf mehr oder weniger laminar oder turbulent ausgeführt werden. Hierzu kann beispielsweise die Drehrichtung **z. B.** des Propellers oder einer anderen geeigneten und hierfür vorgesehenen Umwälzvorrichtung umgekehrt werden, um damit die Strömungsrichtung innerhalb der Kammer zumindest zu einem großen Teil oder teilweise umzukehren. Eine solche zumindest teilweise ausgeübte Umkehrung der Drehrichtung und/oder Strömungsrichtung und/oder der Verteilungsrichtung kann zyklisch durchgeführt werden, mit oder ohne Veränderung der Intensität.

Eine Umkehr der Drehrichtung der Umwälzvorrichtung kann im Verfahrensschritt b) eine verstärkte Strömung und/oder eine Erhöhung der Wärmemenge bevorzugt im Bereich des Behandlungsmediums und/oder im Einlassbereich des Behandlungsmediums bewirken, so dass eine höhere Verdampfungsrate des Behandlungsmediums mit oder ohne weiteren Maßnahmen, wie hierin beschrieben, erzielt werden kann.

Einlassbereiche des Behandlungsmediums können im näheren Bereich der Innenwandung und/oder weiter im Inneren der Kammer liegen. Bevorzugt liegen Einlassbereiche nicht im direkten oder näheren Bereich der Elemente und/oder sind mit Vorrichtungen ausgestattet, um zumindest einen Dampf- oder Gasstrom zumindest ansatzweise und/oder teilweise in der Strömungsrichtung zu verändern, wie beispielsweise eine Prall- oder Leitplatte in unmittelbarer Nähe mit einer Schräg- oder Querausrichtung bezogen zur Strömungsrichtung.

In manchen Ausführungsformen des erfindungsgemäßen Verfahrens findet im Verfahrensschritt c) kein Energieeintrag mehr durch die Heizvorrichtung bzw. die Heizvorrichtungen statt.

In einigen Ausführungsformen kann zumindest für einen bestimmten Zeitraum noch eine bevorzugt reduzierte Temperierung stattfinden. Auf diese Weise wird beispielsweise der Glättungsprozess nicht zu schnell gestoppt und somit ein gleichmäßigeres Abziehen des Behandlungsmediums gewährleistet.

Alternativ oder ergänzend kann in einigen Ausführungsformen während des Verfahrensschritts c) der Innendruck der Kammer optional abwechselnd erhöht oder zumindest ansatzweise aufrechterhalten oder geringfügig reduziert werden, beispielsweise um bis zu 0,1 bar, bis zu 0,2 bar oder bis zu 0,3 bar, z. B. durch Einleiten von Luft, Gas, Schutzgas oder technisch modifiziertem Gas oder Kombinationen davon, um so ein Kondensieren des Behandlungsmediums zu begünstigen und/oder eine Bläschenbildung an den Elementen zu unterbinden. Modifiziertes Gas kann z. B. die Einleitung von Plasma sein, mit oder ohne den Eintrag von weiteren Stoffen wie beispielsweise durch Plasma gelöste Polymere. Der Druck und/oder die Temperatur können in bestimmten Ausführungsformen zyklisch erhöht und wieder reduziert werden, was ebenfalls von der vorliegenden Erfindung umfasst ist.

In einigen Ausführungsformen ist zwischen der Kammer und der Unterdruckvorrichtung eine Kühleinheit, beispielsweise zum Kühlen von Luft, Gas, Dampf und/oder Nebel von mindestens einem Behandlungsmedium vorgesehen. Sie kann fluidisch mit dem Inneren einer Leitung zwischen Kammer und Unterdruckvorrichtung verbunden sein, oder nicht.

In manchen Ausführungsformen ist bevorzugt zwischen der Kammer und der Unterdruckvorrichtung und/oder optional nach dieser mindestens ein Kondensator oder Kondenser vorgesehen, beispielsweise zum Kondensieren von Dampf und/oder Nebel von mindestens einem Behandlungsmedium aus der Kammer.

Die Unterdruckvorrichtung, wie hierin offenbart, kann beispielsweise eine Vakuumpumpe, eine Membranpumpe, eine Kolbenpumpe oder eine Drehschieberpumpe sein.

In manchen Ausführungsformen ist ein Kondensator als Kühlfalle ausgeführt, in anderen ist er es nicht.

In einigen Ausführungsformen ist ein Kondensator als Wärmetauscher ausgeführt, in anderen ist er es nicht.

In manchen Ausführungsformen ist ein Kondensator zumindest in großen Teilen aus einem, bevorzugt metallischen, Rohr gebildet, wie beispielsweise aus einem (beschichteten) Aluminium- oder Kupferrohr, oder weist ein solches auf. Ein rohrförmiger Kondensator kann bevorzugt als Vierkant- oder Rundrohr ausgeführt sein. Er kann bevorzugt Innendurchmesser oder Diagonalen zwischen 1,5 mm und 30 mm, bevorzugt zwischen 3 mm und 20 mm, besonders bevorzugt zwischen 5 mm und 15 mm, wie beispielsweise zwischen 8 mm und 12 mm aufweisen und/oder Rohrlängen einnehmen von mindestens 0,5 Metern, bevorzugt von mindestens 1,5 Metern und besonders bevorzugt von mindestens 2 Metern, wie beispielsweise zwischen 3 Metern und 15 Metern oder zwischen 6 Metern und 30 Metern.

Ein rohrförmiger Kondensator ist bevorzugt wendelförmig gebogen oder gewickelt, beispielsweise etwa zwischen 10 cm und 130 cm (gewickeltem) Durchmesser, um dadurch bevorzugt Platz zu sparen, wobei die fluidische Verbindung mit der Unterdruckvorrichtung stromabwärts so ausgebildet ist, dass die Orientierung der Fluidverbindung zumindest geringfügig und über weite Strecken (wendelförmig)in eine Raumrichtung nach unten zeigt, also zusammen mit der Schwerkraft, aber zusätzlich bevorzugt kreisförmig, verläuft.

In bestimmten Ausführungsformen können innerhalb eines aus einer Rohrleitung gebildeten Kondensators Vorrichtungen zur Steigerung der Oberflächen und damit zur Steigerung der Wärmeübertragung eingebracht sein, wie beispielsweise granulare Medien und/oder Bleche oder Profile und/oder Inlays, bevorzugt aus einem gut wärmeleitenden Material, etwa einem hierin offenbarten oder mit Eigenschaften, wie hierin für ein solches Material offenbart.

In manchen Ausführungsformen befindet sich stromabwärts, bevorzugt nahe oder unmittelbar vor der Unterdruckvorrichtung mindestens ein Behälter und/oder ein Raum, wo in der Rohrleitung kondensiertes Behandlungsmedium bevorzugt durch die Schwerkraft und/oder durch die Wirkung der Molekülströmung zumindest in überwiegenden Mengen hineinfließen kann.

In einigen Ausführungsformen können zwei, drei, vier oder mehr Kühleinheiten, Kondensatoren, Kühlfallen und/oder Wärmetauscher gemeinsam oder getrennt verwendet werden, bevorzugt zeitgleich und/oder hintereinander angesteuert und besonders bevorzugt in paralleler Anordnung zu mindestens einer Unterdruckvorrichtung.

Die Kühleinheit und/oder ein Kondensator und/oder eine Kühlfalle und/oder Wärmetauscher können in Wirkverbindung mit einer angrenzenden, optional weiteren Aufnahmevorrichtung für kondensiertes, rückgewonnenes Behandlungsmedium und/oder Funktionalisierungsmittel stehen.

In manchen Ausführungsformen kann eine Fluidverbindung zwischen der Kammer und einer Unterdruckvorrichtung, wie z. B. einer Vakuumpumpe, mit einer Zuführvorrichtung für Luft, Gas und/oder Schutzgas, wie beispielsweise Stickstoff oder Argon, in Wirkverbindung stehen.

Eine Zuführvorrichtung für Luft, Gas und/oder Schutzgas, wie beispielsweise eine Zuführleitung, kann als Bypass zur Unterstützung der Kondensationsleistung innerhalb der Fluidverbindung zwischen der Kammer und der Unterdruckvorrichtung und/oder einer zusätzlich integrierten Kondensationsvorrichtung betrachtet werden und zumindest stellenweise und/oder zeitweise einen kleineren oder deutlich kleineren Querschnitt aufweisen als die Fluidverbindung, beispielsweise um mindestens einen Faktor 5, bevorzugt um mindestens einen Faktor 10, kleiner. Der effektive Querschnitt einer der Fluidverbindung verbundenen Zuführvorrichtung kann in manchen Ausführungsformen an der engsten Stelle, wie beispielsweise an einer Ventilbohrung oder bei einer aktuell vorherrschenden Stellung eines Ventils, eine Fläche von weniger als 25 mm² aufweisen, bevorzugt von weniger als 10 mm², wie beispielsweise zwischen 0,15 mm² und 3 mm² oder zwischen 0,5 mm² und 10 mm².

In manchen Ausführungsformen können auch mehrere Zuführvorrichtungen für Luft und/oder Gas mit mindestens einer Fluidverbindung zwischen der Kammer und einer Unterdruckvorrichtung in Wirkverbindung stehen, oder anders ausgedrückt, mehrere Bypässe Anwendung finden, sowohl zumindest ansatzweise an der gleichen Position in Stromrichtung betrachtet, wie auch hintereinander, in Reihe geschaltet, also beispielsweise mit einem Abstand zwischen 10 mm und 2000 mm, bevorzugt zwischen 20 mm und 1000 mm, besonders bevorzugt zwischen 50 mm und 500 mm.

In manchen Ausführungsformen ist eine Zuführvorrichtung für Luft, Gas und/oder Schutzgas zumindest teilweise als T-Stück, optional als fertiges Zukaufteil, innerhalb der Fluidverbindung zwischen Kammer und Unterdruckvorrichtung, erfindungsmäßig als Bypass, ausgebildet. Ein solcher Bypass kann besonders einfach und preisgünstig in der Herstellung sein, weil im unmittelbaren Bereich der Verzweigung, also direkt am T-Stück, das Verhältnis der Querschnitte nicht oder zumindest nur unwesentlich relevant für die Funktion ist, da ein Verschluss und/oder eine effektive Veränderung des Querschnitts an einer anderen Stelle, weiter stromaufwärts der Zuführvorrichtung genauso erfolgen kann, und zwar mit der zumindest annähernd gleichen Wirkung, wie wenn dies direkt an der Verzweigung geschehen würde.

In manchen Ausführungsform kann ein X-Stück, sozusagen in gespiegelter Ausführung, für eine weiter gesteigerte Leistungsfähigkeit eines solchen Bypass sorgen. Ein Verschluss und/oder eine Verjüngung/Erweiterung des effektiven Querschnitts und/oder einer damit einhergehenden Veränderung des Massenstroms an Luft, Gas und/oder Schutzgas in der Zuführleitung, kann bevorzugt durch Ventile, wie beispielsweise durch Magnetventile, Nadelventile und/oder Kugelhähne, realisiert werden. Bevorzugt kann dabei mindestens ein solches Ventil von der Steuerung insbesondere und unter anderem auf die Messdaten von Drucksensoren und/oder Temperatursensoren geschaltet und/oder geregelt werden. Auf diese Weise kann beispielsweise zusätzlich zur gesteigerten Kondensationsleistung für Behandlungsmediumdampf der Kammerdruck genauer aufrechterhalten und/oder in sehr feiner Auflösung reduziert und/oder gesteigert werden.

In manchen Ausführungsformen kann bevorzugt stromaufwärts einer Unterdruckvorrichtung, wie beispielsweise einer Vakuumkammer, ein VOC-Filter angeordnet sein, wie beispielsweise ein Aktivkohlefilter.

In einigen Ausführungsformen ist eine Einrichtung zur Messung der Oberflächenglättung der in der Kammer vorliegenden Polymerelemente, oder zumindest eines hiervon, vorgesehen. Diese Einrichtung kann z. B. eine optische Messeinrichtung sein oder umfassen. Sie kann eine mechanisch wirkende Einrichtung sein, oder Kombinationen hieraus. So kann z. B. ein scharfer Gegenstand oder eine Kugel vorgesehen sein, welche(r) testweise in eines der Elemente eindrückt, während dessen Oberfläche durch die fortschreitende Behandlung und/oder Glättung zunehmend weicher wird. Die Eindringtiefe der Spitze und/oder Fläche dieses Gegenstands in die erweichte Oberfläche kann optisch oder auf andere Weise ermittelt werden, wie beispielsweise durch einen Dehnmessstreifen (DMS) oder eine Längenanzeige und damit Rückschluss auf die Stärke der bereits erfolgten Behandlung und/oder Glättung erlauben. Für einen Rückschluss können vorab Zielparameter, eine Bewertungsskala, Referenzwerte, Referenzbilder usw. vorgesehen und hinterlegt sein, z. B. in der Steuervorrichtung oder einem hiermit verbundenen Datenoder Bildspeicher.

In manchen Ausführungsformen können zur Überprüfung oder Überwachung der Glättung eine Kamera und/oder ein optisches Mikroskop und/oder ein Infrarotmessgerät und/oder eine Infrarotkamera und/oder ein Laser und/oder ein Scanner vorgesehen sein.

Ein optisches Messgerät wie eine Kamera kann dabei bevorzugt über mindestens eine abgedichtete Glasscheibe oder einen abgedichteten, transparenten Zylinder wie einen Glaszylinder von außen mit dem Innenraum der Kammer in optischer Verbindung stehen, wobei ein transparenter Zylinder beispielsweise zumindest abschnittsweise Durchmesser zwischen 5 mm und 50 mm, bevorzugt zwischen 10 mm und 35 mm, wie beispielsweise zwischen 15 mm und 25 mm aufweisen kann und/oder wobei ein Glaszylinder beispielsweise eine Länge von mindestens 15 mm und bevorzugt von mindestens 30 mm aufweisen kann, wie beispielsweise zwischen 50 mm und 200 mm oder mehr, und/oder wobei ein Glaszylinder beispielsweise mindestens 10 mm nach innen der Innenwandung vorsteht, bevorzugt mindestens 25 mm und besonders bevorzugt mindestens 50 mm. Eine solche optische Vorrichtung oder optische Durchführung für bevorzugt sichtbare Wellenlängen bzw. sichtbares Licht kann in manchen Ausführungsformen optional mit einer Beleuchtung ausgestattet sein, wie beispielsweise mit LED Leuchtdioden, bevorzugt in ringförmiger Anordnung um das Objektiv und/oder die Linse einer Kamera.

In einigen Ausführungsformen ist wenigstens ein Sensor zur Bestimmung der Konzentration des Behandlungsmediums und/oder der Nebel- oder Dampfkonzentration und/oder der Dampfsättigung und/oder der Konzentration oder der Verteilung von Funktionalisierungsmitteln vorgesehen. Es kann weiter vorgesehen sein, die Konzentration des Behandlungsmediums, insbesondere als Reaktion auf Sensorrückmeldungen hin, und/oder die Parameter oder Glättungsparameter während und/oder zwischen den Glättungsschritten aufeinander folgender Glättungszyklen oder -chargen anzupassen.

In manchen Ausführungsformen ist wenigstens ein Filter in oder an der Vorrichtung vorgesehen, insbesondere zur Filtration von Funktionalisierungsmitteln, Schwebstoffen und/oder abgelösten Pulver- bzw. Polymerpartikeln in oder aus der Kammer. Solche Filter können beispielsweise Grobsiebe und/oder Feinsiebe sein oder auch andere Filtermedien wie Filterpapier, Filterschwamm, Filterwatte, Aktivkohlefilter, Blockfilter oder Membranfilter. Jedes andere Filtermedium, welches dem Fachmann bekannt ist, ist ebenfalls verwendbar.

In einigen Ausführungsformen ist die Erhebung von Messdaten vorgesehen. Die Messdaten können beispielsweise Werte für Temperatur, Druck, Behandlungsmedium-Konzentrationen oder dergleichen sein oder umfassen. Eine Messung von Polymerelement-Kennwerten wie Oberflächenbeschaffenheit, Oberflächenrauheit, Oberflächenhärte, Biegesteifigkeit, Zugfestigkeit, Druckfestigkeit oder weiterer, dem Fachmann bekannten Polymerelement-Messdaten innerhalb der Baukammer vor, während und nach den Behandlungsschritten, kann ebenfalls vorgesehen sein.

Dabei kann in bestimmten Ausführungsformen ein Auswerten des oder der Parameter eine Anpassung im Prozess von Temperaturen, Drücken, Zeiten, Konzentrationen, Heizraten, Abkühlraten, Temperatur-Zeitverhalten, Drehzahlen, Drehrichtungen und/oder weiteren Dingen zur Folge haben.

In manchen Ausführungsformen kann für das Messen ein Referenz-Polymerelement vorgesehen sein, wie **z. B.** ein Teststäbchen, ein Zugstab, ein Quader oder auch andere, genormte Testteile, in welchen solche Formen verwendet werden. Insbesondere können auch innenliegende Konturen wie Bohrungen und/oder Kanäle, bevorzugt von Referenz-Polymerelementen, mit solchen Messinstrumenten ausgestattet werden. Die Referenz-Polymerelemente haben dabei den Vorteil, dass keine kommerziell nutzbaren, zu bearbeitenden Polymerelemente durch die Messungen beschädigt werden. Gleichzeitig stellen diese Referenz-Polymerelemente bevorzugt standardisierte Formen und Geometrien dar, womit man solche Messungen auch über die Zeit hinweg immer direkt miteinander vergleichen kann. An Referenz-Polymerelementen gewonnene Daten können mit solchen anderer Anlagen und/oder an anderen Standorten vergleichen und Behandlungen ggf. anpassen werden. Bevorzugt werden solche Referenz-Polymerelemente in SLS-, MJF-, oder HSS-Verfahren zusammen mit den zu glättenden Polymerelementen gefertigt, um auf die zu glättenden Polymerelemente ausgeübte Parameter während des Drucks wie Zustand des Rohmaterials/Pulvers wie z. B. Alterung, der exakten Temperaturdaten im Aufbauprozess und weiteren Daten oder deren Wirkung dokumentieren und/oder in das Messen und/oder Anpassen der Glättung so weit wie möglich einbinden zu können. Solche Referenz-Polymerelemente können mit einer Codierung an der Oberfläche versehen sein, damit sie für eine Sicherung mit eindeutiger Zuteilung archiviert werden können.

In einigen Ausführungsformen ist die Vorrichtung in Signalverbindung verbunden mit weiteren Vorrichtungen dieser Art und/oder mit einer Auswertevorrichtung, oder eine Signalverbindung kann hierfür vorbereitet sein. Eine solche Verbindung oder Vernetzung kann für das Analysieren und/oder Anpassen der Behandlungsparameter einer oder mehrerer der miteinander verbundenen Vorrichtungen dienen.

In manchen Ausführungsformen ist ein Notstromsystem oder ein Akkusystem in oder an der Vorrichtung vorgesehen. Mit ihm können zumindest die notwendige Aufrechterhaltung der Steuerung zur Zustandskontrolle und/oder zur Aktivierung eines Notfallprogramms nach einem Stromausfall erfolgen, Ventile für Schutzgas und/oder andere Ventile sollen z. B. auch nach einem Stromausfall noch geschaltet werden können.

In einigen Ausführungsformen kann eine Vielzahl von Polymerelementen in demselben Verfahren behandelt werden.

Insbesondere kann das Verfahren der vorliegenden Erfindung für jedes Element angewendet werden, das durch ein additives Herstellungsverfahren aus einem Polymermaterial erhalten wurde, das durch das Behandlungsmedium der vorliegenden Erfindung bei der Anwendungstemperatur des Behandlungsmediums wie gewünscht zum Behandeln oder Glätten und/oder Funktionalisieren (hierin auch: Glättungstemperatur) erweicht und/oder gelöst wird. Entsprechende Elemente können in der Kammer vorliegen.

Polymere, die in additiven Fertigungsverfahren eingesetzt werden, sind dem Fachmann bekannt.

Beispiele für Polymere, die als Baustoff zu einem Element verwendet werden können, sind duroplastische oder thermoplastische Polymere. Materialien, die in additiven Fertigungsverfahren besonders nützlich sind, sind thermoplastische Polymere wie Polyamide und thermoplastische Elastomere. Beispiele für geeignete Polymere und Polymerklassen sind aliphatische, teilaromatische und aromatische Polyamide, beispielsweise Polyamid 12 (PA12), Polyamid 6 (PA6), Polyamid 6.6 (PA6.6), Polyamid 11 (PA11), PA 4.6 (PA4.6), Polyamid 612 (PA612), Polyphthalamid (PPA) oder thermoplastische Co-Polyamide, Acrylate wie Polymethylmethacrylat (PMMA), Polyoxymethylen (POM), Polyethylenterephthalat (PET), Polybutylenterephthalat (PBT), Polyethylenterephthalatglycol (PETG), Polyetherblockamid (PEBA), Polycarbonate (PC), Polyethylenfuranoat (PEF), Polyurethane wie thermoplastisches Polyurethan (TPU), Polypropylen (PP), Polysulfone (PSU) wie Polyethersulfone (PESU) und Polyphenylsulfone (PPSU), Polyetheretherketone (PEEK), Polyetherketoneketone (PEKK), Polyaryletherketone (PAEK), Polyetherketon (PEK), Polyimide, Thermoplastisches Polyimid (TPI), Polyetherimide (PEI), Polyamidimid (PAI), Polyvinylidenfluorid (PVDF), Styrolpolymere und Copolymere wie Acrylnitril-Butadien Styrol (ABS), Acrylnitril-Styrol-Acrylat (ASA) oder Triblockpolymere aus Polystyrol-und Poly(ethylenoxid)-Blöcken (ABA) oder ein thermoplastisches Polymer aus Polyetherimid und Polycarbonat, das als Ultem 9085 erhältlich ist, oder Copolymere, Blends oder Mischungen aller oben genannten Materialien, mit oder ohne Füllstoffe wie beispielsweise Glaskugeln oder Carbonfasern.

Weiterhin können mit dem erfindungsgemäßen Verfahren auch Elemente auf Basis von Photopolymeren wie beispielsweise Acrylate behandelt werden, d. h. Elemente, die mit Verfahren wie Stereolithographie (SLA), DLP oder anderen lichtbasierten Verfahren wie beispielsweise Polyjet oder Multijet erhalten wurden. Es wurde festgestellt, dass das Verfahren der vorliegenden Erfindung vorteilhaft auch für diese Art von Polymeren verwendet werden kann, wenn der Behandlungsschritt vor oder zwischen Teilschritten eines optionalen Nachhärtens durchgeführt wird.

Vorteilhafterweise wurde erkannt, dass die behandelnde oder glättende Wirkung des erfindungsgemäß eingesetzten Behandlungsmediums in manchen Fällen durch Zugabe von mindestens einem, bevorzugt nicht toxischem Weichmacher verbessert werden kann.

Der Weichmacher wird in einer Menge verwendet, die für eine Verbesserung der gewünschten Wirkung sorgt. Es kann eine Menge von 0,1 bis 30 Gew.-%, wie 1 bis 20 Gew.-%, beispielsweise 2 bis 7,5 Gew.-%, bezogen auf das Gesamtgewicht des Behandlungsmediums, verwendet werden.

In einigen Ausführungsformen können die Polymerelemente nach der Behandlung aus der Kammer entnommen und getrocknet oder in einem weiteren Schritt funktionalisiert werden.

Das Trocknen kann erreicht werden, indem die geglätteten Elemente in einem Ofen oder einer Trockenbox gelagert werden, gegebenenfalls unter Verwendung von Mitteln wie einem Ventilator oder anderen bekannten Mitteln, um verbleibendes Behandlungsmedium zu entfernen. Die Trocknungszeit ist nicht kritisch und kann von etwa 5 Minuten bis zu Stunden oder sogar Tagen wie 1 bis 24 Stunden betragen. Alternativ oder in zeitlicher Kombination kann die Trocknung auch in einem Vakuumofen und/oder in einer Unterdruckkammer mit oder ohne zusätzlichen Wärmeeintrag und/oder mit einer Umwälzvorrichtung durchgeführt werden. Solche Vorrichtungen können Teil der erfindungsgemäßen Vorrichtung sein und/oder in die erfindungsgemäße Vorrichtung integriert sein.

In manchen Ausführungsformen wird in mindestens einem Schritt des Verfahrens mindestens ein Funktionalisierungsmittel während oder nach der Behandlung mit dem Behandlungsmedium auf die Polymerelemente aufgebracht.

In einigen Ausführungsformen können ein oder mehrere Funktionalisierungsmittel bevorzugt vor der Behandlung in das oder zu dem Behandlungsmedium eingebracht werden, so dass diese Stoffe beispielsweise als Lösung und/oder Dispersion vorliegen.

In manchen Ausführungsformen wird während oder nach mindestens einem der Schritte b) oder c) mindestens ein Funktionalisierungsmittel aufgetragen, wobei das Verfahren ferner einen Schritt d) zum Funktionalisieren der behandelten und/oder geglätteten Polymerelemente durch Auftragen mindestens eines Funktionalisierungsmittels umfassen kann.

In einigen Ausführungsformen werden während mindestens einem der Schritte a) bis c) und/oder während des Funktionalisierungsschrittes d) Mittel zum Treiben des Behandlungsmediums und/oder des Funktionalisierungsmittels verwendet, wobei es sich bei dem Antriebsmittel in bestimmten Ausführungsformen um die Umwälzeinrichtung der erfindungsgemäßen Vorrichtung handeln kann, beispielsweise um mindestens ein Flügelrad, einen Propeller, einen Magnetfeldgenerator, eine Vibrationseinheit, einen Schallgenerator, eine Ultraschalleinheit oder eine Vorrichtung zur Erzeugung elektrischer Felder.

In manchen Ausführungsformen umfasst das Funktionalisierungsmittel mindestens ein Mittel, ausgewählt aus einem Färbemittel, einem Farbstoff, einem Pigment, einer Faser, einer Carbonfaser, einer Stofffaser, Carbon Nano Tubes, Graphene, einem Härtungsmittel, einem Metallpulver, einem Keramikpulver, einem Polymer oder Polymerpulver (bevorzugt Polyamid, Polypropylen, thermoplastische Elastomere wie TPE oder TPU, PET, PBT, ABS, ASA, HDPE, PSU, PESU, PPSU, PEI, PEEK, PEKK, PEAK, PPS, PVDF, PFA, PTFE), einem Hydroxylapatit, einem Calcium Phosphate, bioaktiven Keramiken, einem Titandioxid, einem anorganischen Pigment oder Pulver, einem elektrostatischen Entladungsmittel, einem Füllstoff, einer Base, einer Säure, einem Puffersystem, einem Appreturmittel, Nanomaterialien und/oder einem Weichmacher.

In einigen Ausführungsformen wird im Funktionalisierungsschritt d) ein Färbemittel oder eine Farbstofflösung aufgebracht.

In manchen Ausführungsformen kann durch die Auswahl des Behandlungsmediums und Prozessführung eine matte Oberfläche mit sehr glatten Oberflächenwerten erzeugt werden.

Bei der Nachbehandlung der Elemente wie Beschichten, Verkupfern, Kleben oder anderen Nachbehandlungsschritten kann ein so durchgeführter Prozess Vorteile hinsichtlich der Haftung bringen, indem unter anderem die Oberflächenspannung der Polymerelementoberfläche für den jeweiligen Vorgang angepasst wird.

In manchen Ausführungsformen können durch die Wahl geeigneter Behandlungsmedien, Funktionalisierungsmittel und/oder Prozessparameter die Oberflächeneigenschaften in Bezug auf die Oberflächenspannung auf über 30 N/m², bevorzugt über 40 N/m², wie beispielsweise über 50 N/m² gesteigert werden.

In manchen Ausführungsformen werden während des erfindungsgemäßen Verfahrens zur Oberflächenbehandlung von Polymerelementen die Polymerelemente im Erwärmungsschritt auf eine erste Temperatur erwärmt. Ferner wird das Behandlungsmedium verdampft, wobei der Dampf insbesondere auf eine zweite Temperatur erhitzt oder auf der zweiten Temperatur gehalten wird. Die Polymerelemente werden für eine bestimmte Zeitdauer dem Behandlungsmedium bzw. dessen Dampf und/oder dessen Nebel ausgesetzt, damit dieses bzw. dieser auf die Polymerelemente einwirken kann. Dieses Einwirkenlassen des auf die zweite Temperatur temperierten Behandlungsmediums/-dampfes auf die Polymerelemente für eine bestimmte Zeitdauer bewirk, dass eine Oberfläche der Polymerelemente zumindest teilweise mit dem Behandlungsmedium bedeckt bzw. von diesem benetzt wird, womit eine Veränderung der Oberflächeneigenschaften einhergeht. Als weiteren Schritt umfasst das erfindungsgemäße Verfahren in dieser Ausführungsform ein Abführen zumindest eines Teils des Behandlungsmediums nach der bestimmten Zeitdauer, wobei die Polymerelemente vom Beginn des Temperierens der Polymerelemente bis zum Abschluss des Abführens des Behandlungsmediums in einer geschlossenen Umgebung positioniert sind.

In einigen Ausführungsformen umfasst der Erwärmungsschritt des Polymerelements ein Positionieren des Polymerelements in einer ersten mit einem Gas oder Gasgemisch gefüllten Kammer, wie beispielsweise Schutzgas und/oder Luft.

In manchen Ausführungsformen umfasst der Erwärmungsschritt des Polymerelements ein Erwärmen der ersten Kammer auf eine erste Temperatur, um damit das Polymerelement zumindest annähernd auf die erste Temperatur zu erwärmen.

In manchen Ausführungsformen des Verfahrens umfasst der Verdampfungsschritt des erfindungsgemäßen Verfahrens ein Erwärmen eines Behandlungsmediums, insbesondere in einer Aufnahmevorrichtung für das Behandlungsmedium, derart, dass dieses (in Anhängigkeit des vorherrschenden Drucks) verdampft und ein Gehäuse der Aufnahmevorrichtung für das Behandlungsmedium zumindest teilweise mit Dampf füllt, der das Behandlungsmedium ist oder enthält.

In einigen Ausführungsformen wird die Aufnahmevorrichtung für das Behandlungsmedium im Verdampfungsschritt auf eine zweite Temperatur erwärmt, um damit den Dampf des Behandlungsmediums zumindest annähernd auf die zweite Temperatur zu temperieren und/oder auf dieser Temperatur zu halten.

In manchen Ausführungsformen wird der Dampf des Behandlungsmediums von der Aufnahmevorrichtung für das Behandlungsmedium in die Kammer mit den Polymerelementen eingeleitet, bevor der Dampf auf die Polymerelemente einwirken kann.

In einigen Ausführungsformen umfasst das erfindungsgemäße Verfahren als weiteren Schritt ein Abführen, zumindest eines Teils des Dampfes des Behandlungsmediums, von der Kammer mit den Polymerelementen beispielsweise zurück in die Aufnahmevorrichtung für das Behandlungsmedium oder in eine andere Kammer, die zur Aufnahme des Behandlungsmediums geeignet und/oder vorgesehen ist, nach der bestimmten Zeitdauer.

In manchen Ausführungsformen umfasst der Schritt des Abführens ein Einleiten von Gas, Schutzgas oder einem Gasgemisch in die Kammer mit den Polymerelementen. Das Gas oder Gasgemisch ist dabei beispielsweise auf eine bestimmte Temperatur temperiert und/oder kann beispielsweise Stickstoff oder Argon sein oder enthalten.

In einigen Ausführungsformen der erfindungsgemäßen Vorrichtung wird das Gas oder Gasgemisch aus einer weiteren Kammer in die Kammer mit den Polymerelementen eingeleitet.

In manchen Ausführungsformen wird ein Polymerelement in der Kammer positioniert und verbleibt dort während des gesamten Verfahrensablaufs. Dies hat den Vorteil, dass das zu glättende Polymerelement nicht in den Dampf des Behandlungsmediums hinbewegt und nach Exposition des Polymerelements im Dampf wieder daraus herausbewegt werden muss.

Dadurch, dass der Dampf von der Aufnahmevorrichtung für das Behandlungsmedium in die Kammer mit den Polymerelementen eingeleitet wird, und nach einer bestimmten Zeitdauer wieder abgeführt werden kann, wird sichergestellt, dass das Polymerelement nach erfolgter Einwirkung des Dampfs auf seine äußere Schicht in einer Umgebung abtrocknen kann.

Beim Entfernen des Polymerelements aus der Kammer befindet sich das Polymerelement, das dann vorteilhafterweise geglättet ist, bevorzugt wieder in einer Umgebung, die zumindest zum überwiegenden Teil das Gas oder Gasgemisch umfasst, mit dem die Kammer bereits zu Beginn des erfindungsgemäßen Verfahrens gefüllt war. Das Gas oder Gasgemisch, mit dem die Kammer zu Beginn gefüllt ist, ist vorzugsweise Luft.

In einigen Ausführungsformen kann mittels des Einleiten des Dampfs des Behandlungsmediums aus der Aufnahmevorrichtung für das Behandlungsmedium oder dessen Gehäuse in die Kammer mit dem Polymerelement, das Einwirkenlassen des Dampfes auf das Polymerelement über eine bestimmte Zeitdauer sowie das Abführen eines überwiegenden Teils des Dampfes aus der ersten Kammer heraus nach der bestimmten Zeitdauer, das Einwirken des Dampfes auf das Polymerelement gezielt kontrolliert werden.

In manchen Ausführungsformen hängen die bestimmte Zeitdauer und/oder die exakten Behandlungstemperaturen von der Konzentration des Behandlungsmediums im Dampf ab. Je geringer die Konzentration des Behandlungsmediums im Dampf, desto länger sollte die bestimmte Zeitdauer und/oder desto höher sollte die Behandlungstemperatur gewählt werden. In anderen Worten, je stärker der Dampf mit dem Behandlungsmedium gesättigt ist, desto kürzer kann die bestimmte Zeitdauer und/oder desto niedriger können die Behandlungstemperaturen gewählt werden. Die bestimmte Zeitdauer liegt beispielsweise im Bereich von 0 bis 90 Minuten, bevorzugt zwischen 0 und 30 Minuten, besonders bevorzugt zwischen 1 und 20 Minuten, sehr bevorzugt zwischen 2 und 15 Minuten, wie beispielsweise bei vorzugsweise zumindest ansatzweise gesättigten Dampfdrücken zwischen 3 und 10 Minuten oder zwischen 4 und 8 Minuten.

In einigen Ausführungsformen bewirkt das Einwirkenlassen des Dampfes und/oder des Kondensats des Behandlungsmediums auf das Polymerelement, dass eine äußere Schicht des Polymerelements verflüssigt und/oder plastifiziert und dadurch geglättet wird. Vorhandene Stufen, Kerben, Unregelmäßigkeiten etc. auf der Oberfläche des Polymerelements gehen durch die Verflüssigung und/oder Plastifizierung fließend ineinander über, wodurch eine Glättung erfolgt.

In manchen Ausführungsformen führt das Verfahren durch die Einwirkung der Behandlungsmedien zu einer erhöhten Polymerkettenmobilität an der Oberfläche der Polymerelemente. Diese ermöglicht eine zunehmende Reorientierung der Polymerketten zu einem thermodynamisch günstigeren Zustand mit reduzierter Oberfläche und/oder geringerer Rauheit der Oberfläche und/oder einer anderen Farbgebung der Polymerelemente und/oder zu einer besseren Haftung von Funktionalisierungsmitteln auf den Polymerelementen durch eine stärkere und/oder tiefer in die Oberfläche wirkende Anhaftung und/oder Einlagerung dieser. Das Behandlungsmedium ist zweckmäßigerweise derart gewählt, dass es mit dem Material, aus dem das Polymerelement hergestellt ist, zumindest bei bestimmten Bedingungen , wie beispielsweise bei bestimmten Temperaturen, interagiert, und dessen zunehmende Verflüssigung und/oder Plastifizierung bewirken kann.

Insbesondere sollten für die zu behandelnden Polymere oder Polymerklassen nur spezifische Behandlungsmedien verwendet werden, die zumindest überwiegend physikalische Vorgänge und keine oder nahezu keine chemischen Reaktionen mit den verwendeten Polymeren bewirken, um eine chemische Veränderung und/oder eine chemische Zersetzung der Oberflächen von Polymerelementen zumindest auf ein technisch realisierbares und dabei wirtschaftliches Minimum zu reduzieren. Eine chemische Zersetzung durch eine nicht erfindungsmäßige Kombination von Polymer und Behandlungsmedium kann sich beispielsweise auf die Gestalt- bzw. Formabweichung von Elementen auswirken. Beispielsweise kann eine Behandlung von Benzylalkohol auf Polyamiden wie PA12 oder PA11 bei Behandlungstemperaturen über 100°C eine chemische Veränderung von Oberflächen herbeiführen und/oder begünstigen, womit beispielsweise ein Bauteilverzug und/oder eine inakzeptable Maßänderung von solchen Elementen einhergehen kann.

In einigen Ausführungsformen ist die Kammer mit den Polymerelementen mit der Aufnahmevorrichtung für das Behandlungsmedium durch eine verschließbare Verbindung verbunden. In diesen Ausführungsformen kann gewährleistet sein, dass der Dampf gezielt bzw. gesteuert von der Aufnahmevorrichtung für das Behandlungsmedium in die Kammer eingeleitet werden kann. Eine solche gezielte Einleitung kann zeit-, druck- und/oder volumengesteuert geschehen.

In manchen Ausführungsformen herrscht zumindest nach dem Erwärmungsschritt und/oder während der Oberflächenbehandlung sehr bevorzugt ein Unterdruck in der Kammer, beispielsweise zwischen 0 und 0,99 bar, oder zwischen 0,1 bar und 0,99 bar, oder zwischen 0,3 bar und 0,99 bar

In einigen Ausführungsformen liegt der Unterdruck zumindest im Verfahrensschritt b) zumindest zeitweise zwischen 0,4 bar und 0,99 bar, bevorzugt zwischen 0,5 bar und 0,98 bar, besonders bevorzugt zwischen 0,6 bar und 0,95 bar, wie beispielsweise zwischen 0,7 bar und 0,95 bar.

In einigen Ausführungsformen wird das Kammervolumen während der Oberflächenbehandlung nicht oder zumindest nicht wesentlich verändert.

In manchen Ausführungsformen weist die Vorrichtung keine dritte Kammer, z. B. zur Aufnahme eines Fluids während der Behandlung auf, und/oder ist hiermit nicht verbunden.

In einigen Ausführungsformen weist die Vorrichtung keine Kammer zum Aufnehmen von überschüssigem Gas (Luft) auf.

In manchen Ausführungsformen ist nicht vorgesehen, Gas von einer Kammer in eine andere Kammer zu überführen, und/oder den Behandlungsmediumdampf von einer Kammer in eine andere Kammer vorrangig durch Verdrängung überzuführen.

In einigen Ausführungsformen ist nicht vorgesehen, die äußerste Schicht des Polymerelements zu verflüssigen und/oder zu glätten, sondern es wird bevorzugt für eine anderweitige Veränderung der Polymer- und/oder Oberflächeneigenschaften gesorgt, wie beispielsweise für eine Änderung der Oberflächenspannung und/oder für eine Farbänderung und/oder für eine Entpulverung und/oder für eine Veränderung der Härte und/oder für eine Änderung der Elastizität und/oder für eine Veränderung des Glanzes bzw. einer Mattierung und/oder für eine Funktionalisierung.

In manchen Ausführungsformen ist die mindestens eine Aufnahmevorrichtung für das Behandlungsmedium in Teilbereichen außerhalb und in anderen Teilbereichen innerhalb der Kammer, welche zur Aufnahme von Polymerelementen dient, angeordnet. Mit anderen Worten erstreckt sich bevorzugt die mindestens eine Aufnahmevorrichtung für das Behandlungsmedium durch eine definierte Aussparung an der Wandung, am Boden und/oder am Deckel der Kammer, wobei sich Teile der Aufnahmevorrichtung für das Behandlungsmedium außerhalb und andere Teile des Behälters innerhalb der Kammer befinden.

In einigen Ausführungsformen ist die Aussparung für die Aufnahmevorrichtung für das Behandlungsmedium als Kreistasche ausgestaltet, welche bevorzugt am Kammerboden eingebracht ist. Insbesondere weist eine solche Aussparung innerhalb des Kammerbodens gegenüber der Aufnahmevorrichtung für das Behandlungsmedium mindestens ein Dichtelement auf, z. B. einen O-Ring oder einen PTFE-Ring.

In manchen Ausführungsformen weist die Kreistasche in ihrem Umfang ein Gewinde auf, damit auf diese Weise eine Aufnahmevorrichtung für das Behandlungsmedium, welches in diesen Ausführungsformen mit einem Außengewinde versehen ist, in das Gewinde der Kreistasche eingeschraubt werden kann.

In einigen Ausführungsformen ist der Bereich oder der Teil der Aufnahmevorrichtung für das Behandlungsmedium, der sich außerhalb der Kammer zur Aufnahme von Polymerelementen befindet, deutlich größer ausgeführt als der Bereich oder der Teil, welcher sich innerhalb der Kammer erstreckt, beispielsweise um eine Größe oder ein Volumen mit dem Faktor 2 bis 30. Auf diese Weise kann die Aufnahmevorrichtung für das Behandlungsmedium in seiner Länge und damit mit seinem Innenvolumen so groß ausgeführt sein, dass eine größere Menge Behandlungsmedium verdampfen und vor dem Einleiten in die Kammer gespeichert und/oder optional weiter erwärmt werden kann, ohne dass dabei nutzbares Kammervolumen für die Polymerelemente zu sehr eingeschränkt werden würde.

In manchen Ausführungsformen ist die Aufnahmevorrichtung für das Behandlungsmedium in dem Bereich, welcher sich innerhalb der Kammer zur Aufnahme von Polymerelementen befindet, mit mindestens einem steuerbaren oder regelbaren Maschinenelement ausgestattet, um auf diese Weise vorbestimmte Mengen an Behandlungsmedium und/oder Behandlungsmediumdampf in die Kammer einführen zu können, wie beispielsweise einem Druckoder Magnetventil.

In einigen Ausführungsformen ist das steuerbare oder regelbare Maschinenelement ein Kugelhahn oder ein Ventil, beispielsweise ein Nadelventil. Ein steuerbares oder regelbares Maschinenelement wie ein Ventil kann bevorzugt mittels Magnetfelder und/oder einer mechanischen Durchführung von Bereichen außerhalb des Behälters und außerhalb der Kammer manipuliert werden, wie beispielsweise durch eine Dreh- und/oder Schiebestange mit mindestens einer Dichtung wie einem O-Ring.

In manchen Ausführungsformen ist die mindestens eine Aufnahmevorrichtung für das Behandlungsmedium vollständig oder nahezu vollständig außerhalb der Kammer zur Aufnahme von Polymerelementen angeordnet. Auf diese Weise kann die Temperatur der Aufnahmevorrichtung für das Behandlungsmedium stärker entkoppelt von der Temperatur der Kammer zur Aufnahme von Polymerelementen gesteuert oder geregelt werden, wie beispielsweise um 1°C bis 220°C höher, bevorzugt um 1°C bis 140°C höher, besonders bevorzugt um 5°C bis 90°C höher, wie beispielsweise um 15°C bis 65°C höher.

Eine thermale Entkopplung und/oder räumliche Trennung kann vorteilhafterweise einen höheren Temperaturgradienten zwischen der Kammer und der Aufnahmevorrichtung für das Behandlungsmedium und/oder eine vereinfachte, äußere Zugänglichkeit der Aufnahmevorrichtung zur Folge haben, um beispielsweise eine stärkere Heizleistung durch eine vergrößerte Oberflächenheizung zu generieren.

In einigen Ausführungsformen grenzt mindestens eine Fläche der Aufnahmevorrichtung für das Behandlungsmedium an mindestens einer Fläche der Kammer zur Aufnahme von Polymerelementen direkt an und/oder steht mit dieser in direkter mechanischer Verbindung. Eine direkte mechanische Verbindung kann beispielsweise ein Verschrauben, ein Verpressen, ein Verschweißen und/oder ein Verkleben darstellen.

In manchen Ausführungsformen grenzt die Aufnahmevorrichtung für das Behandlungsmedium nicht direkt an die Kammer zur Aufnahme von Polymerelementen an, sondern steht durch geeignete Maschinenelemente in Wirkverbindung, insbesondere in fluidischer Verbindung, zu dieser. Geeignete Maschinenelemente können beispielsweise zumindest einseitig geschlossene Leitungen, wie ein oder mehrere Rohre oder Rohrverbindungen, beispielsweise ein Vierkant- oder Rundrohr, und/oder Schläuche sein oder aufweisen und werden im Folgenden stellvertretend auch als solche bezeichnet, insbesondere als Rundrohre. Für den Fachmann ist aber ersichtlich, dass "Rundrohr" hierin nur eine exemplarische Ausgestaltung darstellt. Was hierin im Zusammenhang mit "Rundrohr" offenbart ist, gilt somit auch für nicht Nicht-Rohre, z. B. Schläuche, ferner für Rohre mit anderem als rundem Querschnitt, ebenso für Rohre oder Schläuche, welche verschiedene Querschnitte aufweisen. Ein Rundrohr kann zwar rund im Querschnitt sein, zumindest was einen Querschnitt durch seine äußere Mantelfläche betrifft. Ein zumindest teileweise hohler Körper mit größerer Längserstreckung aus Ersteckung in Breite und/oder Tiefe kann ebenfalls ein Rohr oder Rundrohr wie hierin offenbart ausmachen. Sind mehrere Rohre oder Rundrohre vorgesehen, so können diese parallel zueinander oder entlang einander verlaufend vorgesehen sein.

In einigen Ausführungsformen weist das Rundrohr zur fluidischen Verbindung der Aufnahmevorrichtung für das Behandlungsmedium und der Kammer mit den Polymerelementen (im Folgenden auch kurz: Rundrohr zur Fluidverbindung) einen Innendurchmesser von mehr als 10 mm auf, beispielsweise von mehr als 15 mm, wie z. B. einen Innendurchmesser von 16 mm bis 30 mm oder von 20 mm bis 80 mm, in anderen Ausführungsformen, bevorzugt bei der parallelen Verwendung mehrerer Rohre, können die Innendurchmesser bevorzugt kleiner oder gleich 15 mm betragen, wie beispielsweise zwischen 3 mm und 12 mm, oder zwischen 4 mm und 8 mm.

In manchen Ausführungsformen weist das Rundrohr zur Fluidverbindung eine Wandstärke von mehr als 1 mm auf, beispielsweise eine Wandstärke von mehr als 1,5 mm, wie z. B. 2 mm bis 5 mm oder 2 mm bis 15 mm.

In einigen Ausführungsformen weist das mindestens eine Rundrohr zur Fluidverbindung eine Länge von mehr als 40 mm auf, beispielsweise eine Länge von mehr als 100 mm und bevorzugt eine Länge von über 150 mm, wie eine Länge von 200 mm bis 800 mm oder von 250 mm bis 500 mm.

In manchen Ausführungsformen ist das mindestens eine Rundrohr zur Fluidverbindung ganz oder zumindest in Teilen aus einem anderen Material gefertigt als die Kammer, beispielsweise aus einer Aluminium-, Edelstahl-, Messing- oder Kupferlegierung oder besteht aus mehreren solcher Materialien.

In einigen Ausführungsformen weist das Material des Rundrohrs zur Fluidverbindung eine Oberflächenbeschichtung, beispielsweise eine Chromierung und/oder eine Beschichtung mit Siliziumoxid oder PTFE auf.

In manchen Ausführungsformen ist das Rundrohr zur Fluidverbindung mit wenigstens einer Heizvorrichtung versehen, beispielsweise mit einem Widerstandsheizer, z. B. in Form einer Heizmanschette oder Heizpatrone, einer Induktionsheizung, einer Mikrowellenheizung, einem Strahlungsheizer und/oder einer Heißgas- oder Fluidheizung, wie beispielsweise mittels einem Temperiergerät.

In einigen Ausführungsformen ist zwischen der Außenwandung des Rundrohrs zur Fluidverbindung und der wenigstens einen Heizvorrichtung mindestens ein Maschinenelement zur besseren und gleichmäßigeren Wärmeverteilung von der Heizvorrichtung auf das Rundrohr vorgesehen, bevorzugt mit einer Wandstärke von mindestens 3 mm, besonders bevorzugt von mindestens 8 mm.

In manchen Ausführungsformen kann die wenigstens eine Heizvorrichtung wie eine Heizmanschette in ihrem Nenndurchmesser um einige Millimeter größer ausgeführt sein als der Außendurchmesser des Rundrohrs zur Fluidverbindung, wobei mindestens ein Maschinenelement zur besseren und gleichmäßigeren Wärmeverteilung dazwischen angeordnet sein kann.

In einigen Ausführungsformen ist zwischen dem Außendurchmesser des mindestens einen Rundrohrs zur Fluidverbindung und dem deutlich größeren Nenndurchmesser der Heizvorrichtung mindestens ein Metallelement in Form eines Zylinders oder eines (dickwandigen) Rohrs, beispielsweise aus Aluminium oder Kupfer, eingefügt, um die Wärme besser und gleichmäßiger auf das mindestens eine Rundrohr der Fluidverbindung zu übertragen.

In manchen Ausführungsformen weist ein solches Metallelement geringe Toleranzen zu den angrenzenden Maschinenelementen mit bevorzugt weniger als 0,4 mm und besonders bevorzugt weniger als 0,1 mm auf und/oder ist mit einer Wärmeleitpaste zur besseren Wärmeübertragung versehen.

In einigen Ausführungsformen weist das Metallelement eine Materialdicke von mindestens 2 mm, besonders bevorzugt von mindestens 5 mm zwischen seinem und dem Außendurchmesser des mindestens einen Rundrohrs auf.

In manchen Ausführungsformen weist das Metallelement in Form eines dickwandigen Rundrohrs eine Länge auf, die größer ist als die Länge der Heizmanschette, beispielsweise ist sie mindestens doppelt oder dreimal so lang wie diese, wie beispielsweise eine Länge von mindestens 80 mm, besonders bevorzugt von mindestens 120 mm.

In bestimmten Ausführungsformen ist die Aufnahmevorrichtung für das Behandlungsmedium bevorzugt mit mindestens einer Heizvorrichtung ausgestattet, etwa mit einer der hierin genannten.

In einigen Ausführungsformen ist das der Aufnahmevorrichtung für das Behandlungsmedium gegenüberliegende Ende des Rundrohrs zur Fluidverbindung mit dem Boden oder der Kammerwandung der Kammer zur Aufnahme von Polymerelementen in Verbindung.

In manchen Ausführungsformen ragt das mindestens eine Rundrohr zur Fluidverbindung durch den Boden oder eine Kammerwandung hindurch in den Innenraum der Kammer hinein, beispielsweise um eine Länge von 5 mm bis 150 mm.

In einigen Ausführungsformen weist ein geeignetes Maschinenelement zur Fluidverbindung zwischen der Aufnahmevorrichtung für das Behandlungsmedium und der Kammer zur Aufnahme von Polymerelementen keine Möglichkeit zum Verschließen der Verbindung auf.

In manchen Ausführungsformen weist ein geeignetes Maschinenelement zur Fluidverbindung zwischen der Aufnahmevorrichtung für das Behandlungsmedium und dem Inneren der Kammer zur Aufnahme von Polymerelementen mindestens eine Verjüngung des Querschnitts auf, beispielsweise mit einem Durchmesser kleiner 10 mm, bevorzugt kleiner 5 mm und besonders bevorzugt kleiner 2,5 mm, wie beispielsweise zwischen 0,1 mm und 1,5 mm, welche bevorzugt im näheren Bereich oder innerhalb der Kammer zur Aufnahme von Polymerelementen angeordnet sein kann.

In einigen Ausführungsformen weist ein solches Maschinenelement mindestens eine Vorrichtung zum temporären Verjüngen des Querschnitts und/oder zum Verschließen der Fluidverbindung auf, etwa ein Ventil, eine verstellbare Drossel, usw.

In manchen Ausführungsformen ist ein solches Maschinenelement ganz oder teilweise mit granularen Medien und/oder wärmeleitenden Maschinenelementen für einen besseren Wärmetransport befüllt, wie beispielsweise Metallstäbe, Metallprofile und/oder Inlays. Granulare Medien und/oder wärmeleitende Maschinenelemente und/oder Inlays können beispielsweise mit Energieformen wie Wärmeleitung, Wärmestrahlung, Induktion, Mikrowellen, Schall- oder Ultraschall beaufschlagt werden. Entsprechende Vorrichtungen können vorgesehen sein und z. B. Teil der erfindungsgemäßen Vorrichtung und entsprechend angesteuert sein.

In einigen Ausführungsformen sind granulare Medien und/oder wärmeleitende Maschinenelemente innerhalb eines solchen Maschinenelements, also dem Maschinenelement zur Fluidverbindung zwischen der Aufnahmevorrichtung für das Behandlungsmedium und der Kammer zur Aufnahme von Polymerelementen aus einem Metall, wie beispielsweise Stahl, Edelstahl, Kupfer oder Aluminium, und/oder aus Silizium und/oder aus einer Keramik wie Siliziumkarbid ausgeführt oder sie weisen ein solches Material auf.

Ein solches Maschinenelement kann ein Rohr oder ein Rundrohr sein oder umfassen.

In manchen Ausführungsformen sind granulare Medien als Metallspäne, als Metallgranulat, als Metallkugeln, als Siliziumgranulat und/oder als Siliziumkugeln ausgeführt.

In manchen Ausführungsformen ist das Maschinenelement zur Fluidverbindung zwischen der Aufnahmevorrichtung für das Behandlungsmedium und der Kammer zur Aufnahme von Polymerelementen im Inneren mit zumindest überwiegend in Längsrichtung ausgebildeten Füllelementen oder Inlays wie Stangen, Rohren, Blechen oder speziellen Profilen zur Erhöhung der Oberfläche ausgestattet, wobei solche Füllelemente oder Inlays zumindest größtenteils aus einem Metall gebildet sein können und sich bevorzugt über einen großen Bereich des Maschinenelements erstrecken, bevorzugt zumindest über die Hälfte der Gesamtlänge.

In manchen Ausführungsformen kann das Maschinenelement zur Fluidverbindung zwischen der Aufnahmevorrichtung für das Behandlungsmedium und der Kammer zur Aufnahme von Polymerelementen als Wärmetauscher und/oder Wärmereaktor betrachtet und/oder bezeichnet werden.

Ein Wärmereaktor wie hierin beschrieben ist beispielsweise eine Vorrichtung, mit der bevorzugt Dampf und/oder Nebel und/oder eine Mischung aus Dampf und Nebel aus mindestens einem Behandlungsmedium erzeugt werden kann. Das hierin beschriebene Rohr oder Rundrohr kann ein Wärmereaktor sein, und umgekehrt.

In manchen Ausführungsformen ist ein Wärmereaktor dazu ausgebildet, mindestens ein Behandlungsmedium, bevorzugt eine bestimmte Menge mindestens eines bei 20°C flüssigen oder festen Behandlungsmediums und/oder mindestens ein Funktionalisierungsmittel aufzunehmen.

Ein Wärmereaktor steht in Verbindung und/oder in Wirkverbindung mit der Kammer, die der Aufnahme und Behandlung der Polymerelementen dient. Dabei kann sein Innenleben (z. B. der Ort, in welchen das Behandlungsmedium vorliegt und/oder verdampft wird, mittels einer Vorrichtung wie Ventil, Klappe oder dergleichen vom Inneren der Kammer getrennt oder trennbar sein. In anderen Ausführungsformen gibt es eine solche Vorrichtung nicht, das Innere des Wärmereaktors und das Innere der Kammer stehen in diesen Ausführungsformen stets in Fluidverbindung miteinander.

In einigen Ausführungsformen kann ein Wärmereaktor zumindest in Teilen entweder ein erweiterter Teil oder ein erweiterter Bereich der Kammer zur Aufnahme von Elementen darstellen, welcher zumindest in Abschnitten innerhalb und/oder außerhalb des Bodens, der Wandung und/oder des Deckels der Kammer angeordnet sein kann.

Ein Wärmereaktor kann dauerhaft mit der Kammer zur Aufnahme von Elementen in offener Verbindung oder offener Fluidverbindung stehen oder, in manchen Ausführungsformen, mit mindestens einem Verschlussmechanismus wie einem Ventil verschließbar in Wirkverbindung stehen. Ein solcher Verschlussmechanismus, falls vorhanden, kann entweder durch die Steuervorrichtung gesteuert werden, oder er kann ungeregelt, also selbst öffnend oder auslösend, ausgeführt sein. Die Öffnung kann beispielsweise druckabhängig erfolgen.

In einigen Ausführungsformen hat oder beinhaltet ein Wärmereaktor mindestens eine Heizvorrichtung (hierin als zweite Heizvorrichtung bezeichnet) und/oder eine Heizzone, in anderen Ausführungsformen weist er zwei oder mehr solcher Vorrichtungen oder Zonen auf.

Vorteilhafterweise kann dabei eine zweite Heizvorrichtung und/oder eine Heizzone (beide Begriffe können hierin gegeneinander ausgetauscht werden) zumindest überwiegend zur Erwärmung und/oder zum Ändern des Aggregatzustands des mindestens einen Behandlungsmediums genutzt werden, während mindestens eine dritte Heizvorrichtung und/oder Heizzone des Wärmereaktors zur weiteren Energiezufuhr des bereits erwärmten oder verdampften Behandlungsmediums dienen kann. Hierzu macht man sich dem Umstand zunutze, dass die Heizvorrichtungen oder -zonen innerhalb des Wärmereaktors entlang des Strömungswegs des Behandlungsmediums auf dessen Weg in Richtung Inneres der Kammer angeordnet sind, bezogen aufeinander also stromaufwärts bzw. stromabwärts liegen.

Optional können im Wärmereaktor Vorrichtungen vorgesehen sein, die für einen optimierten Wärmeeintrag in das Behandlungsmedium ausgebildet sind, wie beispielsweise Wärmeleitbleche und/oder Fluidverbindungen mit erhöhter Oberflächengeometrie wie beispielsweise mehrere, parallel angeordnete Röhren.

Ein Wärmereaktor kann zumindest in Teilen der Vorrichtung als Wärmetauscher und/oder als Durchlauferhitzer betrachtet werden. Ein Wärmereaktor ist bevorzugt so gestaltet, dass er Behandlungsmedium von einer Position in eine andere allein durch Wärmezuführung bewegen kann.

In manchen Ausführungsformen kann ein Wärmereaktor mit weiteren Vorrichtungen bevorzugt zur Energieeintragung und/oder zur Steigerung der Partikel- und/oder Molekülbewegung innerhalb des Wärmereaktors ausgestattet sein, wie beispielsweise mit mindestens einem Schallgenerator, einem Ultraschallgenerator, einer Schwingungsvorrichtung, einem Magnetfeld-Generator, einem Mikrowellengenerator, einem Hochspannungsgenerator einem Plasmagenerator, einer Infrarotstrahlungsquelle, einer UV-Lichtquelle und/oder einer Laserquelle.

In manchen Ausführungsformen ist ein Wärmereaktor zerlegbar ausgeführt, wie beispielsweise werkzeuglos zu öffnen, um Behandlungsmedium einzufüllen, wobei das Befüllen mit Behandlungsmedium bevorzugt mittels Kapseln geschieht, die als Einwegkartuschen ausgeführt sein können.

In einigen Ausführungsformen kann der Wärmereaktor zum Nachfüllen mit Behandlungsmedium nicht geöffnet werden, sondern wird dieser durch das obere Ende und/oder durch einen dafür vorgesehenen Einfüllbereich mit Behandlungsmedium befüllt, bevorzugt in einer vordefinierten Menge.

In manchen Ausführungsformen kann der Wärmereaktor mit mehr Behandlungsmedium befüllt werden, als wie es für einen Behandlungszyklus notwendig wäre, beispielsweise um bis zu 50 % mehr, bevorzugt bis zu 20 % mehr, als für den aktuellen Zyklus berechnet und/oder vorherbestimmt. Zum Entfernen des auf diese Weise im Wärmereaktor verbleibenden Behandlungsmediums nach dem Behandlungszyklus kann der Wärmereaktor mit einem Abführventil ausgestattet sein, um auf diese Weise manuell oder automatisiert nach einem durchlaufenen Behandlungszyklus überschüssiges Behandlungsmedium zu entfernen.

In einigen Ausführungsformen kann die Aufnahmevorrichtung für das Behandlungsmedium mit der Kammer zur Aufnahme von Polymerelementen über mindestens ein dazwischengeschaltetes Maschinenelement verbunden sein, welches ein temporäres Verschließen und/oder Öffnen der fluidischen Verbindung zwischen der Kammer und der Aufnahmevorrichtung für das Behandlungsmedium bewirken kann, wobei das Verschließen und/oder Öffnen von dem Maschinenelement (mechanisch) selbstregulierend ausgeführt und/oder von einer Steuervorrichtung über einen Aktor geschalten werden kann.

In manchen Ausführungsformen kann die Aufnahmevorrichtung für das Behandlungsmedium mit der Kammer zur Aufnahme von Polymerelementen über mindestens ein dazwischengeschaltetes Maschinenelement verbunden sein, welches ein temporäres Verjüngen mindestens eines Querschnitts der fluiden Verbindung dieser beiden Räume erwirken kann, z. B. eine Drossel, ein Ventil, ein Kugelhahn oder Blende.

In manchen Ausführungsformen ist das Behandlungsmedium eines der folgenden Lösungsmittel oder ein Lösungsmittelgemisch aus diesen:
- un-, einfach und mehrfach subsituierte Alkohole (beispielsweiße Methanol, Ethanol, Isopropanol, 1-Propanol, tert-Butanol, 1-Pentanol, Isoprenol, Propylenglykol, Neopentylglycol, 3-Methyl-1-butanol, 3-Methyl-1,3-butanediol, 3-Methyl-1-butanol, 2-methyl-1,3-pentanediol, 3-methyl-1,5-pentanediol, 1,6-Hexandiol, 1-Octanol, 2-Octanol, 3-Octanol, 4-Octanol, 3-Methyl-3-octanol, C9-11 Alkohole, Benzylalkohol, Phenethylalkohol, Butylhydroxytoluol, m-Cresol, Hexaflourisopropanol, Terpenoide, insbesondere Thymol und Carvacrol, Acyclische Monoterpene, insbesondere Linalool, Nerol und Lavandulol, Monoterpen-Alkohole, etwa Menthol, Isopulegol, Terpineole (a-, β-, g- und d-Terpineol), 4-Terpinenol (Terpinen-4-ol), trans-p-Menthan-8-ol, Carvacrol, Bomeole und Geraniol, Alkylphenole aus Lignin, insbesondere 1-Phenylethanol, Guajacol, 4-Methylguaiacol, 4-Ethylguaiacol, 4-Methoxya-methylbenzylalkohol und Salicylsäuremethylester, einund mehrfach alkoxylierte Alkohole, insbesondere 3-Methoxy-3-methyl-1-butanol, 1-Methoxy-2-propanol, 3-iso-Propoxy-1-butanol und 2-Methoxy-1-propanol)
- un-, einfach und mehrfachsubstituierte Carbonsäuren (beispielsweise Ameisensäure, Essigsäure, Trifluoressigsäure und Lävulinsäure, Diphenylisophtalat, Diphenylterephtalat)
   - un-, einfach und mehrfach subsituierte azyklische oder zyklische Carbonsäurester (beispielsweiße Acrylsäureester, besonders 1,6-Hexandioldiacrylat, Benzylformiat, Benzoesäuremethylester, Benzoesäureethylester, Essigsäurebenzylester, Essigsäurezimtester, Isovaleriansäure-2-methylbutylester, Lactone, insbesondere d-Decalacton, g-Decalacton, g-Octalactone, g-Valerolacton, d-Dodecalacton, d-Nonalacton, d-Tetradecalacton, g-Dodecalacton, g-Hexalacton, g-Nonanolacton und g-Butyrolacton, alkoxylierte Carbonsäurester, besonders Ethyl-3-ethoxypropionat, 3-Methoxy-3-Methyl-1-Butanol Acetat, Dibasische Ester, besonders Adipinsäuredimethylester, Adipinsäurediethylester, Glutarsäuredimethylester, 2-Methylglutarsäuredimethylester, Bernsteinsäuredimethylester und Bernsteinsäurediethylester, Milchsäureester, besonders Milchsäureethylester und Milchsäuremethylester, Essigsäurepentylester (Amylacetat), Essigsäurebutylester, Buttersäurehexylester, Essigsäurebenzylester, Essigsäureisopentylester, Glykolsäure-n-butylester Terpenoidester, insbesondere Linalylacetat, Geranylacetat, Lavandulolacetat und Geraniolbutyrat, ein- und mehrfach alkoxylierte Carbonsäureester insbesondere 3-methyl-1,3-butanediol-acetate, 3-Methoxy-3-methylbutylacetat, 3-Methoxy-1-Butylacetat, 1-Methoxy-2-propylacetat und 2-(Butyryloxy)propionsäurebutylester, Lösungsmittel die durch folgenden Formeln (d), (e) und (f) dargestellt werden: 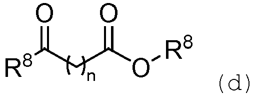 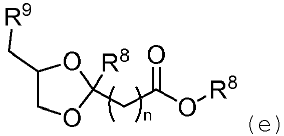 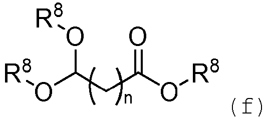 Wobei R⁸ unabhängig voneinander, identisch oder unterschiedlich, eine lineare, verzweigte oder zyklische Alkyl- oder Arylgruppe sein können; wobei R⁹ ein Wasserstoffatom, eine Hydroxyl-, eine lineare, verzweigte oder zyklische Alkyl- oder Arylgruppe sein kann; wobei n eine ganze Zahl von 0 bis 10 ist, besonders Laevulinsäure-ethylester, Laevulinsäurebutylester, Brenztraubensäure-ethylester, Phenylglyoxylsäure-ethylester, Ethyl-3-oxobutanoat, Ethyl-3-(2,4-dimethyl-1,3-dioxolan-2-yl)propanoat, Ethyl-3-[4-(hydroxymethyl)-2-methyl-1,3-dioxolan-2-yl]propanoat, 3,3-Dimethoxy-propionsäure-methylester, Diethoxyessigsäure-ethylester oder 3,3-Diethoxypropionsäure-ethylester)
- un-, einfach und mehrfach subsituierte Aldehyde oder Ketone (beispielsweise n-Butanal, Isobutanal, Aceton, Butanon, Cyclopentanon, Methylisobutylketon, Methylisohexenylketone, Benzaldehyd, Acetophenon, Monoterpen-Ketone und Monoterpen-Aldehyde, etwa D-Campher, L-Campher, Carvon, Nopionon, Norcampher, und Citronellal, Phenylpropanoide insbesondere Zimtaldehyd, ein- und mehrfach hydroxylierte Ketone, besonders Diacetonalkohol)
- un-, einfach und mehrfach subsituierte Acetale oder Ketale (beispielsweise Acetaldehyd Diethylacetal, Formaldehyd Dibutylacetal, 2,2-Dimethoxy-ethylamin, Acrolein-Diethylacetal, Phenylacetaldehyd Dimethylacetal, Anisaldehyd Dimethylacetal, Citral-Diethylacetal, Isopropylidenglycerin)
   - un-, einfach und mehrfach subsituierte zyklische oder azyklische Ether (beispielsweiße Pyran, 4-Methyltetrahydropyran, Tetrahydro-2-isobutyl-4-methylpyran-4-ol, Oxepan, Cyclopentylmethylether, Anisol, 2,5-Dimethylisosorbid, Diphenylether, Furanbasierte Ether wie Furane, 2-Amylfuran, Tetrahydrofurane, besonders 2-Methyltetrahydrofuran, Tetrahydro-2-methyl-3-furanon, Terpenoide, insbesondere 1,8-Cineol, 1,4-Cineol, cis-(+)-Limonen-l,2-oxid, trans-(+)-Limonen-l,2-oxid, Limonen-l,2:8,9-dioxide (Gemisch), a-Pinenoxid, und β-Pinenoxid und Phenylpropanoide, insbesondere Anethol, Apiol, Dillapiol und Estragol
   - Lösungsmittel die durch folgende Formel (g) dargestellt werden: 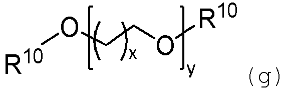 Wobei R¹⁰ unabhängig voneinander, identisch oder unterschiedlich, ein Wasserstoffatom, eine lineare, verzweigte oder zyklische Alkyl-, Acetyl, Benzoyl oder Arylgruppe sein kann; wobei x eine ganze Zahl von 0 bis 17 ist; wobei y eine ganze Zahl zwischen 1 und 6 ist, insbesondere Propylenglykol-n-butylether, Triethylenglycolmonoethylether, Triethylenglycolmonomethylether, Ethylenglycoldimethylether, Glycolether, Tripropylenglykolmonomethylether, Dipropylenglycolmethylether, Dipropylenglykolmethylether-acetat, Dipropylenglykoldimethylether, Butylglykolacetat, Butyldiglykolacetat, Propylglykol, Tripropylenglykol, Ethylenglycolmonobutylether, Diethylenglykolmonobutylether, Triethylenglycolmonobutylether, DiethyleneGlycol Monohexyl Ether, Diethylene glycol n-butyl ether acetate, Propylene glycol methyl, ether acetate, 2-Ethoxyethyl acetate, Ethylene glycol phenyl ether, Propylene glycol phenyl ether, Dipropylene Glycol n-Propyl Ether, Tripropylenglykol-n-butylether, Dipropylenglykol und Ethylenglykoldiacetat)
- un-, einfach und mehrfach substituierte offenkettige oder zyklische Kohlenwasserstoffe (beispielsweise Cycloalkane, insbesondere Cyclohexan, n-Alkane und iso-Alkane , insbesondere Hexan, Heptan, Petroleum, Paraffine, ISO-Paraffine, Diethylbenzol, Diethylbenzol Misch-Isomere (1,4-Diethylbenzol, 1,3-Diethylbenzol, und 1,2-Diethylbenzol), Hexadecan, acyclische Monoterpene, insbesondere Myrcen (7-Methyl-3-methylen-l,6-octadien), Ocimen (3,7-Dimethyl-l,3,6-octatrien) und Cosmen, Cyclische Monoterpene, insbesondere p-Menthan, p-Cymol, β-Phellandren, a- Phellandren, D-Limonen, L-Limonen, Dipenten (Racemisches Gemisch), a-Terpinen, g-Terpinen, Terpinen (Stoffgemisch), Pinene (a-Pinen, β-Pinen sowie d-Pinene), Pinan, Menthen, Camphen, Isobornylan, Isocamphan, Bornan, d-Terpinen (Terpinoien), Sabinen, a-Thujen, β-Thujen, Caran, Carene (3- Caren, 2-Caren), Fenchan, a-Fenchen, und ß-Fenchen, Diterpene, insbesondere Neocembren (Cembrene A), Sesquiterpene, insbesondere Valencene )
- zyklische und azyklische Kohlensäureester (Ethylencarbonat, Propylencarbonat, Kohlensäuredimethylester, Kohlensäurediethylester, Kohlensäurediphenylester)
   - un-, einfach und mehrfach subsituierte zyklische oder azyklische Carbonsäureamide (beispielsweise Dimethylacetamid, N-Methyl-2-pyrrolidon, N-Ethylpyrrolidone, Dimethylformamid, Lactame, besonders N-Methyl-2-pyrrolidon, N-Ethyl-2-pyrrolidon, N-Butyl-2-pyrrolidon, N-Cyclohexyl-2-pyrrolidon)
- Monoterpene mit Heteroatomen wie Menth-1-en-8-thiol und Eukalyptusöl
- Phenylpropene (Eugenol, Safrol, Myristicin, Elemicin, Estragol)
- Vanillin, Anisolacetat und Isoeugenol, Dimethylsulfoxid, Dimethylsulfon, Sulfolan, Acetonitril, Dichlormethan, Adipoyldichlorid, 1,6-Diaminohexan, Isopropyltetradecanoat, Cyrene^{™} /2-Methyltetrahydrofuran Blend, Cyrene^{™} /γ-Valerolactone Blend, Triethanolamin, Diisobutyl-Ester, Dimethyl-Ester, C9-11 Pareth-6, C12-15 Pareth 7, DOWCLENE^{™}* 16 Series Modified Alcohol, SENSENE^{™} Solvent, Rhodiasolv^{®} IRIS, GLYCAMAL^{®}, GLYCASOL^{®}, 1,6-Anhydro-3,4-dideoxy-β-D-glycero-hexanopyranos-2-ulose, Triethylphosphat, Methansulfonsäure, Schwefelsäure
- m-Terphenyl, p-Terphenyl, Mischungen aus Terphenyls, z. B., SANTOWAX R^{®} mixed terphenyls (^{®}trademark of the Monsanto Company), Mischungen aus teilweise hydrierten Terphenylen, z. B., THERMINOL 66^{®} partially hydrogenated terphenyls (^{®}trademark of the Monsanto Company), eine Mischung aus Terphenylen und Quaterphenylen,z. B., THERMINOL 75^{®} mixed terphenyls and quaterphenyls (^{®}trademark of the Monsanto Company), Quaterphenyle und Mischung aus diesen
- un-, einfach und mehrfach substituierte offenkettige oder zyklische Harnstoffe (beispielsweise 1,3-Dimethyl-2-imidazolidinon, 1,3.Diethyl-2-imidazolidinon, 1,3-Dimethylharnstoff)
- Fettsäuren, bevorzugt gesättigte Fettsäuren, wie beispielsweise Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure, Heneicosansäure, Behensäure, Lignocerinsäure, Cerotinsäure, Montansäure, Melissinsäure, Laccersäure, Geddinsäure oder Mischungen von Fettsäuren, untereinander und/oder mit anderen Stoffen

In manchen Ausführungsformen wird der Dampf des Behandlungsmediums nicht aus der Kammer abgeführt, auch nicht teilweise.

In einigen Ausführungsformen werden die Polymerelemente während des Verfahrens bewegt, z. B. geschüttelt, gedreht, rotiert oder umgewälzt, was zu einer besseren Benetzung ihrer Oberfläche mit dem Dampf des Behandlungsmediums führen kann. Eine entsprechende Vorrichtung wie z. B. ein Motor kann vorgesehen sein und z. B. von der Steuervorrichtung angeregt werden.

In manchen Ausführungsformen erfolgt die Oberflächenbehandlung zumindest zeitweise unter Unterdruck oder im Vakuum.

In manchen Ausführungsformen ist zwischen der Unterdruckquelle und der Kammer kein Kondensator vorgesehen.

In manchen Ausführungsformen weist die Vorrichtung nicht sowohl eine Kammer als Prozesskammer als auch eine Kammer zum zeitweisen Vorhalten des Behandlungsmediums, insbesondere in flüssiger Form, auf.

In einigen Ausführungsformen weist die Vorrichtung kein Abgabesystem für das Behandlungsmedium auf, das stromaufwärts der Kammer angeordnet ist, um das Behandlungsmedium in die Kammer mit den Polymerelementen einzuführen. Die Abgabe des Behandlungsmediums aus dem Wärmereaktor heraus, sofern vorhanden, ist hiervon nicht berührt.

In manchen Ausführungsformen weist die Vorrichtung kein Abgabesystem für das Behandlungsmedium auf, das angesteuert ist, um eine vorbestimmte Menge an Behandlungsmedium in die Kammer mit den Polymerelementen einzuführen.

In einigen Ausführungsformen weist die Vorrichtung ein Abgabesystem auf, das vorzugsweise stromaufwärts von der Kammer angeordnet und/oder gesteuert ist, zum Einführen einer nicht vorbestimmten oder nicht vorbestimmbaren Menge des Behandlungsmediums in die Kammer, oder zum Freisetzen einer nicht vorbestimmten oder nicht vorbestimmbaren Menge des Behandlungsmediums innerhalb der Kammer, z. B. aus einer in der Kammer bereits vorliegenden Kapsel, die z. B. geöffnet wird, so dass Behandlungsmedium oder dessen Dampf in nicht bestimmter oder nicht bestimmbarer Menge sich in der Kammer verteilen kann. Alternativ kann die Vorrichtung konfiguriert sein, eine nicht bestimmte oder nicht bestimmbare Menge des Behandlungsmediums oder dessen Dampfs aus einer Aufnahmevorrichtung für das Behandlungsmedium in die Kammer überzuführen.

In manchen Ausführungsformen weist die Kammer keine rotierbare Plattform oder kein rotierbares Gestell zum Auflegen oder Aufstellen der Polymerelemente auf, oder die Polymerelemente sind nicht hierauf oder hieran positioniert.

In einigen Ausführungsformen weist die Kammer keinen Zerstäuber zum Erzeugen eines Behandlungsmediumnebels auf, z. B. keinen Tröpfchenerzeuger, kein vibrierendes Element und/oder keinen Docht.

Wenn hierin nichts weiter beschrieben ist, dann beziehen sich Mengenverhältnisse wie beispielsweise jene von Behandlungsmedien oder Mischungen von Behandlungsmedien auf Masseangaben der einzelnen Medien oder Stoffe bzw. beziehen sich prozentuale Verteilungen beispielsweise von Behandlungsmedien auf Masse%-Angaben der einzelnen Stoffe oder Medien.

In manchen Ausführungsformen kann das Behandlungsmedium zusätzlich oder alternativ mindestens eine Säure, wie beispielsweise Zitronensäure, Apfelsäure, Essigsäure, Weinsäure, Phosphorsäure, Oxalsäure oder weitere Säuren und/oder wenigstens ein Salz, wie beispielsweise Natriumchlorid enthalten.

In einigen Ausführungsformen können Elemente nach der Behandlung einem mechanischen Nachbehandlungsschritt unterzogen werden, wie beispielsweise Strahlen, Schleifen, Gleitschleifen und/oder Polieren.

In manchen Ausführungsformen können Elemente vor und/oder nach der Färbung und/oder der Behandlung und/oder dem Funktionalisieren und/oder dem Glätten mit mindestens einem Behandlungsmedium einem thermischen Prozess unterzogen werden, wie beispielsweise das Lagern in einem Ofen oder einem Vakuumofen, bevorzugt bei Temperaturen zwischen 60°C und 200°C wie beispielsweise zwischen 80°C und 180°C.

In manchen Ausführungsformen können Elemente vor und/oder nach der erfindungsgemäßen Behandlung mindestens einem zusätzlichen Behandlungsschrittunterzogen werden, wie beispielsweise Tempern, Infiltrieren, Strahlen, Schleifen, Gleitschleifen und/oder Polieren.

In manchen Ausführungsformen können Elemente, die das Polymer Polyketon (PK) enthalten, auf eine besonders schonende und effiziente Weise behandelt, modifiziert, funktionalisiert, gefärbt sowie an der Oberfläche geglättet werden. Elemente aus oder mit Polyketon können durch verschiedene Verfahren der additiven Fertigung wie beispielswiese Materialextrusion oder einem Pulverbettverfahren wie einem selektiven Lasersinterverfahren hergestellt werden. Polyketon weist eine sehr gute chemische Beständigkeit gegenüber vielen Medien und Lösungsmitteln auf. Es wurde überraschenderweise gefunden, dass Elemente aus oder mit Polyketon ab einer Temperatur von etwa 110°, bevorzugt ab 130°C und besonders bevorzugt ab 145°C mit einem Behandlungsmedium aus Benzylalkohol, oder zumindest Anteile an Benzylalkohol enthaltend, behandelt werden können, und sich dabei eine positive Änderung der Oberflächeneigenschaften und -rauigkeiten einstellen kann und es insbesondere auch nach längerer Einwirkdauer von bis zu einigen Minuten, wie beispielsweise zwischen 1 Minuten und 20 Minuten, keine oder nahezu keine chemische Veränderung der Oberfläche und damit keinen zumindest nennenswerten Materialverzug gibt. Insbesondere kann durch ein Inkontaktbringen von Elementen aus oder mit Polyketon mit Benzylalkohol bei Temperaturen zwischen 130°C und 210°C, bevorzugt zwischen 135°C und 190°C und besonders bevorzugt zwischen 145°C und 170°C eine deutliche Reduzierung der Oberflächenrauigkeit und/oder eine vorteilhafte Funktionalisierung erzielt werden. Ein Inkontaktbringen von Elementen, welche zumindest in Teilen aus Polyketon bestehen, mit dem Behandlungsmedium Benzylalkohol oder einem Behandlungsmedium, welches vorzugsweise mindestens 30 Masse% Benzylalkohol enthält, kann dabei mit allen oder für alle bekannten Arten der Oberflächenbehandlung erfolgen. So kann Benzylalkohol oder ein Behandlungsmedium, welches vorzugsweise mindestens 30 Masse% Benzylalkohol enthält, z. B. durch Bedampfen, Benebeln, Sprühen, Tauchen, Pinseln und/oder Streichen zur Behandlung von Elementen aus Polyketon bevorzugt bei den oben genannten Temperaturen und/oder einer Unterdruckumgebung verwendet werden.

In manchen Ausführungsformen können Elemente, welche zumindest in Anteilen aus Polyketon gefertigt sind, durch einen Nebel- und/oder Dampfprozess, bevorzugt in einer Kammer mit vorherrschendem Unterdruck oder Vakuum, besonders bevorzugt zwischen 0,2 bar und 0,98 bar, behandelt werden, ganz besonders bevorzugt bei Behandlungstemperaturen zwischen 143°C und 168°C.

In bestimmten Ausführungsformen kann Benzylalkohol als erfindungsgemäßes Behandlungsmedium durch Propylencarbonat und/oder durch Citronensäuretriethylester und/oder durch N-Cyclohexyl-2-pyrrolidone (CHP) ersetzt oder durch diese ergänzt werden und entsprechend den eben beschriebenen Ausgestaltungen für die Behandlung von Elementen aus oder mit Polyketon verwendet werden, bevorzugt bei Temperaturen zwischen 70°C und 210°C, besonders bevorzugt zwischen 100°C und 200°C, wie beispielsweise zwischen 155°C und 195°C.

In manchen Ausführungsformen kann ein Polyamid wie beispielsweise PA12 oder PA11 mit einem Behandlungsmedium behandelt, geglättet und/oder funktionalisiert werden, welches mindestens ein Glykol wie Propylenglykol und/oder ein Acetal wie 1,2-Isopropylidenglycerin und/oder ein Ether wie 3-methoxy-3-methyl-1-butanol enthält, bevorzugt bei Temperaturen zwischen 141°C und 200°C, besonders bevorzugt bei Temperaturen zwischen 147°C und 180°C, wie beispielsweise zwischen 150°C und 173°C.

In einigen Ausführungsformen kann ein Thermoplastisches Elastomer oder ein Thermoplastisches Polyurethan wie beispielsweise Ultrasint^{®} TPU01 (BASF) mit einem Behandlungsmedium behandelt, geglättet und/oder funktionalisiert werden, welches mindestens ein Glykol wie Propylenglykol und/oder ein Acetal wie 1,2-Isopropylidenglycerin und/oder ein Ether wie 3-methoxy-3-methyl-1-butanol enthält, bevorzugt bei Temperaturen zwischen 100°C bis 180°C, besonders bevorzugt bei Temperaturen zwischen 105°C bis 148°C, wie beispielsweise zwischen 108°C und 135°C.

In einigen Ausführungsformen können Elemente, die aus Polyetherketonen hergestellt sind oder mindestens einen Polyetherketon enthalten, wie beispielsweise PEEK, PEK, PEKK oder PEAK, mit einem Behandlungsmedium, welches mindestens ein Cyclohexyl-2-pyrrolidone (CHP) oder mindestens ein Diethylbenzol enthält, behandelt werden. Bevorzugt kann Cyclohexyl-2-pyrrolidone (CHP) und/oder Diethylbenzol in flüssiger Form und/oder in Form von Nebel und/oder Dampf auf Elemente aus oder mit Polytherketon aufgebracht werden und dabei zu einer Verbesserung der Oberflächeneigenschaften wie beispielsweise zu einer Reduzierung der Oberflächenrauigkeit führen, wobei die Behandlungstemperaturen bei Cyclohexyl-2-pyrrolidone (CHP) bevorzugt über 150°C liegen sollten, besonders bevorzugt über 200°C, wie beispielsweise oberhalb von 220°C. Bei Diethylbenzol und/oder bei Mischungen, die mindestens 10 Masse% Diethylbenzol enthalten, bevorzugt mindestens 30 Masse% und besonders bevorzugt mindestens 50 Masse%, wie beispielsweise azeotrope Mischungen mit Diethylbenzol und mindestens einem weiteren Behandlungsmedium und/oder einer Säure, kann die Behandlungstemperatur mindestens 90°C betragen, bevorzugt mindestens 140°C, besonders bevorzugt mindestens 165°C und ganz besonders bevorzugt mindestens 180°C und/oder kann der Druck innerhalb einer Kammer mindestens 0,2 bar betragen, bevorzugt mindestens 0,25 bar, besonders bevorzugt mindestens 0,3 bar, wie beispielsweise mindestens 0,45 bar. Die Behandlungszeiten können bei Cyclohexyl-2-pyrrolidone (CHP)und/oder bei Diethylbenzol bis zu 90 Minuten betragen, bevorzugt zwischen 2 Sekunden und 30 Minuten, besonders bevorzugt zwischen 10 Sekunden und 15 Minuten, wie beispielsweise zwischen 20 Sekunden und 8 Minuten. Diethylbenzol bedeutet hierin entweder Misch-Isomere (1,4-Diethylbenzol, 1,3-Diethylbenzol, und 1,2-Diethylbenzol) oder ein einzelnes, reines Diethylbenzol-Isomer.

In manchen Ausführungsformen können Elemente behandelt werden, die zumindest in Anteilen aus einem Thermoplastischen Polyurethan (TPU) der Firma Lubrizol Corporation unter dem Markennamen ESTANE^{®} bestehen und/oder aus einem TPU mit einer äquivalenten Zusammensetzung. Es wurde überraschenderweise gefunden, dass Elemente, welche zumindest in Anteilen aus einem thermoplastischen Polyurethan wie dem der Lubrizol Corporation unter dem Markennamen ESTANE^{®}, wie beispielsweise unter der Bezeichnung ESTANE^{®} 3D TPU M95A thermoplastic polyurethane (TPU) und/oder einem chemisch vergleichbaren thermoplastischen Elastomer hergestellt sind, mit einem Behandlungsmedium behandelt werden können, welches zumindest in Anteilen n-butylpyrrolidon (NBP) enthält und auf diese Weise eine positive Veränderung der Oberflächeneigenschaften solcher Elemente wie beispielsweise eine Reduzierung der Oberflächenrauigkeit und/oder einer Veränderung der Oberflächenspannung und/oder die Möglichkeit einer Funktionalisierung einhergeht.

In einigen Ausführungsformen kann ein TPU, wie beispielsweise unter der Bezeichnung ESTANE^{®} 3D TPU mit n-butylpyrrolidon (NBP) bei Temperaturen zwischen 20° C und 200°C, bevorzugt zwischen 60°C und 180°C und besonders bevorzugt zwischen 90°C und 160°C, wie beispielsweise zwischen 95°C und 145°C, behandelt und/oder geglättet werden.

In manchen Ausführungsformen können Elemente aus ESTANE^{®} 3D TPU M95A durch einen Dampf- und/oder Nebelprozess bevorzugt in einer Kammer mit vorherrschendem Unterdruck oder Vakuum erfindungsgemäß mit einem Behandlungsmedium behandelt werden, welches mindestens n-butylpyrrolidon (NBP) enthält.

In manchen Ausführungsformen kann bei Nebel- und/oder Dampfprozessen, also bei Behandlungen von Elementen, bei denen das Behandlungsmedium zumindest teilweise und/oder zeitweise in Nebel- und/oder Dampfform vorliegt, innerhalb der Behandlungskammer ein Überdruck herrschen, verglichen zum Umgebungsdruck, wie beispielweise bis zu 2 bar.

In bestimmten Ausführungsformen kann das Gas oder Restgas innerhalb der Behandlungskammer Luft sein oder Luft enthalten, in anderen Ausführungsformen kann das Gas oder Restgas ein Schutzgas wie Stickstoff sein oder zumindest ein solches enthalten. Ein Inkontaktbringen von Elementen, welche zumindest in Teilen aus ESTANE^{®} 3D TPU M95A bestehen mit n-butylpyrrolidon (NBP) oder einem Behandlungsmedium, welches mindestens 20 Masse% n-butylpyrrolidon enthält, kann dabei mit allen bekannten Arten der Oberflächenbehandlung erfolgen. So kann n-butylpyrrolidon oder ein Behandlungsmedium, welches mindestens 20 Masse% n-butylpyrrolidon enthält, durch Sprühen, Tauchen, Pinseln und/oder Streichen zur Behandlung von Elementen aus ESTANE^{®} 3D TPU verwendet werden. Die Temperaturen können dabei zwischen 20°C und 180°C liegen, bevorzugt zwischen 80°C und 160°C wie zwischen 90°C und 140°C.

In manchen Ausführungsformen können Elemente aus einem thermoplastischen Elastomer wie ESTANE^{®} 3D TPU mit einem Behandlungsmedium, das zumindest Anteile an n-butylpyrollidon (NBP) enthält, wie beispielsweise mindestens 25 Masse% oder mindestens 50 Masse% n-butylpyrollidon (NBP), mit Behandlungsmethoden in flüssiger Form besonders bevorzugt bei Temperaturen unter 110°C behandelt werden, und im Nachgang einer Wärmebehandlung als einen weiteren Verfahrensschritt unterzogen werden. Eine Kontaktierung in flüssiger Form kann beispielsweise durch tauchen, sprühen, pinseln und/oder durch benebeln beispielsweise mittels eines Ultraschallerzeugers durchgeführt werden, bevorzugt bei Temperaturen zwischen 10°C und 180°C, besonders bevorzugt zwischen 20°C und 80°C und/oder beispielsweise für Zeiten bis zu 120 Minuten, bevorzugt zwischen 5 Sekunden und 30 Minuten. Die anschließende Wärmebehandlung kann unmittelbar danach oder mit einer zeitlichen Pause von wenigen Minuten bis zu vielen Stunden, wie beispielsweise bis zu 48 Stunden, durchgeführt werden, und ist daher nicht kritisch, solange die Elemente im Bereich der Raumtemperatur oder darunter oder leicht darüber gelagert werden. Die Wärmebehandlung kann in einem Ofen oder einem Vakuumofen bei bevorzugten Temperaturen zwischen 40°C und 200°C, besonders bevorzugt zwischen 55°C und 150°C und/oder bei bevorzugten Zeiten zwischen 3 Minuten und 24 Stunden, besonders bevorzugt zwischen 15 Minuten und 8 Stunden durchgeführt werden, bei konstanten, steigenden und/oder variierenden Temperaturen oder Temperaturverläufen. Besonders bevorzugt ist das eben beschriebene Verfahren für dünnwandige Elemente aus einem TPU wie ESTANE^{®} TPU anzuwenden, welches zumindest in größeren Abschnitten wie mehr als 1 Quadratzentimeter Fläche Wandstärken von unter 2 mm, bevorzugt kleiner 1,5 mm und besonders bevorzugt kleiner 1 mm aufweisen, wie beispielsweise flächige Bereiche von mehr als 3 Quadratzentimeter und einer Materialdicke im Bereich von 0,8 mm. Auch die Kombination bzw. eine zeitliche Abfolge mindestens eines Sprüh- oder Tauchprozesses und mindestens eines Nebel- oder Dampfprozesses (auch in umgekehrter Reihenfolge) zur Behandlung von Elementen aus ESTANE^{®} mit Behandlungsmedien, welche zumindest n-butylpyrrolidon (NBP) enthalten, ist von der Erfindung umfasst.

In einigen Ausführungsformen kann ein thermoplastisches Polyurethan (TPU), wie das der Firma Lubrizol Corporation unter dem Markennamen ESTANE^{®} 3D TPU mit einem Behandlungsmedium behandelt werden, bei dem n-butylpyrrolidon (NBP) durch Benzylalkohol, durch 3-methoxy-3-methyl-1-butanol, durch Citronensäuretriethylester oder durch eine Mischung von Propylenglykol und Citronensäuretriethylester ersetzt oder ergänzt wird, sowohl in reiner Form, wie auch optional als Mischung mit anderen Behandlungsmedien, wie beispielsweise Mischungen mit mindestens 50 Masse% mindestens eines der eben genannten Behandlungsmedien. Der Fachmann kann dabei die Ausführungsformen wählen, wie sie oben stehend für die Behandlung von ESTANE^{®} TPU mit n-butylpyrrolidon (NBP) beschrieben und ausgeführt wurden. Besonders bevorzugt können dabei angepasste Temperaturen verwendet werden, wie beispielsweise für Benzylalkohol oder Mischungen mit Benzylalkohol, bevorzugt azeotrope Mischungen, zwischen 110°C und 200°C und bevorzugt zwischen 141°C und 180°C, für 3-methoxy-3-methyl-1-butanol oder Mischungen daraus zwischen 100°C und 200°C und bevorzugt zwischen 144°C und 185°C, für Citronensäuretriethylester oder für eine Mischung aus Citronensäuretriethylester und Propylenglykol zwischen 100°C und 210°C und bevorzugt zwischen 140°C und 190°C.

In manchen Ausführungsformen kann D-Limonene oder 1,8-Cineol als Behandlungsmedium für Elemente, die zumindest anteilig Polypropylen (PP) enthalten, verwendet werden. Es wurde überraschenderweise gefunden, dass Elemente aus Polypropylen (PP) bei der Behandlung mit D-Limonene und/oder mit 1,8-Cineol bei Temperaturen über 80°C, bevorzugt über 100°C und besonders bevorzugt über 115°C, eine Reduzierung der Oberflächenrauigkeit und/oder eine Veränderung der Oberflächenspannung aufweisen können und/oder so behandelte Elemente einer Funktionalisierung unterzogen werden und/oder dafür vorbereitet werden können.

In manchen Ausführungsformen kann 3-methoxy-3-methyl-1-butanol acetat (MMB-Ac) als Behandlungsmedium für Elemente, die zumindest anteilig Polypropylen (PP) enthalten, verwendet werden. Es wurde überraschenderweise gefunden, dass Elemente aus Polypropylen (PP) bei der Behandlung mit 3-methoxy-3-methyl-1-butanol acetat (MMB-Ac) bei Temperaturen über 85°C, bevorzugt über 100°C und besonders bevorzugt über 115°C, eine Reduzierung der Oberflächenrauigkeit und/oder eine Veränderung der Oberflächenspannung aufweisen können und/oder so behandelte Elemente einer Funktionalisierung unterzogen werden und/oder dafür vorbereitet werden können.

In einigen Ausführungsformen sind keine Pumpe und/oder kein Einspritzmittel vorgesehen, um das Behandlungsmittel aus dem Wärmereaktor in die Kammer überzuführen.

In manchen Ausführungsformen sind kein Ventil oder kein Deckel oder anderes Verschlussmittel vorgesehen, das betätigt werden müsste, um Behandlungsmitteldampf aus dem Wärmereaktor in die die Kammer überführen oder eintreten lassen zu können.

In einigen Ausführungsformen ist kein Kondensator vorgesehen, zwischen der Unterdruckquelle und der Kammer, insbesondere nicht, um einen kondensierten Teil des Behandlungsmediums und einen nicht-kondensierten Teil des Behandlungsmediums zu schaffen oder zu trennen.

In manchen Ausführungsformen ist keine weitere Kammer vorgesehen, um den nicht-kondensierten Teil des Behandlungsmediums von dem Kondensator zu erhalten, um dieses wiederum in einen kondensierten Teil und einen nicht-kondensierten Teil überzuführen oder zu trennen.

In einigen Ausführungsformen ist keine weitere Kammer vorgesehen, welche in Fluidverbindung mit der Kammer zur Behandlung der Polymerelemente steht, um einen nicht-kondensierten Anteil erneut der Kammer zuzuführen.

In einigen Ausführungsformen ist die Vorrichtung derart ausgestaltet, dass ein einmal kondensiertes Behandlungsmedium nicht erneut der Kammer und/oder einem Behälter zugeführt wird, aus dem Behandlungsmedium für eine Behandlung oder eine erneute Behandlung der Polymerelementen im Einsatz entnommen wird.

In manchen Ausführungsformen ist die Steuervorrichtung programmiert, um während des Absaugens von Behandlungsmedium aus der Kammer Luft und/oder Gas zumindest temporär zuzuführen, um auf diese Weise einen vorbestimmten Druck in der Kammer zu erzielen und/oder zumindest ansatzweise aufrecht zu erhalten. Dies kann mittels des hierin offenbarten, steuerbaren und/oder regelbaren Ventils erfolgen. Auf diese Weise kann Behandlungsmedium oder dessen Dampf aus der Kammer entzogen werden, ohne dass sich der in Kammer herrschende Druck in unerwünschtem Maße verändert.

In einigen Ausführungsformen sind zwei, drei oder mehr Heizzonen des Wärmereaktors stromaufwärts zur Kammer gelegen und hintereinander und/oder in Reihe angeordnet.

In manchen Ausführungsformen sind mindestens zwei Heizzonen des Wärmereaktors auf voneinander verschiedene Temperaturen steuerbar oder/oder regelbar (eine also höher als die andere), und optional auch entsprechend mittels der Steuervorrichtung hierzu veranlasst. Vorzugsweise stellt im Gebrauch dabei eine Heizzone, welche näher an der Kammer angeordnet ist, eine höhere Temperatur bereit als eine andere, welche weiter von der der Kammer entfernt ist.

In einigen Ausführungsformen hat der Wärmereaktor zumindest in dem Bereich, in welchem er mit Behandlungsmedium in Kontakt kommt, eine bevorzugt längliche und/oder zumindest überwiegend konzentrischen Anordnung. Das Verhältnis von Länge zu Breite und/oder Länge zu Durchmesser beträgt bevorzugt mindestens 5:1, bevorzugt mindestens 10:1, und besonders bevorzugt mindestens 15:1.

In manchen Ausführungsformen ist der Wärmereaktor aus mindestens einem röhrenförmigen Maschinenelement gebildet oder weist ein solches auf, bevorzugt zumindest in Teilen aus mindestens einem Rohr mit einem Innendurchmesser und/oder einer Diagonale zwischen 4 mm und 50 mm, besonders bevorzugt zwischen 8 mm und 40 mm und ganz besonders bevorzugt zwischen 12 mm und 30 mm und/oder mit einer Wandstärke zwischen 0,5 mm bis 15 mm, bevorzugt zwischen 1 mm und 10 mm und besonders bevorzugt zwischen 1,5 mm und 5 mm.

In einigen Ausführungsformen hat der Wärmereaktor eine Länge von mindestens 150 mm, bevorzugt von mindestens 200 mm, besonders bevorzugt von mindestens 250 mm, und ganz besonders bevorzugt von mindestens 300 mm.

In manchen Ausführungsformen weist der Wärmereaktor in seinem Inneren Vorrichtungen zur verbesserten Wärmeübertragung auf, wobei solche Vorrichtungen bevorzugt aus Blechen und/oder Extrusionsprofilen bestehen und/oder solche Vorrichtungen zumindest teilweise aus Metall, bevorzugt aus einer Aluminiumlegierung, gebildet sind.

In einigen Ausführungsformen ist der Wärmereaktor an seinem unteren distalen Ende im Gebrauch bevorzugt werkzeuglos zu öffnen und wieder druckdicht zu verschließen. Dies kann bevorzugt über einen Schraubverschluss und/oder einen linearen oder kurvenförmigen Verschlussmechanismus erfolgen. Ein vom Wärmereaktor lösbares Maschinenelement kann als Aufnahme dazu ausgebildet sein, Behandlungsmedium aufzunehmen, bevorzugt in einer bestimmten Menge, besonders bevorzugt durch mit Behandlungsmedium vorkonfektionierte Kartuschen oder Kapseln.

In manchen Ausführungsformen kann Wärmereaktor im erfindungsmäßigen Gebrauch im Bereich seines unteren oder distalen Endes nicht geöffnet, sondern allein von der gegenüberliegenden Seite, welches der Kammer zugeordnet ist, mit Behandlungsmedium befüllt werden.

In einigen Ausführungsformen weist der Wärmereaktor an seinem unteren oder distalen Ende ein Ventil auf, um nach der Behandlung optional im Wärmereaktor verbleibendes Behandlungsmedium ablassen zu können.

In manchen Ausführungsformen weist der Wärmereaktor mehrere röhrenförmige Maschinenelemente auf, die in Längsrichtung parallel zueinander angeordnet sind.

Die Innendurchmesser und/oder die inneren Diagonalen dieser Maschinenelemente können zwischen 2 mm und 20 mm betragen, bevorzugt zwischen 3 mm und 15 mm, besonders bevorzugt zwischen 4 mm und 12 mm, und ganz besonders bevorzugt zwischen 5 mm und 10 mm. Ihre Längen können mindestens 50 mm betragen, bevorzugt mindestens 100 mm, besonders bevorzugt mindestens 150 mm und ganz besonders bevorzugt mindestens 200 mm.

In manchen Ausführungsformen weist die Vorrichtung eine Magnetkupplung auf, die dazu ausgebildet ist, eine Drehbewegung von einem außerhalb der Kammer angeordneten Motor in die Kammer zu übertragen. Hierzu kann sie einen Magnetantrieb zum Erzeugen eines Magnetfeldes und einen Magnetfeldabnehmer aufweisen, wie hierin offenbart.

In einigen Ausführungsformen weist die Magnetkupplung, mindestens zwei außerhalb der Kammer befindliche Permanentmagneten und mindestens einem innerhalb der Kammer angeordneten, ferromagnetischen Abnehmer für das von den Permanentmagneten ausgebildete Magnetfeld auf. Permanentmagnete und der ferromagnetische Abnehmer verfügen vorzugsweise über eine gemeinsame Drehachse.

In manchen Ausführungsformen sind die Pole der beiden Permanentmagneten in umgekehrter Reihenfolge angeordnet.

In einigen Ausführungsformen beträgt der Abstand von den Mittelpunkten der beiden Permanentmagnete zwischen 35 mm und 150 mm, bevorzugt zwischen 450 mm und 110 mm und besonders bevorzugt zwischen 50 mm und 80 mm

In einigen Ausführungsformen sind zwischen den Permanentmagneten und dem mindestens einen, zumeist ferromagnetischen, Magnetfeldabnehmer eine thermisch isolierende Vorrichtung vorhanden, um die Wärmemenge, die der Permanentmagnet aus Richtung der Kammer erfährt, zu reduzieren.

In manchen Ausführungsformen sind die thermisch isolierenden Vorrichtungen aus dünnen, platten- und/oder folienförmigen Materialen ausgestaltet.

In einigen Ausführungsformen ist zwischen der mindestens einen thermisch isolierenden Vorrichtung und dem Boden der Kammer ein Spalt vorgesehen. Er kann eine zusätzliche thermische Isolierwirkung bewirken.

In manchen Ausführungsformen ist der innerhalb der Kammer angeordnete Abschnitt der Magnetkupplung aus mindestens einem wellenförmigen Maschinenelement gebildet oder weist ein solches auf, welches im Bereich eines distalen Endes zur Aufnahme mindestens eines Propellers und/oder einer Verwirbelungsvorrichtung ausgebildet ist und/oder wobei bevorzugt im Bereich eines gegenüberliegenden distalen Endes ein Magnetfeldabnehmer angeordnet ist, bevorzugt in zumindest überwiegend rechtwinkliger Orientierung, wobei das wellenförmige Maschinenelement optional am distalen Ende des Magnetfeldabnehmers mit einer planseitigen Geometrie ausgestattet ist, bevorzugt mit einer spitzen und/oder balligen Geometrie, wobei die axiale Lagerung mit einem Lagerungspartner im Bereich der Innenwandung interagiert.

In einigen Ausführungsformen weist das wellenförmige Maschinenelement zumindest in Teilen einen Durchmesser zwischen 3 mm und 10 mm auf, bevorzugt zwischen 4 mm und 8 mm, und besonders bevorzugt zwischen 4 mm und 6 mm, besonders bevorzugt im Bereich einer radialen Lagerung.

In manchen Ausführungsformen ist das wellenförmige Maschinenelement zumindest in großen Teilen aus Edelstahl gebildet und am distalen Ende auf der Seite der Innenwandung mit einer Spitze und/oder einer Kugel versehen, wobei der gegenüberliegende, axiale Lagerungspartner bevorzugt aus einem Polymer gebildet ist, besonders bevorzugt aus einem Hochtemperaturpolymer und/oder aus einem Trockengleitkunststoff.

In einigen Ausführungsformen ist der mindestens eine Propeller und/oder die mindestens eine Verwirbelungsvorrichtung im Bereich der der Innenwandung abgewendeten Seite des mindestens einen wellenförmigen Maschinenelements angeordnet, wobei das wellenförmige Maschinenelement Vorrichtungen aufweist, um ein Drehmoment auf den Propeller zu übertragen.

In manchen Ausführungsformen weisen Propeller und/oder Verwirbelungsvorrichtung Geometrien auf, um innerhalb der Kammer Strömungen zu bewirken, wobei diese Strömungen in definierten Bereichen zumindest überwiegend laminar ausgebildet sind, und in anderen Bereichen eine zumindest überwiegend turbulente Strömung aufweisen, bevorzugt im näheren Bereich der Polymerelemente.

In einigen Ausführungsformen sind Propeller und/oder Verwirbelungsvorrichtung zumindest in Teilen additiv gefertigt, bevorzugt aus einem Polymermaterial, das gegen die Temperaturen und Chemikalien während der Behandlung beständig ist.

In manchen Ausführungsformen weist die Vorrichtungen zur gezielten Änderung der Strömungseigenschaften innerhalb der Kammer auf, wobei diese an der Innenwandung der Kammer angebracht sind und/oder Teil dieser sind.

In einigen Ausführungsformen weist die Baugruppeneinheit, welche bevorzugt werkzeuglos aus der Kammer entfernbar oder herausnehmbar ist, bevorzugt mindestens eines der folgenden Maschinenelemente auf: Gestell, wellenförmiges Maschinenelement, Propeller und/oder Verwirbelungsvorrichtung, ferromagnetischer Abnehmer für Magnetfelder, Schutzvorrichtung für Propeller, Auflage-Aufspann- und/oder Aufhängevorrichtung für die Polymerelemente, Vorrichtung und/oder Maschinenelement zur Änderung der Strömungseigenschaften.

In manchen Ausführungsformen hat das Ventil zum Einführen von Luft und/oder Gas in die Kammer eine Querschnittsfläche von mindestens 1 mm², bevorzugt von mindestens 3 mm² und besonders bevorzugt von mindestens 5 mm², wie beispielsweise zwischen 6 mm² und 10 mm².

In einigen Ausführungsformen hat das Ventil zum Einführen von Luft und/oder Gas in die Kammer eine Querschnittsfläche oder einstellbare Querschnittsfläche, die sich zur Querschnittsfläche oder einstellbaren Querschnittsfläche des Ventils, welches in der Leitung, welche von der Unterdruckleitung abzweigt, angeordnet ist, in einem Verhältnis zwischen 100:1 und 2:1, bevorzugt zwischen 50:1 und 5:1, ganz besonders bevorzugt zwischen 30:1 und 5:1 verhält.

Manche oder alle erfindungsgemäßen Ausführungsformen können einen, mehrere oder alle der oben und/oder im Folgenden genannten Vorteile aufweisen.

Ein Vorteil der vorliegenden Erfindung kann darin bestehen, dass erfindungsgemäß nur eine Kammer für das erfindungsgemäße Verfahren benötigt wird. Hierdurch kann wenigstens eine zweite Kammer sowie die notwendigen Leitungen, Pumpen usw. zwischen den Kammern oder für die weitere(n) Kammer(n) eingespart werden. Hierdurch werden mittelbar Kosten eingespart.

Dadurch, dass bei der vorliegenden Erfindung mehrere Heizvorrichtungen zum Einsatz kommen können, wird das Verfahren zur Behandlung von Polymerelementen vorteilhaft deutlich genauer kontrollierbar.

Alle mit den erfindungsgemäßen Verfahren erzielbaren Vorteile lassen sich in bestimmten erfindungsgemäßen Ausführungsformen ungeschmälert auch mit den erfindungsgemäßen Vorrichtungen erzielen, und umgekehrt.

Im Folgenden wird die vorliegende Erfindung unter Bezugnahme auf die beigefügten Figuren rein exemplarisch beschrieben. In ihnen bezeichnen gleiche Bezugszeichen gleiche oder ähnliche Komponenten. Es wird in der Beschreibung der Figuren jeweils auf die Ausführungen zu den vorausgehenden Figuren Bezug genommen, um Wiederholungen zu vermeiden. Es gilt:
- **Fig. 1**: zeigt die erfindungsgemäße Vorrichtung in einer ersten beispielhaften Ausführungsform;
- **Fig. 2**: zeigt die erfindungsgemäße Vorrichtung in einer weiteren beispielhaften Ausführungsform;
- **Fig. 2a**: zeigt die erfindungsgemäße Vorrichtung der Fig. 2 mit einer alternativen Aufnahmevorrichtung für das Behandlungsmedium;
- **Fig. 3**: zeigt die erfindungsgemäße Vorrichtung in einer dritten beispielhaften Ausführungsform;
- **Fig. 4**: zeigt die erfindungsgemäße Vorrichtung in einer vierten beispielhaften Ausführungsform;
- **Fig. 5**: zeigt eine Aufnahmevorrichtung für das Behandlungsmedium, wie sie in einer Kammer der erfindungsgemäßen Vorrichtung angeordnet sein kann;
- **Fig. 6**: zeigt die erfindungsgemäße Vorrichtung der Fig. 3 mit einer alternativen, externen Anordnung der Aufnahmevorrichtung für das Behandlungsmedium;
- **Fig. 7**: zeigt die Heizvorrichtung für eine erfindungsgemäße Vorrichtung in einer Ausführungsform, hier als Wärmereaktor;
- **Fig. 7a**: zeigt die Heizvorrichtung für eine erfindungsgemäße Vorrichtung in einer weiteren Ausführungsform, ebenfalls als Wärmereaktor;
- **Fig. 7b**: zeigt die erfindungsgemäße Vorrichtung zur Behandlung von Polymerelementen in einer weiteren Ausführungsform;
- **Fig. 7c**: zeigt die erfindungsgemäße Vorrichtung zur Behandlung von Polymerelementen in einer weiteren Ausführungsform;
- **Fig. 8**: zeigt den Ablauf eines erfindungsgemäßen Verfahrens zur Behandlung von Polymerelementen in einer beispielhaften Ausführungsform;
- **Fig. 9**: zeigt eine erfindungsgemäße Vorrichtung zur Behandlung von Polymerelementen in einer weiteren Ausführungsform mit Perspektive von schräg unten;
- **Fig. 9a**: zeigt die Vorrichtung der Fig. 9 von schräg oben mit Blick auf das Gestell 9 zur Aufnahme der Polymerelemente P;
- **Fig. 9b**: zeigt eine schematische Darstellung des Magnetantriebs der Umwälzvorrichtung aus den vorhergehenden Figuren;
- **Fig. 10**: zeigt die beispielhafte Ausgestaltung der Umwälzvorrichtung der Fig. 9 und der Fig. 9a von schräg oben;
- **Fig. 10a**: zeigt eine weitere beispielhafte Ausgestaltung der Umwälzvorrichtung von schräg oben;
- **Fig. 10b**: zeigt eine weitere beispielhafte Ausgestaltung der Umwälzvorrichtung von schräg oben;
- **Fig. 10c**: zeigt eine weitere beispielhafte Ausgestaltung der Umwälzvorrichtung von schräg oben;
- **Fig. 10d**: zeigt eine weitere beispielhafte Ausgestaltung der Umwälzvorrichtung von schräg oben;
- **Fig. 10e**: zeigt eine weitere beispielhafte Ausgestaltung der Umwälzvorrichtung von schräg oben;
- **Fig. 11**: zeigt die Anordnung einer Umwälzvorrichtung in einer erfindungsgemäßen Vorrichtung in einer weiteren Ausführungsform mit Perspektive von schräg oben;
- **Fig. 12**: zeigt eine Ausgestaltung eines Leitblechs;
- **Fig. 13**: zeigt die Anordnung einer Umwälzvorrichtung in einer erfindungsgemäßen Vorrichtung zur Behandlung von Polymerelementen mit darüber angeordneten Polymerelementen;
- **Fig. 14**: zeigt einen Wärmereaktor in Explosionsdarstellung;
- **Fig. 15**: zeigt einen erfindungsgemäßen Wärmereaktor in einer Ausführungsform mit einem Inlay; und
- **Fig. 15a**: zeigt das Inlay aus Fig. 15.

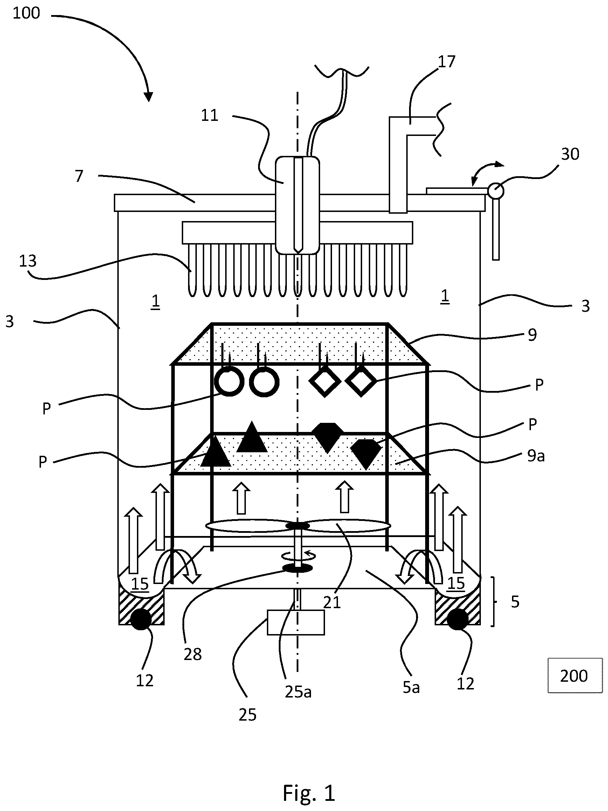

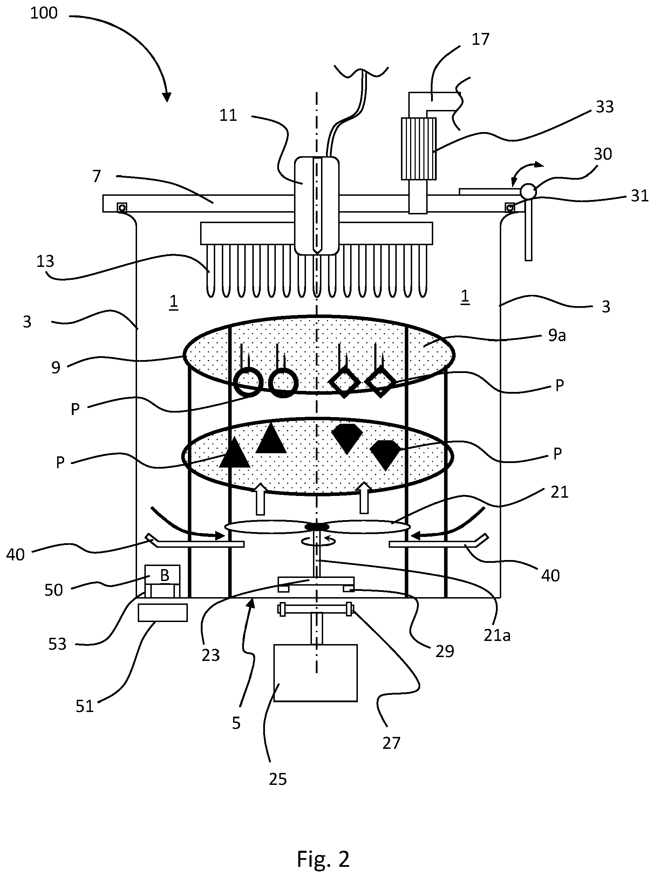

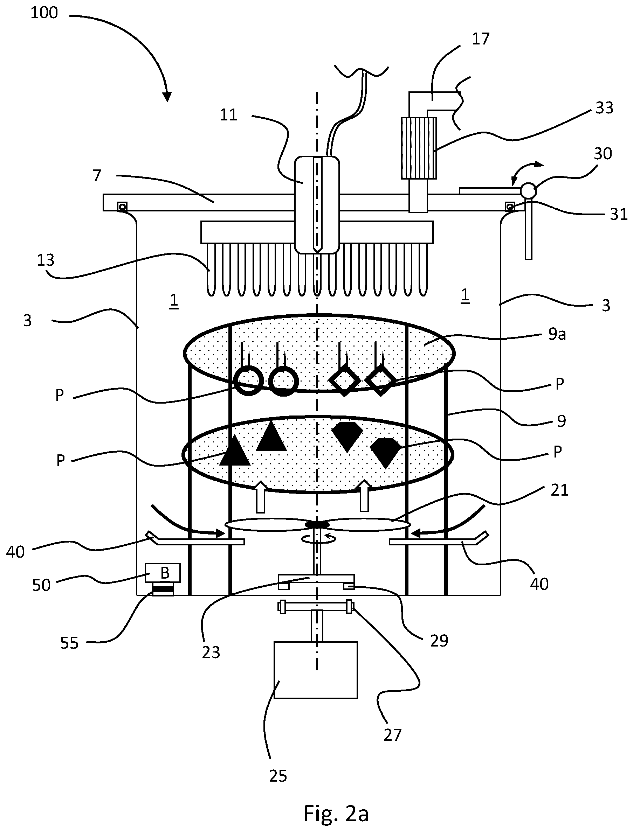

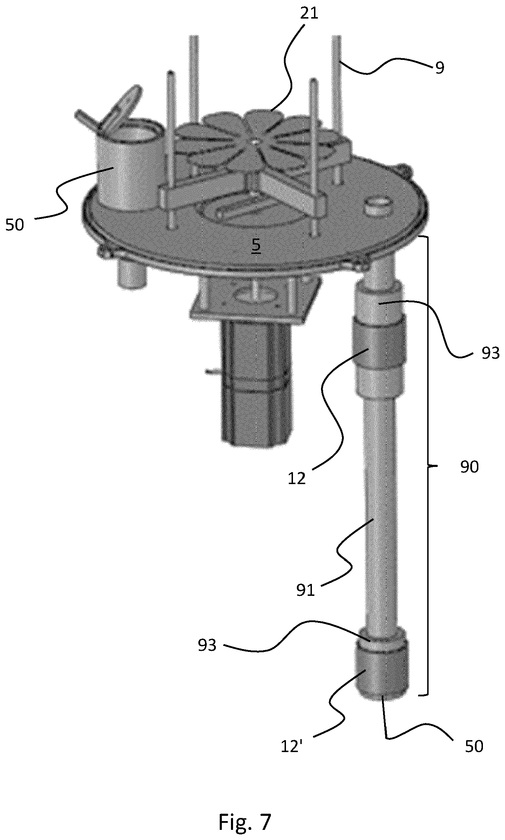

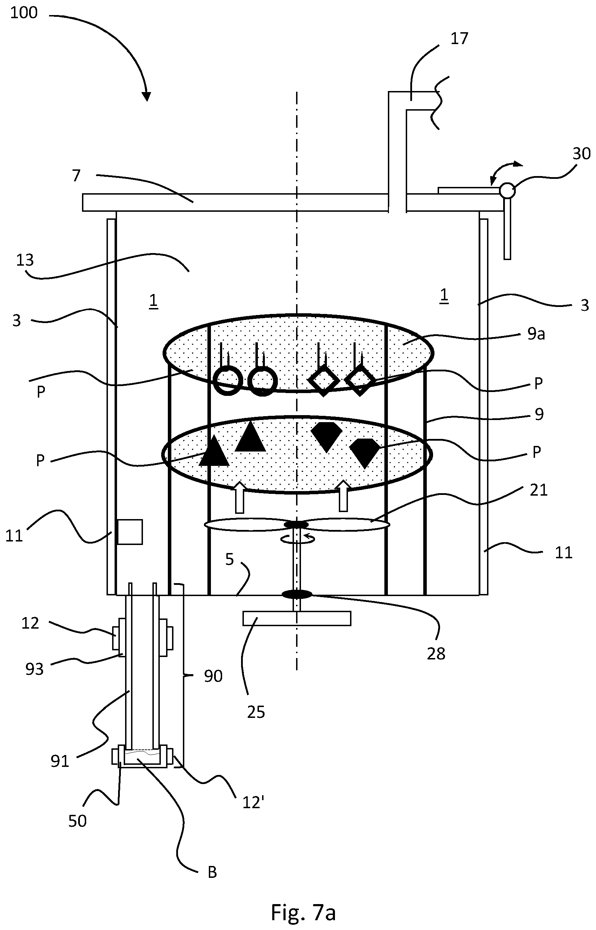

**Fig. 1** zeigt die erfindungsgemäße Vorrichtung 100 zur Behandlung von Polymerelementen P, die durch einen additiven Herstellungsprozess erhalten wurden, mittels eines Behandlungsmediums B (siehe z. B. Fig. 2 oder Fig. 7a), in einer ersten beispielhaften Ausführungsform.

Der Übersichtlichkeit halber ist nur der untere Teil der Fig. 1 dreidimensional dargestellt, der obere Teil ist in Schnittdarstellung, also zweidimensional.

Die Form der Polymerelemente P in Fig. 1 ist rein zufällig gewählt und nicht als beschränkend zu verstehen. Die Polymerelemente P können beliebige Formen aufweisen.

Die Vorrichtung 100 umfasst eine Kammer 1, welche zur Aufnahme der zu behandelnden Polymerelemente P vorgesehen und/oder geeignet ist. Die Kammer 1 weist eine seitliche Wandung 3, einen Boden 5 und eine, vorzugsweise stirnseitige oder obere, Öffnung auf. Wie Fig. 1 zu entnehmen ist, ist die stirnseitige oder obere Öffnung hier optional die einzige Öffnung der Kammer.

Die Öffnung kann mittels eines Deckels 7, vorzugsweise fluiddicht, verschlossen werden, wobei der Deckel 7 optional wenigstens einen weiteren Durchlass haben kann, wie für das hier gezeigte Beispiel nachstehend erläutert. Der Deckel 7 kann zum Öffnen und Schließen optional klappbar sein und beispielsweise ein Scharnier 30 und/oder eine Verschlussvorrichtung (in Fig. 1 nicht gezeigt) aufweisen. Andere Ausgestaltungen, durch welche der Deckel 7 die Kammer 1 nach außen verschließen kann, sind ebenfalls von der Erfindung umfasst.

Die Kammer 1 weist ein Innenvolumen oder Fassungsvermögen von vorzugsweise weniger als 100 l auf, bevorzugt weniger als 60 l, besonders bevorzugt weniger als 40 l.

Im Innern der Kammer 1 ist eine optionale Aufnahmevorrichtung 9a zum Lagern der Polymerelemente P angeordnet. Im Beispiel der Fig. 1 hat diese die Form eines Gestells oder einer Stellage. Außerdem ist sie optional mit Haken versehen, an welchen ebenfalls Polymerelemente P angeordnet bzw. gelagert werden können.

Der Boden 5 weist optional einen Bodenabschnitt 5a auf, welcher vorzugsweise Vertiefungen, Auswölbungen nach unten, konkave Abschnitte oder dergleichen aufweist oder von diesen umgeben ist. So kann, wie im Beispiel der Fig. 1, umlaufend oder nicht umlaufend sondern z. B. nur einen Teil des Umfangs abdeckend eine Sicke 15, hier in Form eines Grabens, angeordnet sein. Die Ausgestaltung der Sicke 15 in Fig. 1 ist also rein beispielhaft und nicht als beschränkend zu verstehen.

Andere Ausgestaltungen des Bodens 5 sind ebenfalls von der vorliegenden Erfindung umfasst.

Die Vorrichtung umfasst weiter wenigstens eine Heizvorrichtung, hier exemplarisch wenigstens eine erste Heizvorrichtung 11 und eine zweite Heizvorrichtung 12.

Im Beispiel der Fig. 1 ist die erste Heizvorrichtung 11 der Öffnung oder dem Deckel 7 zugeordnet und weist optionale Wärmerippen 13 auf, welche der gleichmäßigen Verteilung der Wärme im Innern der Kammer 1 dienen.

Die zweite Heizvorrichtung 12 ist dem Boden 5 oder der Sicke 15 zugeordnet und im Beispiel der Fig. 1 in den Boden 5 oder die Bodenwanddicke integriert. Sie verläuft im Beispiel der Fig. 1 unterhalb der Sicke 15, und vorzugsweise umlaufend um den zentral zu ihr gelegenen Bodenabschnitt 5a des Bodens 5. Die Anordnung der ersten Heizvorrichtung 11 und der zweiten Heizvorrichtung 12 in Fig. 1 ist rein beispielhaft.

Im Deckel 7, alternativ an der seitlichen Wandung 3 oder im Boden 5, ist optional ein Anschluss für eine Unterdruckleitung 17 für eine Vakuum- oder Unterdruckvorrichtung angeordnet. Die Anordnung des Anschlusses ist im Beispiel der Fig. 1 rein beispielhaft, vorzugsweise befindet sich die Anordnung eines solchen Anschlusses allerdings im oberen Abschnitt der Kammer 1.

Der Boden 5 und/oder die Sicke 15 sind optional zumindest abschnittsweise von einem ersten Material oder mit einer ersten Materialstärke gebildet oder von einer solchen begrenzt. Die seitliche Wandung 3 oder ein Abschnitt hiervon ist vorzugsweise aus einem zweiten Material oder mit einer zweiten Materialstärke. Das zweite Material unterscheidet sich vom ersten Material bzw. die zweite Materialstärke unterscheidet sich von der ersten Materialstärke. So kann die zweite Materialstärke geringer sein als die erste. Das erste Material kann beispielsweise Edelstahl, das zweite beispielsweise Aluminium sein. Das zweite Material kann eine höhere Wärmeleitfähigkeit als das erste Material aufweisen. Damit kann sichergestellt oder begünstigt werden, dass eine Erwärmung des Behandlungsmediums B durch die zweite Heizvorrichtung 12 möglich ist, ohne die Kammer 1 oder deren seitliche Wandung 3, weiter aufzuheizen.

Die Vorrichtung 100 umfasst optional weiter eine Umwälzvorrichtung 21, hier beispielsweise in Form eines Propellers oder Rotors. Die Umwälzvorrichtung 21 wird über eine Antriebswelle 25a von einem Motor 25 angetrieben. Die Antriebswelle 25a wird mittels einer Wellendurchführung 28 durch den Boden 5 hindurchgeführt.

Optional kann die Umwälzvorrichtung 21 mittels eines Magnetantriebs 23 (in Fig. 1 nicht der Fall, siehe aber Fig. 2) angetrieben werden. Der hierzu erforderliche Motor 25, durch welchen die Umwälzvorrichtung 21 mittels einer Wellendurchführung 28 oder optional kontaktfrei mittels Magnetantrieb 23 betrieben werden kann, oder ein anderer Motor, ist ebenfalls von der Vorrichtung umfasst.

Eine, insbesondere zyklische, Umkehr der Drehrichtung der Umwälzvorrichtung 21, wie in Fig. 1 dargestellt, kann im Verfahrensschritt b) eine verstärkte Strömung bevorzugt im Bereich des Behandlungsmediums B bewirken, so dass eine höhere Verdampfungsrate des Behandlungsmediums B mit oder ohne weiteren Maßnahmen, wie hierin ausgeführt erzielt werden kann.

Die Kammer 1 der Vorrichtung 100 steht vorzugsweise nicht mit einer weiteren Kammer in Fluidverbindung. Insbesondere wird ihr vorzugsweise nicht aus einer weiteren Kammer ein vorgewärmtes Behandlungsmedium B zugeführt. Die Vorrichtung 100 umfasst somit vorzugsweise auch keine Kammer, welche als Reservoir für das Behandlungsmedium B, vorgewärmt oder nicht, betrachtet werden könnte.

In der Kammer 1 der Vorrichtung 100 liegt das Behandlungsmedium B zunächst in flüssiger Form vor (in Fig. 1 nicht gezeigt). Es kann sich frei auf dem Bodenabschnitt 5a verteilen und/oder in der Sicke 15 sammeln. Es ist daher von Vorteil, wenn die zweite Heizvorrichtung 12 und die Sicke 15 in enger räumlicher Nähe zueinander oder in Kontakt miteinander stehen. Das Erwärmen des Behandlungsmediums B bis zu seinem Verdampfen kann hierdurch erfolgen, ohne den Inhalt der Kammer 1 im Übrigen übermäßig weiter aufzuheizen, was für die Polymerelemente P von Nachteil sein könnte. Ebenso lässt sich hierbei Energie beim Verdampfen einsparen, welche andernfalls in die Erwärmung z. B. der seitlichen Wandung 3 fließen könnte. Zum Vermeiden des letztgenannten Effekts kann es von Vorteil sein, wenn zwischen dem Boden 5 und/oder der Sicke 15 einerseits und der seitlichen Wandung 3 andererseits ein drittes Material eingebracht ist, z. B. wiederum als Ring. Das dritte Material kann eine Wärmeleitfähigkeit haben, welche wiederum niedriger ist als jene des Bodens 5, der Sicke 15 und/oder der seitlichen Wandung 3.

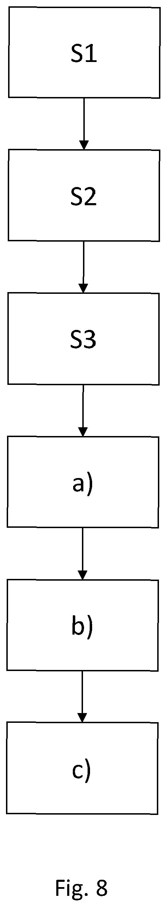

Wird das Behandlungsmedium B verdampft (siehe Beschreibung zur Fig. 8), so steigt es nach oben und wird sich gleichmäßig im Innern der Kammer 1 verteilen.

Einige mögliche optionale Strömungsrichtungen des Behandlungsmediums B (flüssig oder gasförmig) sind in Fig. 1 mittels Blockpfeilen angedeutet.

Fig. 1 zeigt die erfindungsgemäße Steuervorrichtung 200.

**Fig. 2** zeigt die erfindungsgemäße Vorrichtung 100 in einer weiteren beispielhaften Ausführungsform.

Es wird auf die Ausführungen zu Fig. 1 Bezug genommen und im Folgenden auf die Unterschiede zur Fig. 1 eingegangen, um Wiederholungen zu vermeiden.

Fig. 2 zeigt die erfindungsgemäße Vorrichtung 100 in einer zylindrischen Ausgestaltung der Kammer 1, insbesondere in Form eines Rohrabschnitts. Die Kammer 1 kann in diesen Ausführungsformen einen Innendurchmesser von weniger als 500 mm, besonders bevorzugt von weniger als 400 mm, wie z. B. 250 mm bis 350 mm, und eine Wandstärke von 1 mm bis 20 mm, bevorzugt von 2 mm bis 10 mm und besonders bevorzugt von 3 mm bis 5 mm, aufweisen.

In manchen Ausführungsformen hat die Kammer 1 eine innere Höhe von weniger als 800 mm, besonders bevorzugt von weniger als 600 mm, wie 350 mm bis 550 mm.

In einigen Ausführungsformen ist die Wandung 3 oder zumindest die Innenwandung der Kammer 1 vorzugsweise aus einem einzigen Material gefertigt. Dieses mindestens eine Material hat eine relativ hohe Wärmeleitfähigkeit von mindestens 50 W/(m*K), besonders bevorzugt von über 100W/(m*K).

Der Boden 5 der Kammer 1 kann in seiner Geometrie vollständig oder teilweise wie eine Platte, oder eben, ausgebildet sein und in seiner Außengeometrie bevorzugt zumindest annähernd der Geometrie der Kammer 1 oder ihrer Begrenzung entsprechen. Ein plattenförmiges Element für einen Boden 5 oder Kammerboden kann zumindest in großen Abschnitten eine Stärke von 2 mm bis 30 mm aufweisen, bevorzugt von 4 mm bis 20 mm und besonders bevorzugt von 6 mm bis 15 mm.

Der Boden 5 der Kammer 1 kann bevorzugt im Zentrum mindestens eine geringere Dicke und/oder sich konisch verjüngende Dicken aufweisen, um für energetische Strahlung und/oder Magnetfelder, welche insbesondere zum Antrieb der Umwälzvorrichtung 21 benötigt werden, besser durchgängig zu sein. Es muss dann hierfür eine kürzere Wegstrecke der Strahlung und/oder des Magnetfelds zu einem oder mehreren geeigneten Abnehmern auf der Gegenseite des Bodens 5 zu zurückgelegt werden. Eine solche Verjüngung des Bodens 5 kann sich beispielsweise über einem flächigen Bereich von 10 cm² bis 200 cm² erstrecken und ist bevorzugt in einer kreisrunden Form ausgeführt.

Die Fig. 2 zeigt links auf dem Boden 5 der Kammer 1 eine Aufnahmevorrichtung 50 für ein Behandlungsmedium B. Diese ist vorgesehen, um ein Behandlungsmedium B und ggf. weitere Stoffe aufzunehmen. Im Beispiel der Fig. 2 ist die Aufnahmevorrichtung 50 für das Behandlungsmedium B als Lösemittel-Pad ausgestaltet. Das Lösemittel-Pad ist mit einer Materialstruktur ausgestaltet oder weist eine solche auf, welche ein Behandlungsmedium B in sich aufnehmen bzw. speichern kann. Beispielsweise kann das Lösemittel-Pad für das Behandlungsmedium B mit porösen oder ähnlichen Eigenschaften, bevorzugt mit offenzelligen Poren bzw. Mikrokavitäten, ausgeführt sein, welche z. B. bevorzugt eine Einlagerung bzw. ein Aufsaugen von spezifischen Behandlungsmedien zumindest begünstigt.

In einigen Ausführungsformen weist die Aufnahmevorrichtung 50 für das Behandlungsmedium B besondere Oberflächeneigenschaften wie beispielsweise bionische Eigenschaften und/oder spezielle Oberflächenbeschichtungen auf, welche beispielsweise ein Verdampfen von Behandlungsmedien begünstigen oder hemmen können.

In manchen Ausführungsformen kann die Aufnahmevorrichtung 50 für das Behandlungsmedium B so ausgeführt oder innerhalb der Kammer auf eine Weise positioniert sein, dass eine Erwärmung des Behandlungsmediums B verzögert oder beschleunigt in Abhängigkeit der eingeleiteten Wärmemenge stattfinden kann. Beispielsweise kann eine solche Aufnahmevorrichtung 50 aus mehr oder weniger stark wärmeleitenden Materialien ausgeführt und/oder ummantelt sein und/oder Luft- oder Vakuumeinschlüsse zur besseren Wärmetrennung aufweisen.

Im Beispiel der Fig. 2 weist die Aufnahmevorrichtung 50 für das Behandlungsmedium B eine eigene Heizvorrichtung, dargestellt mittels des Induktionsfeld 51, auf. Vom Boden 5 oder der Wandung 3 der Kammer 1 kann die Aufnahmevorrichtung 50 für das Behandlungsmedium B beispielsweise mittels thermischer Isolierelemente 53 getrennt sein. Alternativ oder ergänzend kann für das Induktionsfeld 51 eine Mikrowelleneinheit und/oder ein Ultraschallgenerator oder eine andere Vorrichtung zur Erzeugung von zusätzlicher Energie angeordnet sein.

Der Antrieb der Umwälzvorrichtung 21, die hier wie optional in jeder anderen hierin offenbarten Ausführungsform ein Propeller, wie z. B. hierin beschrieben, sein oder aufweisen kann, erfolgt im Beispiel der Fig. 2 magnetisch. Der Motor 25 bewegt bzw. rotiert mindestens einen Permanentmagnet 27 unterhalb des (vorzugsweise an dieser Stelle verjüngten bzw. dünneren) Bodens 5. Das Magnetfeld des rotierenden Permanentmagnets 27 wirkt kontaktlos auf ferromagnetisches Metall 29 (oder allgemein ferromagnetisches Material, z. B.

Kunststoffe mit gebundenem Eisenpulver, usw.), das mittelbar mit der Umwälzvorrichtung 21 verbunden ist, und somit die Rotation auf diese überträgt.

In Fig. 2 sind ferner optionale Luftleitplatten 40 gezeigt, welche dazu dienen, den von der Umwälzvorrichtung 21 erzeugten Fluidstrom innerhalb der Kammer 1 effektiv zu leiten, insbesondere, um eine gleichmäßige Temperierung des Inneren der Kammer 1 zu gewährleisten bzw. sicherzustellen und/oder um den Bereich oberhalb der optionalen Luftleitplatten 40 von dem unteren Bereich innerhalb der Kammer 1 zumindest ansatzweise thermisch und/oder strömungstechnisch aufzuteilen.

An der Unterdruckleitung 17 ist im Beispiel der Fig. 2 optional ein Kühler 33 angeordnet, der sich bevorzugt stromaufwärts der Unterdruckvorrichtung oder -pumpe (nicht dargestellt) befindet. Ein solcher Kühler 33 kann in einer einfachen Ausführungsform als Rohr- oder Schlauchstück ausgeführt sein, um ein Kondensieren von Behandlungsmedium in diesem Bereich zu erwirken oder zu verstärken.

Zur Abdichtung des Inneren der Kammer 1 gegenüber deren Äußerem weist der Deckel 7 im Beispiel der Fig. 2 an seiner Unterseite, also an der Seite, die im Gebrauch der oberen Stirnseite der Wandung 3 der Kammer 1 zugewandt ist, eine Dichtung 31 auf, beispielsweise einen O-Ring, **z. B.** aus Fluorkautschuk (FKM), Perfluorkautschuk (FFKM) oder Silikon. Die Abdichtung kann in anderen Ausführungsformen anders erfolgen, beispielsweise mittels einer Dichtung wie einem U-Profil an der oberen Stirnseite der Wandung 3 der Kammer 1, beispielsweise aus einem Silikon gefertigt.

**Fig. 2a** zeigt die erfindungsgemäße Vorrichtung der Fig. 2 mit einer alternativen Aufnahmevorrichtung 50 für das Behandlungsmedium B.

Auch in dieser Ausführungsform ist die Aufnahmevorrichtung 50 für das Behandlungsmedium B als Lösemittel-Pad ausgestaltet. Im Gegensatz zu Fig. 2 wird im Beispiel der Fig. 2a das Lösemittel-Pad nicht induktiv, sondern mittels elektrischer Kontakte 55 (mind. ein + und ein - Pol) als Widerstandsheizer erhitzt bzw. das Behandlungsmedium B darin verdampft. Die Aufnahmevorrichtung 50 und/oder das Lösemittel-Pad und/oder das Behandlungsmedium B (optional mit elektrisch leitfähigen Zusätzen) kann dabei als Widerstandsheizer ausgeführt sein. Auch diese Art der Verdampfung kann zeitlich gesteuert und unabhängig von der Erwärmung der Kammer 1 erfolgen.

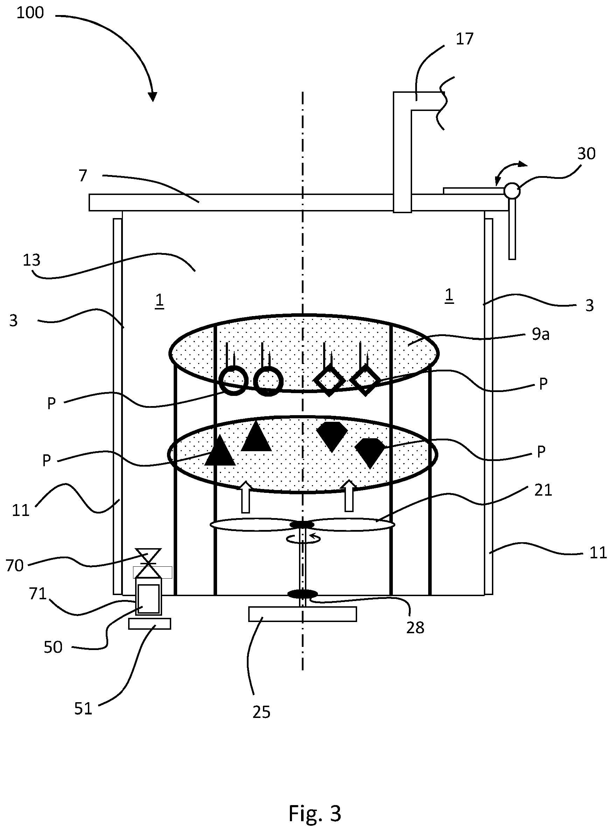

**Fig. 3** zeigt die erfindungsgemäße Vorrichtung 100 in einer dritten beispielhaften Ausführungsform.

Zum Erwärmen der Kammer 1 bzw. für den Erwärmungsschritt a) des erfindungsgemäßen Verfahrens (siehe Fig. 8) ist im vorliegenden Beispiel eine Heizmatte als erste Heizvorrichtung 11 vorgesehen, die der Kammer 1 zumindest größtenteils vollumfänglich anliegt und/oder eine Heizschnur, mit der die Kammer 1, bevorzugt möglichst gleichmäßig, umwickelt ist. Es kann in alternativen Ausführungsformen vorgesehen sein, eine oder mehrere Heizmatten um den Umfang der Kammer 1, oder Abschnitte hiervon, anzuordnen und/oder mehrere Heizschnüre bevorzugt wendelförmig um die Kammer zu wickeln.

Im Beispiel der Fig. 3 ist weiter die Aufnahmevorrichtung 50 für das Behandlungsmedium B zum Teil außerhalb und zum anderen Teil innerhalb der Kammer 1, in welcher die Polymerelemente P angeordnet sind, vorgesehen. Sie erstreckt sich in der gezeigten, beispielhaften Ausführungsform durch eine definierte Aussparung durch den Kammerboden hindurch. In anderen Ausführungsformen kann die Aussparung alternativ oder ergänzend in der Wandung 3 und/oder dem Deckel 7 der Kammer 1 vorgesehen sein.

Eine solche Aussparung kann eine, insbesondere kreisförmige, Durchgangsöffnung sein, welche gegenüber der Aufnahmevorrichtung 50 für das Behandlungsmedium B mindestens ein Dichtelement aufweisen kann, beispielsweise in Form eines O-Rings. Alternativ oder ergänzend kann die Aufnahmevorrichtung 50 für das Behandlungsmedium B als Dichtelement einen Flansch aufweisen oder mit einer Labyrinthdichtung versehen sein. In manchen Ausführungsformen kann die Aufnahmevorrichtung 50 auch unlösbar mit der Kammer 1 verbunden sein, beispielsweise durch Schweißen oder Kleben.

In einer kreisförmigen Ausgestaltung kann die Durchgangsöffnung in manchen Ausführungsformen in bzw. auf ihrem Umfang ein Gewinde aufweisen, damit auf diese Weise eine Aufnahmevorrichtung 50 für das Behandlungsmedium B oder ein entsprechendes Gehäuse 71 hiervon, welche/welches mit einem Außengewinde versehen ist, in das Gewinde der Durchgangsöffnung eingeschraubt werden kann.

Wie in der Fig. 3 angedeutet, ist in manchen Ausführungsformen der Bereich oder der Teil der Aufnahmevorrichtung 50 für ein Behandlungsmedium B, der sich außerhalb der Kammer 1 zur Aufnahme von Polymerelementen befindet, deutlich größer ausgeführt als der Bereich oder der Teil der Aufnahmevorrichtung 50, welcher sich innerhalb der Kammer 1 erstreckt, beispielsweise um eine Größenordnung oder um ein Volumen mit dem Faktor 2 bis 50. Auf diese Weise kann die Aufnahmevorrichtung 50 für das Behandlungsmedium B oder ein Gehäuse 71 hiervon in seiner Länge so groß ausgeführt sein und damit ein Innenvolumen aufweisen, dass eine größere Menge Dampf des Behandlungsmediums B bereits vor dem Einleiten in die Kammer 1 gebildet und gespeichert werden kann, ohne dass dabei nutzbares Volumen der Kammer 1 für die Polymerelemente P zu sehr eingeschränkt werden würde.

Der Teil der Aufnahmevorrichtung 50 für das Behandlungsmedium B, welcher sich optional innerhalb der Kammer 1 befindet, kann mit mindestens einem steuerbaren oder regelbaren Maschinenelement, hier beispielhaft einem Nadelventil 70, ausgestattet sein. Auf diese Weise können zu einem vorbestimmten Zeitpunkt (exakt) vorbestimmte Mengen des Behandlungsmediums B und/oder dessen Dampfs in die Kammer 1 zu den Polymerelementen P eingebracht werden.

Das Nadelventil 70 kann in bestimmten Ausführungsformen beispielsweise mittels einer mechanischen Durchführung von Bereichen außerhalb des Behälters und außerhalb der Kammer manipuliert werden, wie beispielsweise durch eine Dreh- und/oder Schiebestange mit mindestens einer Dichtung, wie z. B. einem O-Ring. Dies ist in Fig. 3 jedoch nicht gezeigt.

In einigen Ausführungsformen kann das Nadelventil 70 durch andere Verschlusssysteme wie beispielsweise ein Magnetventil ersetz oder ergänzt sein. In manchen Ausführungsformen kann das Nadelventil 70 durch ein selbst regulierendes Druckventil ersetzt oder ergänzt sein. Der (Dampf-)Druck, bei dem so ein Druckventil (eigenständig) öffnet (und evtl. wieder schließt), kann in bestimmten Ausführungsformen einstellbar ausgeführt sein, beispielsweise durch Drehen und Vorspannen einer Druckfeder.

In manchen Ausführungsformen ragt kein Abschnitt oder Teil der Aufnahmevorrichtung 50 für das Behandlungsmedium B in das Innere der Kammer 1.

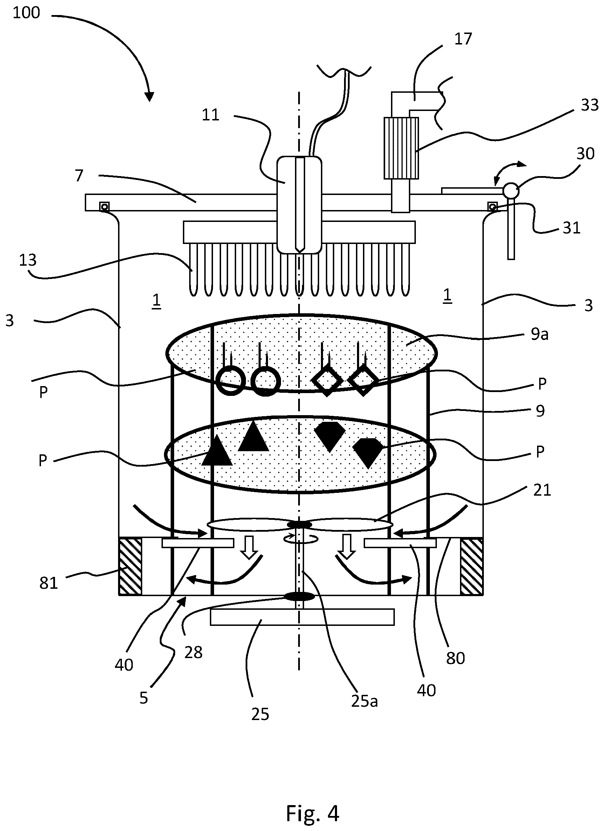

**Fig. 4** zeigt die erfindungsgemäße Vorrichtung 100 in einer vierten beispielhaften Ausführungsform.

Das Behandlungsmedium B ist im Beispiel der Fig. 4 in einem unteren Bereich, insbesondere dem Boden 5, der Kammer 1 räumlich mittels eines Schwabbelventils 80, das bevorzugt auf einer abdichtenden Auflage 81 entlang der äußeren Wandung 3 der Kammer 1 angeordnet ist, vom restlichen Innern der Kammer 1 abgetrennt. Ein Schwabbelventil 80 kann aus Silikon oder einer Folie wie einer Kaptonfolie bestehen und sollte möglichst dünn und flexibel ausgeführt sein.

Wird das Behandlungsmedium B im Verdampfungsschritt b) (siehe Fig. 8) verdampft, so tritt es über das Schwabbelventil 80 zeitverzögert zum Erwärmungsschritt a) der Elemente in den Teil der Kammer 1, in welchem die Polymerelemente angeordnet sind, über, weil sich das Behandlungsmedium vorzugsweise im Erwärmungsschritt a) langsamer, bevorzugt mit weniger als der halben Aufheizgeschwindigkeit erwärmt, als die Elemente es tun. Um den Effekt der Verdampfung zu verstärken, kann die Drehrichtung der Umwälzvorrichtung 21 dafür umgedreht und/oder in der Intensität verändert werden, um die (noch) in der Kammer befindliche Luft oder das darin befindliche Gas in umgekehrte Richtung nach unten strömen zu lassen und somit ein Aufströmen von Behandlungsmediumdampf durch das Schwabbelventil hindurch zu begünstigen.

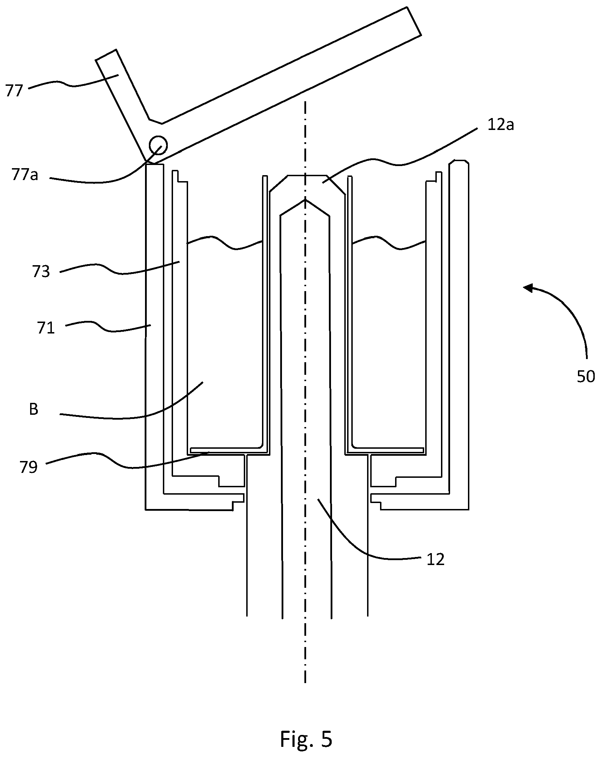

**Fig. 5** zeigt eine Aufnahmevorrichtung 50 für das Behandlungsmedium B, wie sie in einer Kammer 1 der erfindungsgemäßen Vorrichtung 100 angeordnet sein kann.

Die Aufnahmevorrichtung 50 für das Behandlungsmedium B weist ein Gehäuse 71 auf, welches bevorzugt aus einem weniger gut wärmeleitenden Material ausgeführt ist und mit einem Deckel 77 in Wirkverbindung stehen kann. In dem Gehäuse 71 kann eine Kapsel 73, beispielsweise eine (beschichtete) Alukapsel, angeordnet sein, welche zur Aufnahme eines Behandlungsmediums B geeignet und vorgesehen ist und mit dem Deckel 77, insbesondere fluiddicht, verschlossen werden kann. Die Kapsel 73 kann auch als Patrone, Becher, Dose oder Behälter bezeichnet werden. Sie weist beispielsweise eine zylindrische Grundform auf.

Bevorzugt hat ein geeigneter Behälter zur Aufnahme eines Behandlungsmediums B, z. B. die Kapsel 73, einen äußeren Durchmesser von 30 mm bis 200 mm wie 50 bis 80 mm, einen inneren Durchmesser von 10 mm bis 180 mm wie 20 mm bis 70 mm und eine Höhe von 20 mm bis 200 mm wie 40 mm bis 100 mm.

Der Deckel 77 ist beispielsweise wenigstens zum Teil kreisrund, bevorzugt aus einem weniger gut wärmeleitenden Material ausgeführt, beispielsweise mit einem Durchmesser von 30 mm bis 300 mm, wie 50 mm bis 80 mm. Ferner ist er vorteilhafterweise gegenüber dem Gehäuse drehbar, kippbar, abhebbar und/oder verschiebbar gelagert.

Der Deckel 77 kann über seine eigene Gewichtskraft hinaus mittels einer zusätzlich angebrachten Masse und/oder einem federnden Element in seiner wirkenden Verschließkraft verstärkt werden (in Fig. 5 nicht gezeigt). In manchen Ausführungsformen kann der Deckel 77 kraftschlüssig mit dem Gehäuse 71 und/oder der Kapsel 73 verbunden und wieder gelöst werden, beispielsweise durch verschrauben oder mittels Spannverschlüssen (in Fig. 5 nicht gezeigt). In solchen Ausgestaltungen kann der Deckel mit einem steuerbaren Ventil wie einem Magnetventil und/oder einem Druckventil ausgestattet sein.

Im Beispiel der Fig. 5 ist der Deckel 77 mit dem Gehäuse kraftschlüssig verbunden, hier in Form eines Scharniers 77a. Er ist zum Bedecken und/oder Abdichten der Kapsel 73 mit mindestens einer Dichtfläche versehen, welche in Verbindung mit mindestens einem Dichtelement, wie beispielsweise einem O-Ring, eine druck- und gasdichte Verbindung zur Kapsel 73 erwirken kann (in Fig. 5 nicht gezeigt).

Dichtelemente wie O-Ringe können die Dichtheit des Deckels 77 erhöhen. Ein erfindungsgemäßes Öffnen des Deckels 77 erfolgt bevorzugt durch Anlegen einer Magnetkraft außerhalb der Kammer 1. Hierzu kann sich das Gehäuse 71 mit der Kapsel 73 einerseits auf dem Kammerboden und gleichzeitig im näheren Bereich der Wandung befinden, ähnlich wie in den vorausgehenden Figuren gezeigt. So kann ein von außen indiziertes und ausreichend starkes Magnetfeld auf mindestens ein ferromagnetisches Element, welches am Deckel 77 befestigt und/oder eingearbeitet ist, erwirkt werden, um damit den Deckel 77 zu öffnen (in Fig. 5 nicht gezeigt). Abgesehen von diesem ferromagnetischen Element ist der Deckel 77 bevorzugt aus einem nicht magnetischen Material ausgeführt, beispielsweise aus einem Kunststoff, einem (beschichteten) Aluminium oder einer Keramik. Ein Adapter (innen) 79 kann in manchen Ausführungsformen vorhanden sein, um beispielsweise als Einführ- und/oder Abführhilfe von granularen Medien (vor und nach der Behandlung) zu dienen und/oder vorteilhafte Eigenschaften in Bezug auf die Wärmeeinbringung auf das Behandlungsmedium B zu erwirken. Ein Adapter (innen) 79 kann beispielsweise aus einem (beschichteten) Metall wie Aluminium oder einem Stahl oder aus einer Keramik wie Aluminiumoxid oder Siliziumkarbid gebildet sein.

Die Kapsel 73 ist aus einem Metall oder einem anderen wärmeleitenden Material ausgeführt. In bestimmten Ausführungsformen ist die Kapsel 73 oder zumindest Teile davon aus einem Material ausgeführt, welches für einen Wärmeeintrag durch Induktion, Wärmestrahlung, Ultraschall und/oder Mikrowellen geeignet ist, wie beispielsweise einem Stahl, einem Edelstahl oder einer Keramik wie Siliziumkarbid. Ebenso kann eine Oberflächenbeschichtung vorgesehen sein, welche bevorzugt zu einem (zusätzlichen) Wärmeeintrag durch eine äußere Energiebeaufschlagung führen kann.

Im Beispiel der Fig. 5 ist die Kapsel 73 zumindest in Teilen aus einer Aluminiumlegierung, aus einer Kupferlegierung, aus Messing, aus Graphit, aus Glas oder aus einer Keramik wie Aluminiumoxid oder Siliziumkarbid gefertigt und wird mittels einer zweiten Heizvorrichtung 12, hier eines Widerstandsheizers, erwärmt, welcher beispielsweise als Heizpatrone ausgeführt und/oder im Zentrum des Gehäuses 71 in einer Heizfassung, als Aufnahme 12a für die zweite Heizvorrichtung 12, aufgenommen bzw. angeordnet sein kann. Hierzu weist das Gehäuse, beispielsweise im Zentrum, einen zusätzlichen Zapfen aus einem gut wärmeleitenden Material auf, um die eingebrachte Wärme der zweiten Heizvorrichtung 12 optimal auf die Fläche der Kapsel 73 verteilen zu können.

In einer solchen Ausführungsform ist der Kammerboden bevorzugt mit einer Durchgangsöffnung versehen, über welche elektrische Energie für die zweite Heizvorrichtung eingebracht werden kann. Diese sollte ihrerseits mittels eines Dichtelements, wie beispielsweise einem O-Ring, gegenüber der oder Teilen der Kammer 1 abgedichtet sein.

Das Gehäuse 71, das erfindungsgemäß etwas größere Abmessungen als die Kapsel 73 aufweist, ist in manchen Ausführungsformen aus einem weniger gut wärmeleitenden Material wie einem Kunststoff oder einer Keramik ausgeführt, um somit eine Isolierhülle um die Kapsel 73 zu bilden.

Gehäuse 71 und/oder Kapsel 73 können in bestimmten Ausführungsformen mit mindestens einer Beschichtung versehen sein. Zusätzlich kann die Aufnahmevorrichtung 50 mit mindestens einer Temperaturmessvorrichtung wie beispielsweise einem Thermoelement oder einem Pt1000 Messelement ausgestattet sein, beispielsweise innerhalb der Aufnahme 12a oder im äußeren Bereich der Kapsel 71. In manchen Ausführungsformen kann eine Temperaturmessvorrichtung in direkter Verbindung zum Behandlungsmedium B stehen. Dabei kann sich beispielsweise ein Thermoelement direkt in die Kavität zur Aufnahme von Behandlungsmedium B hinein erstrecken.

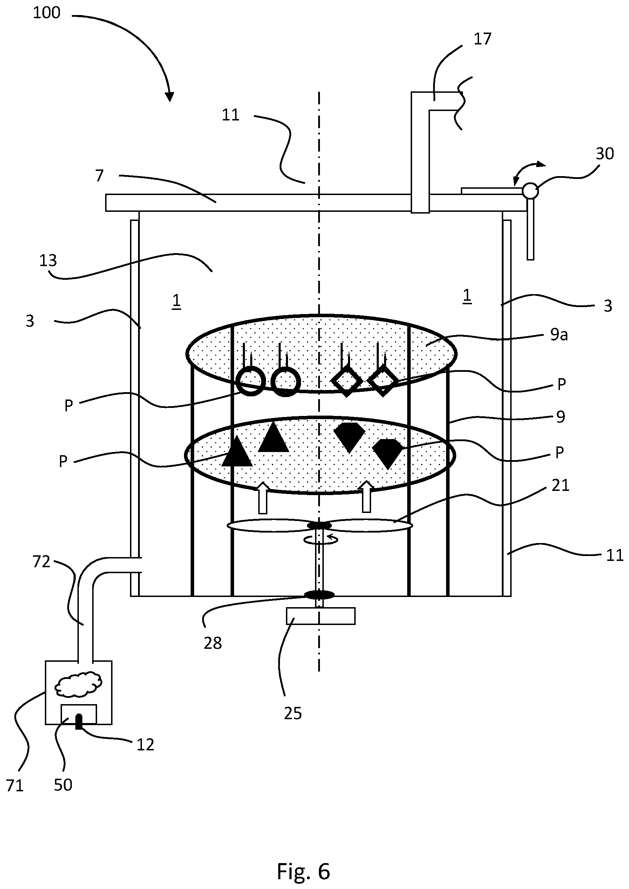

**Fig. 6** zeigt die erfindungsgemäße Vorrichtung 100 der Fig. 3 mit einer alternativen, externen Anordnung der Aufnahmevorrichtung 50 für das Behandlungsmedium B. Diese ist hier vollständig außerhalb der Kammer 1 mit den Polymerelementen P angeordnet.

Auf diese Weise kann die Temperatur der Aufnahmevorrichtung 50 für das Behandlungsmedium B unabhängiger von der Temperatur der Kammer 1 mit den Polymerelementen P gesteuert oder geregelt werden. Dies kann beispielsweise einen höheren Temperaturgradienten zwischen der Kammer 1 und der Aufnahmevorrichtung 50 für das Behandlungsmedium B zum Vorteil haben und/oder eine vereinfachte, äußere Zugänglichkeit der Aufnahmevorrichtung 50 für das Behandlungsmedium B, insbesondere um sie besser beheizen zu können.

Bei der kompletten räumlichen Trennung von Aufnahmevorrichtung 50 für das Behandlungsmedium B und der Kammer 1 für die Polymerelemente stehen diese bzw. ihr jeweiliges Inneres durch geeignete Maschinenelemente in Wirkverbindung, insbesondere in fluidischer Verbindung. Im Beispiel der Fig. 6 ist dieses Maschinenelement eine Verbindungsleitung 72. Diese kann beispielsweise ein Rohr (beliebigen Querschnitts) oder ein Schlauch sein.

Grenzt mindestens eine Fläche der Aufnahmevorrichtung 50 für das Behandlungsmedium B an mindestens eine Fläche der Kammer 1 oder stehen diese in einer direkten mechanischen Verbindung (z. B. durch Verschrauben, Verpressen, Verkleben oder dergleichen), wie es in alternativen Ausführungsformen vorgesehen sein kann, kann das Maschinenelement entbehrlich oder durch einen einfachen Durchlass realisiert sein.

In bestimmten Ausführungsformen kann innerhalb der fluidischen Verbindung zwischen der Aufnahmevorrichtung 50 für das Behandlungsmedium B und der Kammer 1 mit den Polymerelementen P mindestens ein dazwischengeschaltetes Maschinenelement vorgesehen sein, welches ein temporäres Verschließen oder Öffnen dieser Verbindung bewirkt. Dies kann ein Ventil sein, analog zur Beschreibung der Ausführungsform der Fig. 3.

In manchen Ausführungsformen kann ein dazwischengeschaltetes Maschinenelement wie eine Drossel oder eine Blende ein zumindest temporäres Verjüngen mindestens eines Querschnitts der fluidischen Verbindung bewirken, wie beispielsweise eine Verjüngung des Querschnitts bis zu 90%, bevorzugt bis zu 95%, und besonders bevorzugt bis zu 99%.

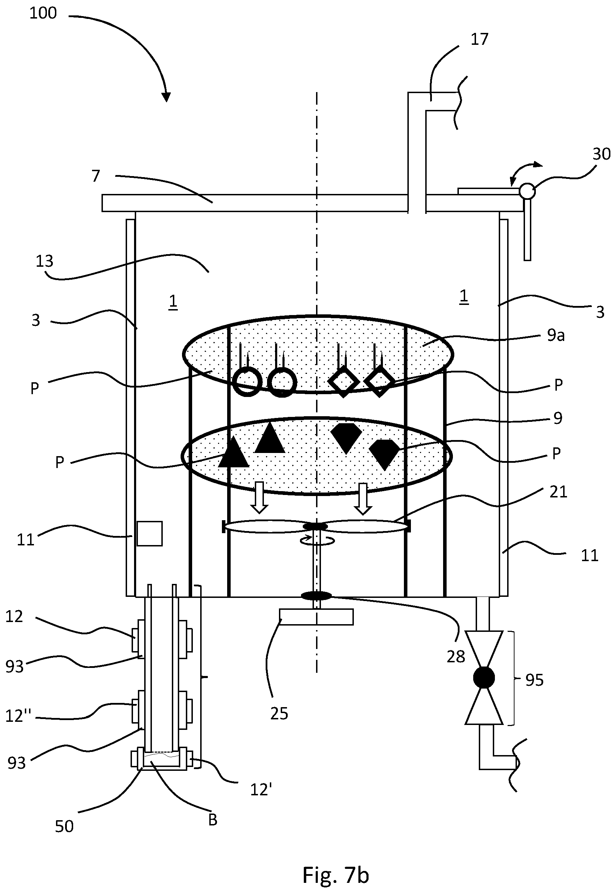

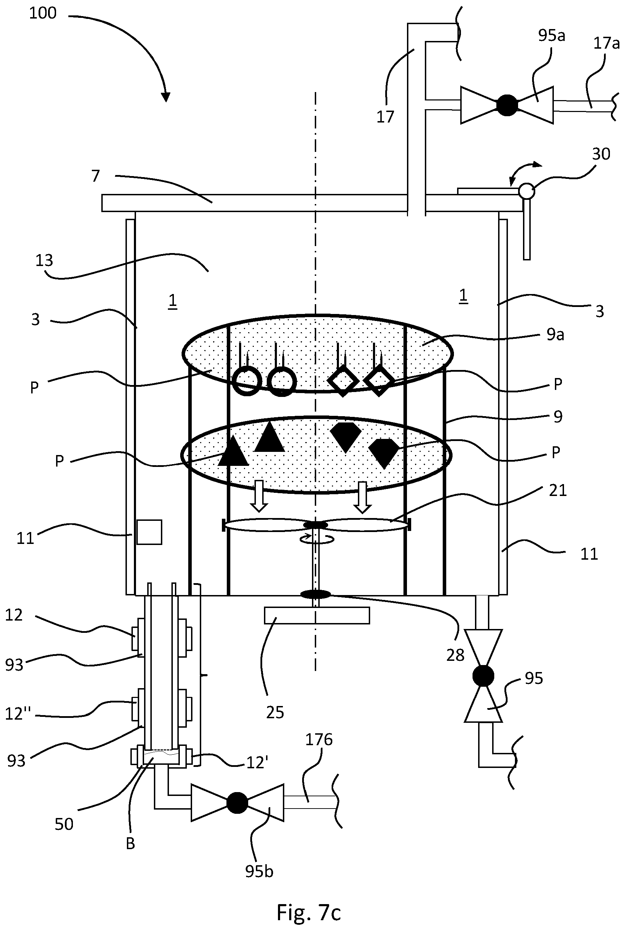

**Fig. 7** zeigt rechts die zweite Heizvorrichtung 12 in einer weiteren Ausführungsform als Wärmereaktor 90, welcher unterhalb des Bodens 5 der Kammer 1 (Kammer in der Fig. 7 nicht gezeigt) angeordnet ist.

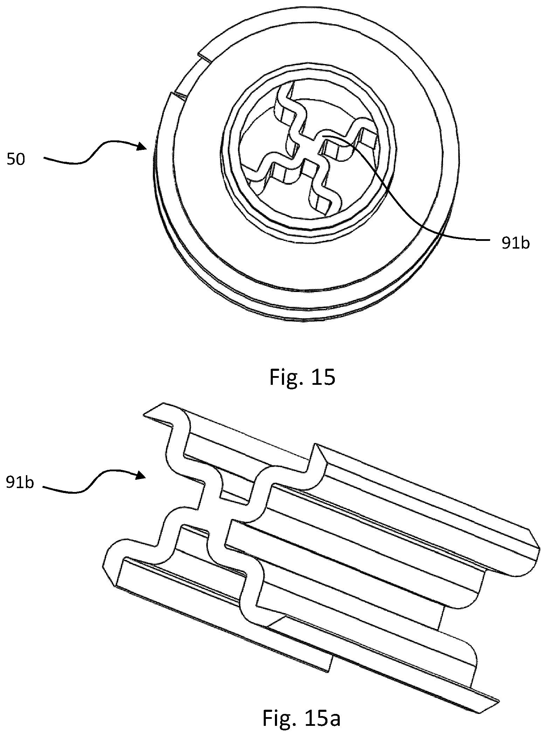

Das Beispiel der Fig. 7 zeigt einen Wärmereaktor 90 optional als rundes, langes, hohles Rohr 91 (beliebigen, konstanten oder variierenden Querschnitts), beispielsweise aus verchromtem Messing, das mit Wärmeleitgranulat, beispielweise Siliziumkugeln und/oder mit mindestens einem Inlay wie beispielsweise 91b, siehe z. B. Fig. 15b, gefüllt sein oder dieses aufweisen kann. Z. B. oben oder an anderer Stelle an diesem Rohr 91 ist eine zweite Heizvorrichtung 12 angeordnet, hier in Form einer Heizmanschette. Das Innere des Rohrs 91 steht in fluidischer Verbindung mit der Kammer 1.

Die Aufnahmevorrichtung 50 für das Behandlungsmedium B ist unten an diesem Rohr 91 angeordnet und fluidisch mit diesem verbunden. Sie ist im Beispiel der Fig. 7 von einer weiteren, optionalen, dritten Heizvorrichtung 12', hier ebenfalls in Form einer Heizmanschette, umgeben, welche alternativ an anderer Stelle des Rohrs 51 oder des Wärmereaktors 90 vorgesehen sein kann.

Die Kammer 1, in der die Polymerelemente P angeordnet sind kann nun auf eine vorbestimmte Temperatur (vor)geheizt werden, z. B. auf 155°C, z. B. über eine Dauer von ca. 45 min. Da das Behandlungsmedium B räumlich vergleichsweise weit von der sich erwärmenden Kammer 1 entfernt ist, erwärmt das Behandlungsmedium B sich nur unwesentlich, insbesondere nicht bis zu seinem Siedepunkt.

Die erfindungsgemäße Vorrichtung 100 bzw. ihre Kammer 1 wird evakuiert, beispielsweise indem, etwa mittels der Unterdruckleitung 17 (siehe z. B Fig. 7a), ein Unterdruck von ca. 0,5 bar oder ca. 0,25 bar angelegt wird.

Die obere zweite Heizvorrichtung 12 wird auf eine höhere Temperatur geheizt, z. B. ca. 170°C bis 210°C. Dadurch erwärmt sich ebenfalls das Rohr 91 und mit diesem das optional darin befindliche Wärmeleitgranulat und/oder dem optional ebenfalls umfassten, mindestens einen Inlay 91b.

Wird nun die dritte Heizvorrichtung 12' eingeschaltet, beispielsweise auf ca. 160°C bis 200°C, wird das Behandlungsmedium B erwärmt und beginnt in Abhängigkeit der verwendeten Heizleistung und der verwendeten Behandlungsmedien in einer bestimmten Zeit zu sieden (beispielsweise bei ca. 0,5 bar Innendruck).

Im Beispiel der Fig. 7 ist zwischen dem Außendurchmesser des Rohrs 91 und dem optional deutlich größeren Nenndurchmesser der Heizvorrichtungen 12, 12' ein Manschettenadapter 93 - oder jeweils ein solcher - in Form eines Metallelements, beispielsweise als Rohr oder dickwandiges Rohr, beispielsweise aus Aluminium gefertigt, eingefügt, um die Wärme besser und gleichmäßiger auf das Rohr 91 der Fluidverbindung zu übertragen.

Der Manschettenadapter 93 weist beispielsweise eine Materialdicke von mehr als 3 mm, beispielsweise eine Materialdicke von mehr als 5 mm auf.

Der optionale Manschettenadapter 93 zwischen dem Rohr 91 und einer oder allen Heizvorrichtungen 12, 12' weist beispielsweise jeweils eine Länge auf, die größer ist als die Länge der jeweiligen Heizvorrichtung 12, 12', im Beispiel der oberen Heizvorrichtung ist sie mindestens doppelt so lang wie diese.

Das Behandlungsmedium B verdampft bei seinem Erwärmen mittels der hierin als dritten bezeichneten Heizvorrichtung 12' und steigt nach oben. Durch den Wärmereaktor 90 wird es weiter erwärmt, (im hier genannten Beispiel auf bis zu 180°C oder bis 200°C) bis es in die Behandlungskammer 1 einströmt.

Links in Fig. 7 ist eine weitere Aufnahmevorrichtung 50 für das Behandlungsmedium B gezeigt. Diese kann einer der hierin genannten Ausführungsformen entsprechen, beispielsweise der Ausführungsform der Fig. 5. Die weitere, optionale Aufnahmevorrichtung 50 kann beispielsweise wie gezeigt eine Kapsel sein oder auch ein weiterer Wärmereaktor. Die weitere Aufnahmevorrichtung 50 und der Wärmereaktor 90 können zeitgleich oder zeitlich nacheinander geschalten sein oder zum Einsatz kommen.

Das Beispiel der Fig. 7 zeigt ferner eine optionale Verjüngung des Bodens 5, also einen Abschnitt des Bodens 5, der eine geringere Dicke aufweist als benachbarte Abschnitte des Bodens 5, welche hier als Kreistasche ausgeführt ist. Eine solche Kreistasche kann beispielsweise einen Durchmesser aufweisen von 20 mm bis 200 mm, besonders bevorzugt einen Durchmesser von 50 mm bis 120 mm, wie 70 mm bis 100 mm ,und bevorzugt eine Tiefe von 0,5 mm bis 20 mm, besonders bevorzugt von 1 mm bis 10 mm, wie 3 mm bis 6 mm. Die Wandstärke im Bereich einer solchen Kreistasche beträgt damit bevorzugt ein Maß von 1 mm bis 10 mm, besonders bevorzugt von 2 mm bis 8 mm, wie 3 mm bis 6 mm.

**Fig. 7a** zeigt die Heizvorrichtung für eine erfindungsgemäße Vorrichtung in einer weiteren Ausführungsform in Schnittdarstellung, ebenfalls ausgestaltet als Wärmereaktor 90.

Es wird insbesondere auf die Beschreibung zu Fig. 7 Bezug genommen.

Gut zu erkennen ist in der Darstellung der Fig. 7a das Behandlungsmedium B, das sich in dieser Ausführungsform in flüssiger Form in der Aufnahmevorrichtung 50 für das Behandlungsmedium B befindet, welche unten am Rohr 91 angeordnet und fluidisch mit diesem verbunden ist.

Das Rohr 91 kann im Beispiel der Fig. 7a ebenfalls mit Wärmeleitgranulat und/oder einem Inlay wie einem Inlay 91b gefüllt sein, dies ist in der Schnittdarstellung zum Zweck der besseren Übersicht weggelassen.

**Fig.** 7b zeigt die Heizvorrichtung der Fig. 7a ergänzt durch eine optionale vierte Heizvorrichtung 12'', die ebenfalls Teil des Wärmereaktors 90 ist oder mit diesem in Kontakt steht. In dieser Ausführungsform weist der Wärmereaktor 90 somit nicht einen, nicht zwei (wie in anderen Ausführungsformen) sondern drei Heizvorrichtungen entlang eines Weges für das Behandlungsmedium B oder dessen Dampf auf. In Fig. 7b sind sie alle mit dem Rohr 91 des Wärmereaktors 90 verbunden oder Teil hiervon.

Losgelöst vom Wärmereaktor 90 oder dessen vierter Heizvorrichtung 12'' weist die Ausführungsform der Fig. 7b ein Ventil 95 auf, angeordnet, um eine Öffnung der Kammer 1 zu einem Äußeren hiervon, z. B. der Atmosphäre oder einem Gasspeicher, zu öffnen oder zu verschließen. Das Ventil 95 ist nur ein Beispiel für eine Vorrichtung zum Herstellen oder Zulassen einer Fluidverbindung oder zum Unterbinden einer Fluidverbindung zwischen der Kammer 1 und einem weiteren Raum oder der Umgebung. Ein Absperrhahn, eine Drossel, usw. (kurz: Absperrvorrichtung) sind ebenfalls von der vorliegenden Erfindung umfasst.

Das Ventil 95, oder die Absperrvorrichtung, kann wie in Fig. 7b gezeigt in jeder Ausführungsform in einer Leitung 97 angeordnet sein. Es kann alternativ Teil des Bodens sein.

Das Ventil 95 oder die Absperrvorrichtung kann geöffnet werden, um den Unterdruck, welcher phasenweise in der Kammer 1 herrscht, durch nachströmendes Gas wie der Umgebungsluft abzubauen oder auszugleichen, etwa beim Übergang zu Verfahrensschritt c), oder bis zu ca. 15 Sekunden zeitversetzt davor oder danach. Das Ventil 95 kann in seinem fluidischen Querschnitt, bevorzugt stufenlos, veränderbar sein. Es kann zur Veränderung seines Querschnitts gesteuert oder geregelt werden. Eine entsprechende Ansteuerung des Ventils 95 oder der Absperrvorrichtung kann vorgesehen sein, die Steuervorrichtung der Vorrichtung 100 kann entsprechend programmiert sein.

**Fig. 7c** zeigt die erfindungsgemäße Vorrichtung 100 zur Behandlung von Polymerelementen P in einer weiteren Ausführungsform.

Es wird auf die Beschreibung der Fig. 7b Bezug genommen, um Wiederholungen zu vermeiden. Im Folgenden wird lediglich auf die Unterschiede zur Fig. 7b eingegangen.

An der Unterdruckleitung 17 zweigt im Beispiel der Fig. 7c eine weitere Leitung 17a ab, welche mittels eines weiteren Ventils 95a geöffnet bzw. geschlossen werden kann. Diese Leitung 17a kann als Bypassleitung dienen und z. B. ein Kondensieren von Behandlungsmedium im Verfahrensschritt c) zumindest begünstigen, indem Luft oder Gas mit bevorzugt kälteren Temperaturen dort zugeführt werden kann bzw. wird.

Die Leitung 17a kann zu einem Äußeren führen, etwa zur Atmosphäre, in Verbindung mit einem Luft- oder Gasreservoir, usw.

Vom Boden der Kapsel 50 für das Behandlungsmedium B oder des Wärmereaktors 90 geht optional eine weitere Leitung 17b ab, welche optional mit einem weiteren Ventil 95b geöffnet bzw. geschlossen werden kann. Mittels dieser Leitung 17b kann, wenn das Ventil 95b geöffnet wird, beispielsweise nach der Behandlung (siehe Verfahrensschritt a) bis c)) überschüssiges Behandlungsmedium B bzw. nach einem Funktionalisierungsschritt (Verfahrensschritt d)) Funktionalisierungsmittel abgeführt und optional recycled werden.

Die Ventile 95a und 95b können manuell oder automatisch geöffnet bzw. geschlossen und/oder in deren fluidischen Querschnitten bevorzugt stufenlos verändert werden. Die Steuervorrichtung kann dies bewirken.

In manchen Ausführungsformen hat das Ventil 95 zum Einführen von Luft und/oder Gas in die Kammer eine Querschnittsfläche von mindestens 1 mm², bevorzugt von mindestens 3 mm² und besonders bevorzugt von mindestens 5 mm², wie beispielsweise zwischen 6 mm² und 10 mm².

In einigen Ausführungsformen hat das Ventil 95 zum Einführen von Luft und/oder Gas in die Kammer eine Querschnittsfläche oder einstellbare Querschnittsfläche, die sich zur Querschnittsfläche oder einstellbaren Querschnittsfläche des Ventils 95a, welches in der Leitung 17a, welche von der Unterdruckleitung 17 abzweigt, angeordnet ist, in einem Verhältnis zwischen 100:1 und 2:1, bevorzugt zwischen 50:1 und 5:1, ganz besonders bevorzugt zwischen 30:1 und 5:1 verhält.

**Fig. 8** zeigt den Ablauf eines erfindungsgemäßen Verfahrens zur Behandlung von Polymerelementen P in einer beispielhaften Ausführungsform. Hierbei sind die Polymerelemente P durch einen additiven Herstellungsprozess erhalten worden.

Es wird auf die Beschreibung und die Bezugszeichen der Fig. 1 bis Fig. 5 Bezug genommen.

Verfahrensschritt S1 repräsentiert das Bereitstellen einer erfindungsgemäßen Vorrichtung 100.

S2 repräsentiert das Bereitstellen der zu behandelnden Polymerelemente P in der Kammer 1 der Vorrichtung 100, beispielsweise in oder an der Aufnahmevorrichtung 9.

Im Verfahrensschritt S3 verteilt sich das, vorzugsweise dampfförmige Behandlungsmedium B frei in der Kammer 1.

Hierzu wird es im Verfahrensschritt S3 durch Heizen, z. B. in einem oder mehreren Wärmereaktor(en) 90 verdampft.

Alternativ wird flüssiges, Behandlungsmedium B in der Kammer 1, vorzugsweise frei, also auf dem Bodenabschnitt 5a und/oder in der Sicke 15 vorgesehen. Alternativ kann das Behandlungsmedium B zuvor und zumeist in flüssiger Form in die Kammer 1 eingebracht worden sein und sich z. B. auf dem Bodenabschnitt 5a oder in der Sicke 15 verteilt haben.

Verfahrensschritt a) repräsentiert den Erwärmungsschritt zum Erwärmen der Polymerelemente P in der Kammer 1 unter Einsatz der ersten Heizvorrichtung 11 oder nur der ersten Heizvorrichtung 11.

Im Verfahrensschritt b), der den Verdampfungsschritt darstellt, wird das Behandlungsmedium B in der Kammer 1 mittels der zweiten Heizvorrichtung 12, oder nur mittels der zweiten Heizvorrichtung 12, verdampft. Die zweite Heizvorrichtung 12 wird nach Erreichen des Dampfzustands zu einem geeigneten und zumeist in einer Steuervorrichtung der Vorrichtung 100 festgelegten Zustand oder Zeitpunkt gedrosselt oder abgeschaltet.

Der Einsatz der Unterdruckvorrichtung, siehe die Unterdruckleitung 17, kann zum Erreichen des dampfförmigen Zustands beitragen. Sie kann ebenfalls, vorzugsweise automatisch, von der Steuervorrichtung angesteuert oder geregelt werden. Letzteres kann auch für die Umwälzvorrichtung 21 gelten.

Schließlich kann optional, hier als Verfahrensschritt c) dargestellt, ein Kühlschritt zum Kühlen der Polymerelemente P vom erfindungsgemäßen Verfahren umfasst sein. In diesem Schritt wird das Behandlungsmedium B kondensieren und kann auf dem Bodenabschnitt 5a und/oder in der Sicke 15 aufgefangen und zur Wiederverwendung bereitgehalten werden.

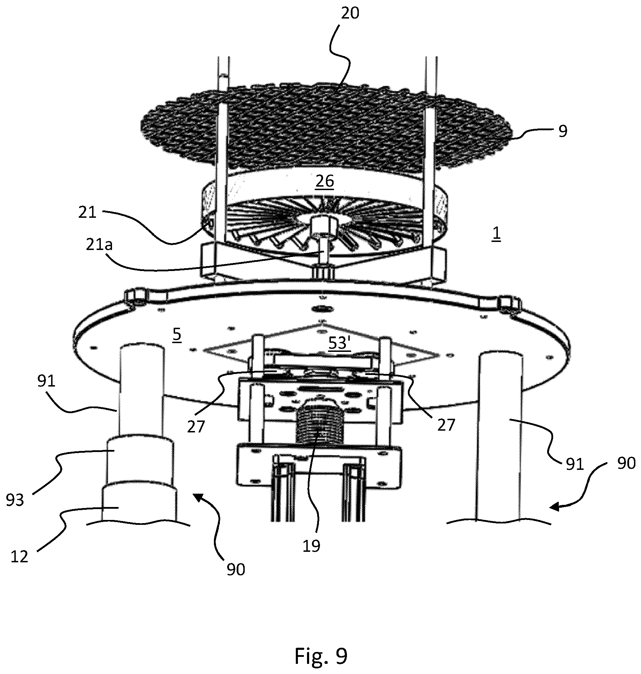

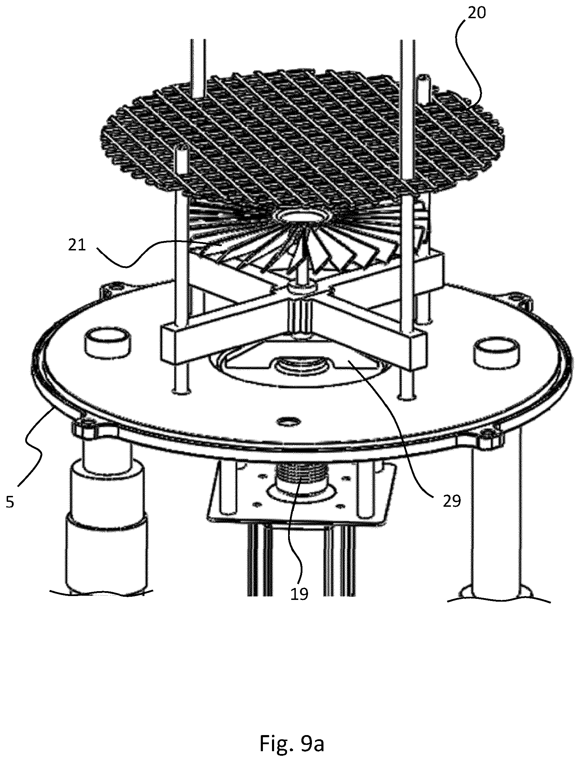

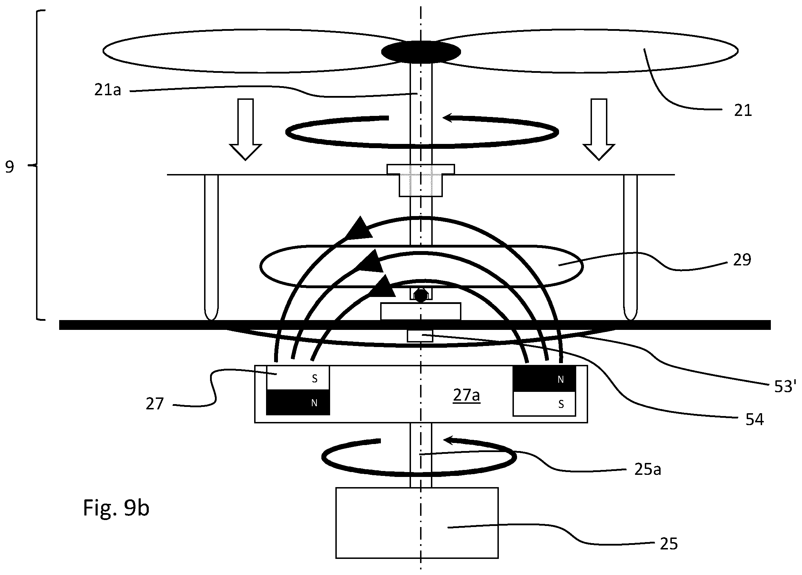

**Fig. 9** zeigt eine erfindungsgemäße Vorrichtung 100 zur Behandlung von Polymerelementen P in einer weiteren Ausführungsform mit Perspektive von schräg unten. Zur besseren Übersichtlichkeit sind die umgebenden Wandungen 3 und der Deckel 7 der Kammer 1 nicht dargestellt.

Es wird auf die Beschreibung zu den vorausgehenden Figuren, insbesondere auf die Beschreibung zu Fig. 7 und Fig. 7a, Bezug genommen.

Exemplarisch sind, wie auch in jeder anderen Ausführungsform möglich, zwei Wärmereaktoren 90 vorgesehen. Es können mehr als zwei Wärmereaktoren 90 vorgesehen sein, z. B. drei, vier oder mehr.

Im Beispiel der Fig. 9 sind die Wärmereaktoren 90 optional ebenfalls runde, lange, hohle Rohre 91, beispielsweise aus beschichtetem Aluminium, die mit Inlays, wie beispielweise mit einem oder mehrerer Inlay(s) 91b, gefüllt sein können.

Beispielsweise sind sie unterhalb der Kammer 1 (in Fig. 9 nicht dargestellt) bzw. unterhalb des Bodens 5 der Kammer 1 angeordnet. An den beiden Rohren 91 sind die vorstehend diskutierten Heizvorrichtungen angeordnet, hier z. B. in Form einer Heizmanschette. Das Innere der Rohre 91 steht jeweils in fluidischer Verbindung mit der Kammer 1.

In manchen Ausführungsformen können am Deckel 7 der Kammer 1 (in Fig. 9 nicht gezeigt) weitere (erste) Heizvorrichtungen, beispielsweise in Form von weiteren Rohren oder mindestens einer Heizschnur und/oder mindestens einer Heizmatte am Umfang der Wandung, wie hierin beschrieben, angeordnet sein. Erste und/oder zweite Heizvorrichtungen können mittels Temperaturfühlern, wie z. B. Thermoelementen bevorzugt im näheren Bereich der Heizvorrichtungen (Kontaktmessung) und im Inneren der Kammer (Luft- oder Gastemperatur), geregelt werden.

Die Leistung einer jeden dieser Heizvorrichtungen 12, 12', 12" kann beispielsweise ca. 200 Watt bis 1000 Watt betragen, die Gesamtleistung aller Heizvorrichtungen sollte bevorzugt zwischen 1000 Watt und 3500 Watt liegen. Hiervon abweichende Werte können ebenfalls erzielt werden.

Eine Aufnahmevorrichtung 50 für das Behandlungsmedium B (in Fig. 9 nicht gezeigt) kann jeweils in oder an wenigstens einem der Rohre 91 angeordnet und fluidisch mit diesem bzw. diesen verbunden sein. Heizvorrichtungen 12, 12', 12" können insbesondere weiter unten an den Rohren 91 vorgesehen sein.

In diesem Zusammenhang wird erneut auf die Beschreibung der Fig. 7 verwiesen.

Im Beispiel der Fig. 9 ist zwischen dem Außendurchmesser des Rohrs 91 und dem deutlich größeren Nenndurchmesser der Heizvorrichtung 12, 12' ein Manschettenadapter 93 in Form eines Metallelements, beispielsweise als Rohr oder dickwandiges Rohr, beispielsweise aus Aluminium gefertigt, eingefügt, um die Wärme besser und gleichmäßiger jeweils auf das Rohr 91 der Fluidverbindung zu übertragen.

Optional kann vorgesehen sein, den bzw. die Wärmereaktor(en) 90 vorzuwärmen. Dabei kann beispielsweise die eine zweite Heizvorrichtung 12, wie beispielsweise eine Heizmanschette, des Wärmereaktors 90 in einem oberen Abschnitt hiervon und/oder eine dritte Heizvorrichtung 12' des Wärmereaktors 90 in einem unteren Abschnitt hiervon (siehe Fig. 7) und/oder von evtl. weiteren Heizvorrichtungen an den Wärmereaktoren 90 genutzt werden, um den Wärmereaktor 90 bevorzugt auf eine Temperatur zwischen 30°C und 150°C zu erwärmen, bevorzugt zwischen 60°C und 100°C, wie beispielsweise auf ca. 80°C.

Ein optionales Vorheizen kann vorteilhaft sein, um für eine optimale Wiederholbarkeit bei unterschiedlich langen Abkühlzeiten zwischen den Prozessen zu sorgen, womit eine unterschiedliche Restwärme innerhalb der verschiedenen Maschinenelemente einhergehen kann, wie beispielsweise eine zum Teil stark variierende Restwärme vom Wärmereaktor 90.

Im Beispiel der Fig. 9 sind - wie auch in beliebigen anderen Ausführungsformen ferner - z. B. - zwei Permanentmagnete 27 zu erkennen, welche oberhalb eines Kühlkörpers 19 angeordnet sind. Oberhalb der Permanentmagnete 27 ist im Boden 5 der Kammer 1 eine weitere thermische Isolierung 53' zu erkennen, welche insbesondere dazu dient die Permanentmagnete 27 vor der Wärmeabstrahlung des Bodens 5 der Kammer 1 zu schützen.

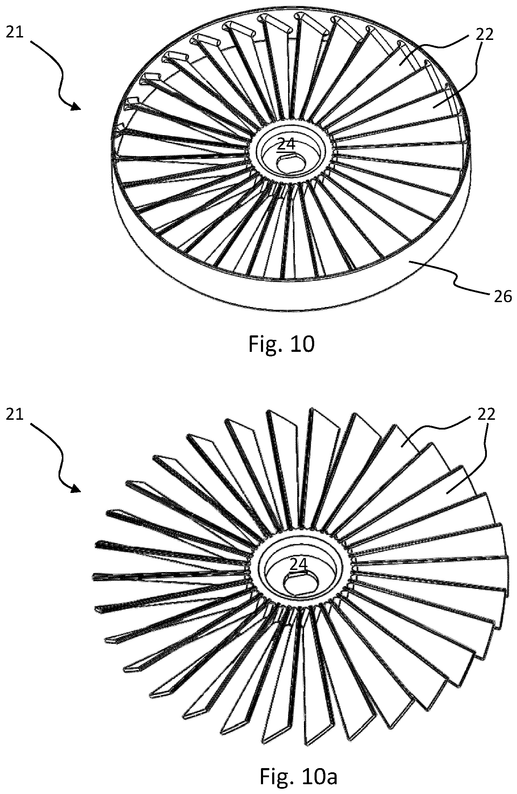

Der Magnetantrieb 23, welcher im Beispiel der Fig. 9 die Permanentmagneten 27 und ein ferromagnetisches Metall 29 (siehe Fig. 9a) umfasst, dient dem Antrieb einer Umwälzvorrichtung 21, im vorliegenden Beispiel eines Propellers mit umlaufendem Segment 26 (in Fig. 9a weggelassen), angetrieben durch eine Antriebswelle 21a. Die Ausgestaltung der Umwälzvorrichtung 21 ist rein beispielhaft und nicht als beschränkend zu verstehen. Verschiedene Ausgestaltungen derselben werden zu den Fig. 10ff detaillierter beschrieben.

In manchen Ausführungsformen weist die Antriebswelle 21a zu ihrem Antreiben und/oder ihrer Lagerung an einem distalen Ende eine Fläche, eine Spitze, eine abgeflachte Spitze, eine abgerundete Spitze, eine Bogenform oder eine Kugelform auf. Dieses distale Ende ist bevorzugt als Axiallager 57 (siehe Fig. 13) zum Abstützen der Zugkräfte der Magnetkräfte des Magnetantriebs 23 ausgebildet, wobei das Gegenstück der Lagerung bevorzugt durch ein Maschinenelement aus einem Material gebildet ist, das vorzugsweise niedrige bis sehr niedrige Reibwerte aufweist und/oder das den Betriebstemperaturen innerhalb der Kammer 1 standhält, wie beispielsweise PEEK oder spezielle Hochtemperatur-Trockengleitkunststoffe.

In einigen Ausführungsformen ist die Kugelform durch das Fügen einer Kugel oder zumindest eines Kugelabschnitts wie einer Halbkugel mit der Antriebswelle 21a ausgeführt, wobei eine Kugel bevorzugt aus einem harten oder gehärtetem Metall, einem Glas oder einer Keramik gebildet ist.

Die Anzahl der Umwälzvorrichtungen 21 im Beispiel der Fig. 9 ist rein beispielhaft und nicht als beschränkend zu verstehen. Auch mehrere Umwälzvorrichtungen 21 innerhalb der Kammer 1 sind von der vorliegenden Erfindung umfasst. Liegen mehrere Umwälzvorrichtungen 21 im Inneren der Kammer 1 vor, so können diese gleichzeitig oder nacheinander ein- bzw. zugeschaltet werden. Die Steuervorrichtung kann entsprechend programmiert sein.

Die wenigstens eine Umwälzvorrichtung 21 wird mit einer Drehzahl von bevorzugt 100 U/min bis 3000 U/min, besonders bevorzugt zwischen 500 U/min und 1500 U/min, wie beispielsweise etwa 1200 U/min, betrieben. Dies dient dazu, um im Inneren der Kammer 1 eine Art Umluftheizung zu generieren und somit die Polymerelemente P auf eine möglichst gleichmäßige Zieltemperatur zu erwärmen, bevorzugt für einen Zeitraum von bis zu 180 Minuten, besonders bevorzugt bis zu 60 Minuten, wie beispielsweise für einen Zeitraum von 10 Minuten bis 45 Minuten.

Die wenigstens eine Umwälzvorrichtung 21 kann in bestimmten Ausführungsformen ihre Drehzahl und/oder Drehrichtung ändern. Die Steuervorrichtung kann entsprechend programmiert sein. Dies kann vorteilhaft für eine optimierte Verteilung des Behandlungsmediums B sorgen. Beispielsweise kann in Abständen von 60 Sekunden bis 120 Sekunden die Drehrichtung z. B. mindestens eines der optionalen Propeller der Umwälzvorrichtung 21 umgedreht werden.

Oberhalb des Propellers der Umwälzvorrichtung 21 ist in Fig. 9 als mechanischer Schutz der Umwälzvorrichtung 21 ein Lochblech 20 zu sehen. Die Ausgestaltung als Lochblech ist rein beispielhaft, jeder andere mechanische Schutz ist ebenfalls von der vorliegenden Erfindung umfasst.

**Fig. 9a** zeigt die Vorrichtung 100 aus Fig. 9,von schräg oben mit Blick auf das Lochblech 20.

Es wird insbesondere auf die Beschreibung zu Fig. 9 Bezug genommen, um Wiederholungen zu vermeiden. In Abwandlung zur Fig. 9 ist in Fig. 9a eine weitere mögliche Form der Umwälzvorrichtung 21 gezeigt.

Gut zu erkennen ist in der Darstellung der Fig. 9a ein ferromagnetisches Metall 29, welches den Magnetfeldabnehmer des Magnetantriebs 23 bildet oder von diesem umfasst wird.

Ebenfalls sind im Boden 5 der Kammer 1 die Öffnungen oder Austrittsöffnungen der Wärmereaktoren 90 für das Behandlungsmedium B zu erkennen, mittels welcher die Rohre 91 mit der Kammer 1 (in Fig. 9a nicht gezeigt) fluidisch verbunden sind und durch welche das Behandlungsmedium B in die Kammer 1 eintritt.

**Fig. 9b** zeigt eine schematische Darstellung des Magnetantriebs 23 der Umwälzvorrichtung 21 aus den vorhergehenden Figuren.

In einigen Ausführungsformen wird die Umwälzvorrichtung 21 und/oder die Verwirbelungsvorrichtung über einen Magnetantrieb 23 ohne eine mechanische Verbindung hierfür, angetrieben.

Ein Magnetantrieb 23 kann mittels eines oder mehrerer Permanentmagneten 27, angebracht oder eingebracht auf/in einem drehbaren Maschinenelement 27a außerhalb der Kammer 1, und mindestens einem ferromagnetischen Magnetfeldabnehmer 29 des Magnetfelds innerhalb der Kammer ausgebildet sein oder diese aufweisen. Das drehbare Maschinenelement kann hierbei aus magnetischem Edelstahl gefertigt sein oder ein beschichtetes Maschinenelement aus Stahl sein oder aufweisen.

Das drehbare Maschinenelement zur Aufnahme von Magneten ist bevorzugt aus einem nicht ferromagnetischen Material gebildet, wie beispielsweise aus Aluminium oder aus einem Polymerwerkstoff.

In manchen Ausführungsformen ist das drehbare Maschinenelement 27a zur Aufnahme der Magnete mit einem Antrieb bzw. Motor 25 verbunden, wobei zwischen dem Maschinenelement und dem Motor bevorzugt thermale Vorrichtungen, wie beispielsweise mindestens ein zylindrischer Kühlkörper 19 (siehe z. B. Fig.9), mit Kühlrippen angebracht sein können, und wobei solche Vorrichtungen bevorzugt zwangsbelüftet werden können, beispielsweise durch einen Axiallüfter.

In manchen Ausführungsformen ist ein Permanentmagnet, wie beispielsweise ein Neodym Magnet, vorgesehen. Im Beispiel der Fig. 9b sind zwei Permanentmagnete 27 in dem drehbaren Maschinenelement 27a angeordnet, in wieder anderen Ausgestaltungen können drei oder mehr Permanentmagnete vorgesehen sein. Bei mehr als einem Permanentmagnet sind in bevorzugten Ausführungsformen die Pole (Nord/Süd) in gegenläufiger Richtung eingebaut und/oder ausgerichtet. Die Magnete sind bevorzugt kreisrund oder quadratisch und können bevorzugt Durchmesser, Diagonalen und/oder Kantenlängen zwischen 10 mm und 40 mm aufweisen, besonders bevorzugt zwischen 15 mm und 30 mm, wie beispielsweise zwischen 15 mm und 25 mm und in Höhen zwischen 4 mm und 30 mm, bevorzugt zwischen 6 mm und 15 mm und besonders bevorzugt zwischen 8 mm und 12 mm.

In manchen Ausführungsformen sind die Permanentmagnete 27 oder ist der Teil des Magnetantriebs 23, der sich außerhalb der Kammer befindet, durch mindestens eine thermische Isolierung 53' vom heißen Boden 5, von der heißen Wandung 3 und/oder vom heißen Deckel 7 der Kammer 1 thermisch isoliert angeordnet.

Eine thermische Isolierung kann beispielsweise eine Folie oder eine, bevorzugt dünne, Platte sein oder aufweisen. Sie kann bevorzugt zwischen den Permanentmagneten 27 und dem, bevorzugt metallischen, Gehäuse der Kammer 1, wie beispielsweise dem Boden 5 aus Aluminium, angeordnet sein.

Es können in manchen Ausführungsformen mehrere thermische Isolierungen gleicher oder unterschiedlicher Bauart und/oder Dicken vorgesehen sein, bevorzugt aus Materialien oder solche Materialien aufweisend, die den Magnetfluss ins Innere der Kammer zumindest nicht wesentlich beeinflussen oder stören. Solche Materialien können beispielsweise Keramik, Glas, Glimmer und/oder ein Polymer sein oder solche aufweisen, wie beispielsweise eine Kaptonfolie oder eine Glimmerplatte, wobei die Materialstärken bevorzugt zwischen 0,05 mm und 2 mm und besonders bevorzugt zwischen 0,1 mm und 1 mm liegen.

In einigen Ausführungsformen ist eine Folie oder eine dünne Platte durch zusätzliche Vorrichtungen auf eine Weise an der Bodenplatte, am Deckel oder an der Wandung angeordnet, dass sich zumindest über einen gewissen Bereich Abstände ergeben, die eine zusätzliche, thermisch isolierende Luft- Gas- oder Vakuumbarriere bilden können, wobei solche Abstände zumindest in Abschnitten bevorzugt zwischen 0,05 mm und 5 mm, besonders bevorzugt zwischen 0,2 mm und 2,5 mm, wie beispielsweise zwischen 0,5 und 1,5 mm, liegen können. Beispielsweise kann, wie im Beispiel der Fig. 9b, im Zentrum einer thermisch isolierenden Platte oder Folie ein Abstandselement 54, wie ein kleiner PEEK-Ring mit einer Höhe zwischen 0,4 mm und 1,3 mm eingebracht sein. Wird die thermische Isolierung 53' bevorzugt an ihrem Randbereich bzw. entlang ihres Randbereichs und/oder ihres Umfangs durch mechanische Vorrichtungen niedergehalten oder niedergespannt wie beispielsweise durch einen Edelstahlring, während sich mindestens ein Abstandselement beispielsweise zum Kammerboden hin gerichtet dazwischen befindet, dann bildet sich durch die Deformierung der thermischen Isolierung 53' eine thermisch isolierende Kavität aus, die in ihrer Dicke zum Zentrum hin ansteigt und in der gemittelten Dicke bevorzugt ein Maß zwischen 0,2 mm und 1,2 mm annehmen kann.

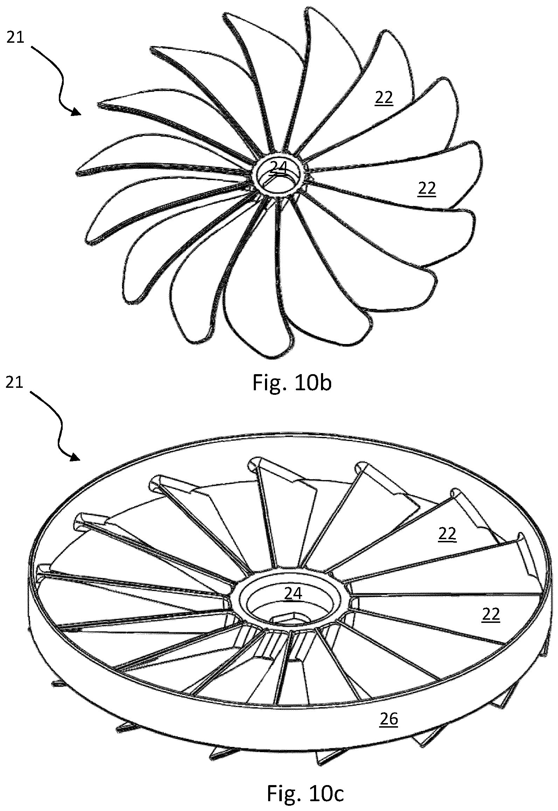

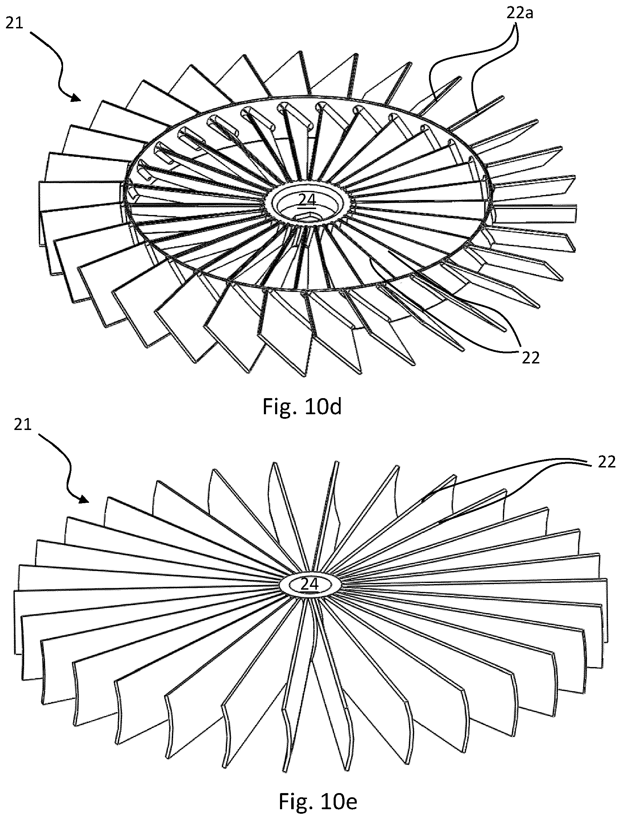

**Fig. 10** zeigt die beispielhafte Ausgestaltung der Umwälzvorrichtung 21 der Fig. 9 und der Fig. 9a von schräg oben.

In einigen Ausführungsformen kann die erfindungsgemäße Vorrichtung 100 mit einem, zwei oder mehreren Umwälzvorrichtungen 21, beispielsweise Propellern, Lüftern, und/oder Verwirbelungsvorrichtungen, ausgestaltet sein.

Die Umwälzvorrichtung 21 kann ausgestaltet und angeordnet sein, um, z. B. mittels des optionalen Propellers, eine Verwirbelung zu bewirken.

Eine, zwei oder mehr Umwälzvorrichtung(en) 21 kann/können am oder im Bereich des Bodens 5 der Kammer 1 und/oder des Deckels 7 der Kammer 1 oder und/oder der Wandung 3 der Kammer 1 angeordnet, montiert oder gelagert sein.

In bestimmten Ausführungsformen ist die wenigstens eine Umwälzvorrichtung 21 in einem mittleren Bereich (in vertikaler Richtung) der Kammer 1 in deren Innerem, wie beispielsweise im oder nahe dem Zentrum der Kammer und/oder im Bereich der zu behandelnden Polymerelemente P und/oder zwischen den Polymerelementen P angeordnet, wobei ein rotatorischer Antrieb für die Umwälzvorrichtung 21 in Gestalt einer langen Antriebswelle 21a oder Achse, mit oder ohne zusätzlichen Lagerungen wie beispielsweise Radiallager, Kugellager oder Gleitlager vorgesehen ist. Die Antriebswelle 21a oder -achse kann als flexible Welle ausgeführt sein. Der Antrieb hierfür kann besagter Magnetantrieb 23 sein bzw. der Motor 25, der wiederum diesen antreibt.

In manchen Ausführungsformen sind mehrere Umwälzvorrichtungen 21, insbesondere mehrere Propeller, mit gleicher und/oder unterschiedlicher Geometrie auf derselben Antriebswelle 21a montiert, beispielsweise in einem axialen Abstand zwischen 10 mm und 100 mm.

In einigen Ausführungsformen ist die mindestens eine Umwälzvorrichtung 21 in einem bevorzugt axialen Abstand zwischen 10 mm und 200 mm zur Wandung, bevorzugt zum Boden 5 angeordnet, bevorzugt in einem Abstand zwischen 20 mm und 120 mm, besonders bevorzugt zwischen 30 mm und 100 mm, wie beispielsweise zwischen 40 mm und 80 mm.

In manchen Ausführungsformen hat die mindestens eine Umwälzvorrichtung 21 einen Außendurchmesser zwischen 50 mm und 350 mm, bevorzugt zwischen 75 mm und 250 mm, besonders bevorzugt zwischen 90 mm und 200 mm, ganz besonders bevorzugt zwischen 120 mm und 180 mm, wie beispielsweise zwischen 140 mm und 160 mm.

Die Umwälzvorrichtung 21 im Beispiel der Fig. 10 entspricht beispielsweise derjenigen in Fig. 9, nämlich in Form eines Propellers 21 mit einem, entlang der Stirnabschnitte der den Propeller 21 ausmachenden radial verlaufenden Propellerelemente oder Flügel 22 in Umfangsrichtung umlaufenden, Segment 26, welches die zumeist gleichmäßig gestalteten Flügel 22 nach radial begrenzt.

Diese Ausgestaltung ist rein beispielhaft und nicht als beschränkend zu verstehen. In einigen Ausführungsformen kann die Geometrie der Flügel 22 anders sein als in Fig. 10 gezeigt, wie beispielsweise abwechselnd sich ändernde Flügelgeometrien, bevorzugt in einer Anordnung mit dynamischer Auswuchtung.

Im Beispiel der Fig. 10 weist die Umwälzvorrichtung 21 30 Flügel 22 auf. Die Anzahl der Flügel ist wiederum rein beispielhaft und nicht als beschränkend zu verstehen. So kann in manchen Ausführungsformen eine Umwälzvorrichtung 21 zwischen 2 und 100 Flügel 22 aufweisen, bevorzugt zwischen 5 und 70, besonders bevorzugt zwischen 10 und 50, wie beispielsweise zwischen 15 und 35 Flügel 22. In einigen Ausführungsformen kann eine Umwälzvorrichtung 21 als Vielflügler bezeichnet werden.

Die Flügel 22 der Umwälzvorrichtung 21 weisen im Vergleich zu einer Planfläche bevorzugte Winkel auf, wobei die Planfläche durch ein Lot bestimmt wird, welches gleichzeitig die Drehachse darstellt, um die sich die Umwälzvorrichtung 21 dreht.

In einigen Ausführungsformen können zumindest Teilbereiche solcher Winkel bevorzugt im äußeren Umfangsbereich gemessen zwischen 20° und 65° betragen, bevorzugt zwischen 25° und 60°, wie beispielsweise zwischen 27° und 53°.

Im Beispiel der Fig. 10 sind die Oberflächen der Flügel 22 der Umwälzvorrichtung 21 zumindest ansatzweise gerade oder eben ausgeführt, in anderen können sie konkav oder konvex ausgebildet sein.

Die Höhe der Umwälzvorrichtung 21 beträgt zwischen 5 mm und 100 mm, bevorzugt zwischen 8 mm und 70 mm, besonders bevorzugt zwischen 10 mm und 50 mm, wie beispielsweise zwischen 15 mm und 35 mm.

In manchen Ausführungsformen ist die Umwälzvorrichtung 21 zumindest teilweise durch additive Fertigung hergestellt, bevorzugt durch ein Licht induziertes Verfahren wie SLA oder ein Pulverbettverfahren wie beispielsweise SLS oder MJF und oder bevorzugt aus einem Material, das zumindest ein Polymer, ein Metall und/oder eine Keramik enthält.

In einigen Ausführungsformen kann die Umwälzvorrichtung 21 zumindest in Anteilen aus Polyamid (PA), Polypropylen (PP), Polyketon (PK), Polybutylenterephthalat (PBT), PPS, PEI, PPSU, PEEK, PEAK, PEK, PEKK, PFA, PTFE, einem UV-Resin wie beispielsweise einem Acrylat oder Mischungen daraus, gebildet sein, mit oder ohne Faserverstärkung.

In manchen Ausführungsformen wird die Umwälzvorrichtung 21 nach der Herstellung einem Postprocessing unterzogen, wie beispielsweise einem Glätten und/oder einem Funktionalisieren, wie beispielsweise einer Beschichtung mit Metall oder einer Fluorpolymer-Beschichtung.

Wie im Beispiel der Fig. 10 gut zu sehen, weist die Umwälzvorrichtung 21 in ihrem Zentrum mindestens eine formschlüssige Mitnehmerverbindung auf. Eine solche Mitnehmerverbindung kann beispielsweise als Schlüsselflächen, Vierkant oder Polygonverbindung ausgestaltet sein.

In manchen Ausführungsformen kann die Umwälzvorrichtung 21 auf eine Antriebswelle 21a axial geschraubt werden, in anderen wird sie gesteckt, beispielsweise mit einem Schnellverbindungsmechanismus, wie einem axialen Rast-Verschluss.

In manchen Ausführungsformen können zwei oder mehr Umwälzvorrichtungen 21 auf der gleichen Antriebswelle 21a montiert sein, indem sie bevorzugt einen axialen Abstand zueinander aufweisen, der etwa zwischen 2 mm und 100 mm oder auch mehr betragen kann, bevorzugt zwischen 5 mm und 50 mm, besonders bevorzugt zwischen 10 mm und 30 mm.

In einigen Ausführungsformen sind zwei oder mehr Umwälzvorrichtungen 21 alternativ oder ergänzend auf unterschiedlichen Wellen montiert und/oder werden durch unterschiedliche Antriebseinheiten oder Antriebsmotoren angetrieben.

Im Beispiel der Fig. 10 weist die Umwälzvorrichtung 21 im äußeren Bereich des Umfangs ein umlaufendes Segment 26, hier mit einer zumindest ansatzweise kreisrunden Ausgestaltung auf. Ein solcher Teilbereich der Umwälzvorrichtung 21 besonders bevorzugt im äußersten Umfang kann beispielsweise ausgestaltet sein in Form eines Zylinder- oder Rohrabschnitts, welches/welcher einen Durchmesser zwischen 80 mm und 300 mm**,** bevorzugt zwischen 100 mm und 250 mm**,** besonders bevorzugt zwischen 120 mm und 200 mm und eine Wandstärke zwischen 0,5 mm und 4 mm, bevorzugt zwischen 0,8 mm und 2,5 mm, besonders bevorzugt zwischen 1 mm und 2 mm aufweist. Die Höhe des umlaufenden (kreisrunden) Segments 26, welches die im bevorzugt äußeren Umfang der Umwälzvorrichtung kann in einigen Ausführungsformen zwischen 5 mm und 150 mm liegen, bevorzugt zwischen 8 mm und 80 mm und besonders bevorzugt zwischen 12 mm und 50 mm.

In der Ausführungsform der Fig. 10 ist das umlaufende, kreisförmige Segment bevorzugt am Umfang der Umwälzvorrichtung 21 in axialer Richtung symmetrisch ausgebildet. In anderen Ausgestaltungen ist es asymmetrisch, wie beispielsweise zumindest überwiegend nur in eine axiale Richtung ausgebildet, von der Ebene der äußeren Flügelspitzen aus betrachtet. Eine asymmetrische Ausführung kann innerhalb der Kammer in beide Richtungen eingebaut werden, also das kreisförmige Segment Richtung Innenwandung gerichtet, wie auch umgekehrt.

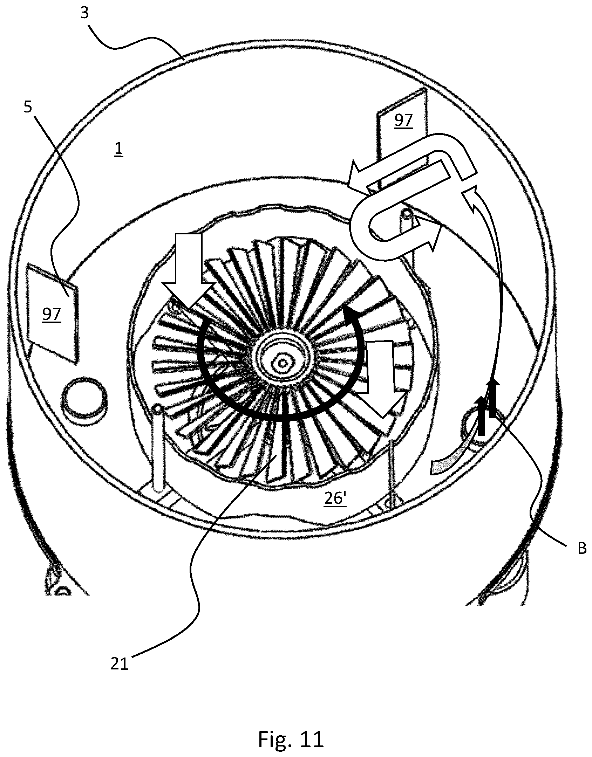

Das Segment 26 kann dazu dienen, eine Durchströmung der Kammer 1 in einer axialen oder vertikalen (bezogen auf die Figuren) Richtung zu bewirken, weniger in einer radialen oder horizontalen (bezogen auf die Figuren) Richtung. Wie zu nachfolgenden Figuren gezeigt kann das Segment 26 durch eine umlaufende Einhausung 26' (siehe Fig. 11) ergänzt oder ersetzt werden, welche im Zusammenwirken mit der Umwälzvorrichtung 21 eine ähnliche Wirkung erzielen kann.

**Fig. 10a** zeigt eine weitere beispielhafte Ausgestaltung der Umwälzvorrichtung 21 von schräg oben.

Es wird auf die Ausführungen zu Fig. 10 Bezug genommen.

Die Ausgestaltung der Umwälzvorrichtung 21 entspricht im Wesentlichen der Ausgestaltung der Fig. 10. Das umlaufende Segment 26 wurde weggelassen.

Es ist hier gut zu erkennen, dass die Flügel 22 eine im Wesentlichen rechteckige Form aufweisen.

**Fig. 10b** zeigt eine weitere beispielhafte Ausgestaltung der Umwälzvorrichtung 21 von schräg oben.

Es wird auf die Ausführungen zu Fig. 10 und Fig. 10a Bezug genommen.

Im Unterschied zur Fig. 10a weisen in dieser Ausgestaltung die Flügel 22 eine leicht gebogene Außenkontur auf, ähnlich einer Messerschneide.

**Fig. 10c** zeigt eine weitere beispielhafte Ausgestaltung der Umwälzvorrichtung 21 von schräg oben,

Es wird auf die Ausführungen zu Fig. 10, Fig. 10a und Fig. 10b Bezug genommen.

Die Ausgestaltung der Umwälzvorrichtung 21 entspricht im Wesentlichen der Ausgestaltung der Fig. 10. Im Gegensatz zur Fig. 10 stehen die Flügel 22 in der Ausführungsform der Fig. 10c über den unteren Rand des umlaufenden Segments 26 über.

**Fig. 10d** zeigt eine weitere beispielhafte Ausgestaltung der Umwälzvorrichtung 21 von schräg oben.

Es wird auf die Ausführungen zu Fig. 10 bis Fig. 10c Bezug genommen.

Die Ausgestaltung der Umwälzvorrichtung 21 entspricht im Wesentlichen der Ausgestaltung der Fig. 10. Im Gegensatz zur Fig. 10 weist die Umwälzvorrichtung 21 in der Ausführungsform der Fig. 10c einen zweiten Satz Flügel 22a auf, welcher außen am umlaufenden Segment 26 verteilt ist und einen anderen Winkel aufweist als die Flügel 22, welche näher dem Zentrum der Umwälzvorrichtung 21 zugewandt sind.

Die Anzahl der inneren Flügel 22 kann mit der Anzahl der äußeren Flügel 22a übereinstimmen, wie im Beispiel der Fig. 10d, muss aber nicht.

**Fig. 11** zeigt die Anordnung einer Umwälzvorrichtung 21 in einer erfindungsgemäßen Vorrichtung in einer weiteren Ausführungsform mit Perspektive von schräg oben.

Es wird auf die Ausführungen zu den vorausgehenden Figuren Bezug genommen.

Im Beispiel der Fig. 11 wird die Umwälzvorrichtung 21 von einer umlaufenden Einhausung 26' umgeben. Die Einhausung 26' weist an ihren Stirnseiten eine nicht planare Struktur auf, mittels welcher die Strömung innerhalb der Kammer 1 beeinflusst werden kann.

Das Behandlungsmedium B bzw. dessen Dampf strömt aus dem Wärmereaktor durch die Öffnung im Boden 5 der Kammer 1. Dies ist mittels zweier kleiner schwarzen Pfeile angedeutet.

Durch die Rotation der Umwälzvorrichtung 21, welche durch einen kreisförmigen, schwarzen Pfeil gegen den Uhrzeigersinn dargestellt ist, bildet sich in der Kammer 1 zuerst eine Strömung überwiegend schräg nach unten und radial nach außen, die vom Kammerboden 5 in einem bevorzugt laminaren Strom weiter radial nach außen relativ gleichmäßig in alle Richtungen verteilt wird und sich weiter in einer vorwiegend laminaren, wendelförmigen Strömung gleichmäßig an der Wandung 3 nach oben bewegt, wobei der Molekülstrom während dem Kontakt oder dem näheren Bereich des Bodens 5 und der Wandung 3 weiter erwärmt werden kann.

Im Beispiel der Fig. 11 wird der Strom des Behandlungsmediums B im weiteren Verlauf zusätzlich mittels im Inneren der Kammer 1 angeordneter Leitbleche 97 umgeleitet. Durch den zumindest teilweisen Aufprall des Stroms an den Leitblechen 97 und gleichzeitig die starke Umlenkung desselbigen, entstehen lokale Verwirbelungen, die zuvor vorwiegend laminare Strömungen in zumindest teilweise oder überwiegend turbulente Strömungen überführen, u.a. abhängig von der Strömungsgeschwindigkeit. Auf diese Weise wird bewirkt, dass Polymerelemente P, die weiter im Inneren der Kammer angeordnet sind (hier nicht eingezeichnet, aber im Verfahren etwa in der gezeigten Schnittebene während dem Verfahren angeordnet), ebenfalls zumindest teilweise mit verwirbelten und turbulenten Strömungen mit dem Behandlungsmediumdampf B in Kontakt kommen.

Die Anordnung im Beispiel der Fig. 11 dient dazu, das Behandlungsmedium B in der Kammer 1 gleichmäßig und bevorzugt im Inneren der Kammer 1 turbulent zu verteilen.

Alles hierin zum Behandlungsmedium Ausgeführte kann in manchen Ausführungsformen in einem Funktionalisierungsschritt auch für ein Funktionalisierungsmittel gelten.

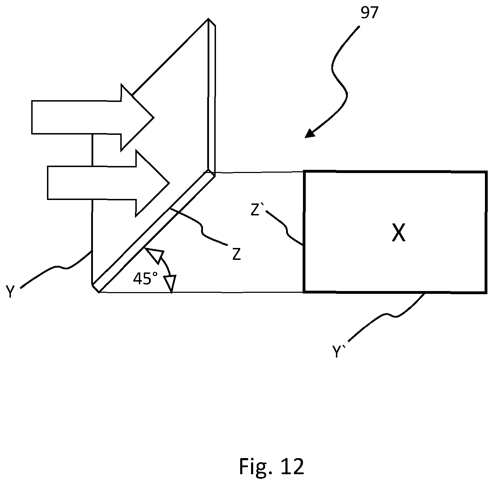

**Fig. 12** zeigt eine Ausgestaltung eines Leitblechs 97.

Es wird auf die Ausführungen zur Fig. 11 Bezug genommen.

Eine Strömung (weiße Blockpfeile) prallt auf einen optional 45° schräg dazu angestellten Abschnitt des Leitblechs, welcher in das Innere einer Kammer 1 (in Fig. 12 nicht gezeigt) hineinragt. Es kann Fig. 12 entnommen werden, dass die für die Strömung wirksame Höhe Z', die das abgebildete Leitblech dem Molekülstrom effektiv entgegenstellt, nur die projizierte Höhe Z' in Richtung der Strömung ist. Bei dem hier gezeigten Winkel von 45° entspricht die wirksame Höhe Z' zumindest annähernd ca. 71 % (sin 45°) der tatsächlichen Höhe Z. Da in diesem Beispiel die wirksame Breite Y' der tatsächlichen Breite Y entspricht, beträgt die prozessrelevante Oberfläche X ebenfalls ca. 71 % der tatsächlichen Fläche des Leitbleches.

Leitbleche 97, beispielsweise wie das in Fig. 12 gezeigte sollten bevorzugt quer zur Strömungsrichtung angeordnet und bevorzugt im näheren Bereich der Innenwandung, wie beispielsweise im näheren Bereich der Wandung, des Deckels und/oder des Bodens angebracht oder eingebracht sein.

Leitbleche 97 können in erster Linie dazu ausgeführt sein, lokale Verwirbelungen der Strömung auszulösen, sodass zumindest überwiegend oder teilweise laminare Strömungen in turbulente und/oder zumindest überwiegend oder teilweise turbulente Strömungen zu überführen.

Leitbleche 97 können im Zentrum der Kammer angeordnet sein, beispielsweise zwischen, über und/oder unter den Polymerelementen.

Leitbleche 97 können zumindest stellenweise an der Innenwandung anliegend vorgesehen sein, in anderen Ausführungsformen bilden sie zumindest in großen Teilen einen Abstand zwischen 5 mm und 40 mm zur Innenwandung, bevorzugt zwischen 8 mm und 30 mm.

**Fig. 13** zeigt die Anordnung einer Umwälzvorrichtung 21 im Inneren einer Kammer 1 (in der Fig. 13 nicht gezeigt) einer erfindungsgemäßen Vorrichtung zur Behandlung von Polymerelementen mit darüber angeordneten Polymerelementen P.

Es wird auf die Ausführungen zu den vorangegangenen Figuren Bezug genommen, um Wiederholungen zu vermeiden.

Von unten nach oben sind im Beispiel der Fig. 13 folgende Komponenten zu sehen:
- ein Magnetfeldabnehmer 29 aus ferromagnetischem Metall mit Antriebswelle 21a;
- eine Umwälzvorrichtung 21 mit umlaufendem Segment 26, welche mittels der Antriebswelle 21 mit dem Magnetfeldabnehmer 29 verbunden ist;
- ein Lochblech 20 als mechanischer Schutz der Umwälzvorrichtung 21; und
- ein Gestell 9 zum Aufstellen auf dem Boden 5, zu seiner Fixierung am Boden 5 oder an anderem Abschnitt der Kammer 1 (in der Fig. 13 nicht dargestellt) in, an oder auf welchem die zu behandelnden Polymerelemente P angeordnet bzw. angehängt werden können.
- Optional sind Leitbleche 97 mit unterschiedlicher Gestalt und nicht symmetrischer Anordnung am Gestell 9 verschraubt, wobei eines zumindest ansatzweise in Form eines Lochblechs ausgeführt ist. In manchen Ausführungsformen ist kein Leitblech am Gestell 9 befestigt.
- Ein optionaler Leitdeckel 97a ist an der Oberseite des Gestells 9 angeschraubt. Der Leitdeckel weist hier beispielhaft zwei kreisrunde Aussparungen oder Kreistaschen auf. In anderen Ausführungsformen können mehr oder weniger Aussparungen am Leitdeckel 97a vorhanden sein, in wieder anderen Ausführungsformen sind gar keine Aussparungen vorhanden. In bevorzugten Ausführungsformen ist kein Leitdeckel 97a vorhanden.

In einigen Ausführungsformen bilden diese Komponenten zusammen eine erfindungsgemäße Baugruppeneinheit 10, die als eine aus der Kammer 1 herausnehmbare Vorrichtung ausgestaltet sein kann.

Es kann vorgesehen sein, sie zur Behandlung bevorzugt orientiert an Markierungen, Rastpunkten und/oder Kavitäten an einer vordefinieren Position innerhalb der Kammer 1 zu positionieren, wobei es für manche Ausführungsformen auch mehrere solcher definierten Positionen geben kann, je nach Anwendung.

In manchen Ausführungsformen kann die Kammer 1 für unterschiedliche Behandlungen, Glättungen und/oder Funktionalisierungen mit Baugruppeneinheiten 10 genutzt werden, die zwar die gleichen Schnittstellen zur Kammer 1 aufweisen können (Grundmaße, Rastpunkte und Magnetfeldabnehmer 29), sich aber in anderen Aspekten voneinander unterscheiden können, wie beispielsweise in der Ausgestaltung der Umwälzvorrichtung 21 und/oder des Gestells 9 zur Aufnahme von Polymerelementen P, um beispielsweise einmal bevorzugt wenige große Polymerelemente P oder ein anderes Mal mehrere kleinere Polymerelemente P aufhängen oder aufspannen zu können.

Besonders bevorzugt können dabei unterschiedliche Vorrichtungen zur Veränderung der Strömungsrichtungen und/oder Strömungseigenschaften wie hier exemplarisch Leitbleche 97 angebracht sein, z. B**.** am Gestell 9, im unteren, mittleren und/oder oberen Bereich, beispielsweise mit unterschiedlichen Formen und/oder Flächen und/oder an (stark) unterschiedlichen Positionen und/oder in unterschiedlicher Anzahl.

Solche Anordnungen von beispielsweise Leitblechen 97, Prallblechen und/oder Lochblechen kann bevorzugt individuell für die Behandlung von spezifischen Kombinationen der Materialien, aus den die Polymerelemente 97 gebildet sind, und den verwendeten Behandlungsmedien B, eingerichtet sein. Auf dieses Weise kann sichergestellt werden, dass dem Anwender unterschiedliche Baugruppeneinheiten 10 und damit genau eine für das konkrete Material und Verfahren optimale Ausgestaltung seiner Vorrichtung bzw. der Kammer durch nur wenige Handgriffe möglich ist.

So kann beispielsweise für die Kombination von Propylenglykol als Behandlungsmedium B mit Polymerelementen P aus Polyamid 12 eine andere, eben beschriebene Anordnung von solchen Baugruppeneinheiten 10 nötig sein, als beispielsweise bei der Kombination von Polypropylen (PP) mit dem Behandlungsmedium B 3-methoxy-3-methyl-1-butanol acetat (MMB-Ac), oder beispielsweise die Kombination von Polymerelementen P aus Polyketon (PK) mit dem Behandlungsmedium B Benzylalkohol.

Die vorliegende Erfindung betrifft somit auch ein Set aus einer erfindungsgemäßen Vorrichtung 100 mit wenigstens zwei voneinander verschiedenen, erfindungsgemäßen Baugruppeneinheiten 10.

In manchen Ausführungsformen ist eine solche Baugruppeneinheit 10 beispielsweise am Gestell 9 und/oder an anderer Stelle(n) mit Nummerierungen und/oder Codierungen und/oder mindestens einem Chip wie einem RFID-Chip versehen, damit die Steuervorrichtung 200 der Vorrichtung 100 bevorzugt anhand von Sensoren die aktuell eingelegte Baugruppeneinheit 10 automatisch erkennt und die entsprechenden Programme und/oder Parameter auswählt, ausführt und/oder hinterlegt. Derartige Sensoren können Teil der Vorrichtung 100 sein.

### Beispiel 1

Eine Vorrichtung, wie in Fig. 7b dargestellt, mit nur einem Wärmereaktor 90, wurde zur Behandlung von Polymerelementen P aus PA12 verwendet, die durch ein MJF-Verfahren (Hewlett-Packard) erhalten wurden. Die vier Elemente hatten alle eine Oberflächenrauigkeit von etwa Ra = 9; Rz = 50 und die Oberflächen hatte eine graue Farbe.

In den Wärmereaktor 90 wurden etwa 35 ml Propylenglykol als Behandlungsmedium B eingefüllt, wobei die exakte Menge für die Behandlung bevorzugt nicht unmittelbar entscheidend ist. Die Polymerelemente P wurden innerhalb der Kammer 1 an den dafür vorgesehenen Aufnahmevorrichtungen 9a für Polymerelemente P angebracht, ohne dass sie sich untereinander berührten. Der Deckel 7 wurde verschlossen und über die Unterdruckleitung 17 ein Unterdruck von ca. 800 hPa (ca. 0,8 bar) Absolutdruck mit der Vakuumpumpe erzeugt. Ein Propeller, als Umwälzvorrichtung 21 am Boden innerhalb der Kammer 1 angeordnet, mit Durchmesser 150 mm wurde mit einer Drehzahl von 1200 U/min von oben betrachtet gegen den Uhrzeigersinn drehend eingeschaltet, so dass die Strömungsrichtung nach oben zeigte, wobei die Drehrichtung und die Drehzahlen im weiteren Verlauf der Behandlung mehrfach verändert wurden. Die ersten Heizvorrichtungen 11 am Boden 5, am Deckel 7 und an der Wandung 3 der Kammer 1 wurden eingeschaltet und eine Steuervorrichtung regelte die Temperatur im Innenraum der Kammer auf etwa 165°C. Während dem beschriebenen Aufheizen, etwa 5 Minuten vor dem Erreichen der mittleren Kammertemperatur von etwa 165°C, wurden eine zweite und eine vierte Heizvorrichtung 12 bzw. 12'' am Wärmereaktor 90 gleichzeitig eingeschaltet, wodurch das Rohr 91 zumindest anfänglich auf etwa 155°C bis 180°C erwärmt wurde, wobei relativ zeitgleich der Unterdruck in der Kammer 1 mit der Vakuumpumpe auf ca. 0,2 bar Absolutdruck reduziert wurde. In Folge wurde durch Einschalten der dritten Heizvorrichtung 12' das Behandlungsmedium B Propylenglykol auf etwa 145°C bis 155°C erwärmt und verdampft, wurde beim Aufsteigen im Wärmereaktor weiter erwärmt auf ca. 157°C bis 164°C und verteilte sich daraufhin während etwa 5 Minuten innerhalb der Kammer, bis alle Heizvorrichtungen am Wärmereaktor wieder ausgeschaltet wurden, wobei die genaue Temperatur und die genaue Menge des Dampfes nicht exakt bestimmt waren, sondern sich die anfängliche Temperatur des Dampfes aufgrund der sich verändernden Flüssigkeitsmenge von anfänglich 35 ml Propylenglykol u.a**.** durch die Verdampfungsenthalpie bedingt ändern konnte und nicht die gesamte Menge Propylenglykol verdampfte, sondern ein vorher nicht exakt bestimmbarer Rest im Wärmereaktor verblieb, jedoch im Nachgang mit etwa 6 ml Restmenge Propylenglykol beziffert wurde. Der Propylenglykol-Dampf verbreitete sich allein durch die zugeführte Wärme ohne weiteres Zutun, also beispielsweise ohne das Öffnen eines Ventils, optional Ventil 95, und wurde durch die Umwälzvorrichtung 21 weiter in Bewegung versetzt, wobei der Dampfdruck innerhalb der Kammer auf etwa 0,7 bar bis 0,8 bar Absolutdruck anstieg. Nach 3 Minuten wurden alle Heizvorrichtungen 11 ausgeschaltet und die Vakuumpumpe eingeschaltet, um Dampf aus der Kammer 1 zu pumpen, und damit den Glättungsvorgang zu stoppen, wobei zeitgleich das Ventil 95 zur Belüftung an der Kammer mit einer Ventilbohrung von ca. 3,3 mm geöffnet wurde, um der Kammer 1 zumindest annähernd die gleiche Menge Luft nachzuführen, wie sie die Vakuumpumpe absaugte, und auf diese Weise der Druck innerhalb der Kammer 1 während des Abpumpvorgangs von etwa 10 Minuten zumindest annähernd bei etwa 0,8 bar aufrechterhalten bleiben konnte. Anschließend wurde der Deckel geöffnet, die Polymerelemente P wurden entnommen und 2 Stunden lang in einem Vakuumofen bei 90 °C getrocknet.

Die erhaltenen Polymerelemente P waren glatt und schwarz und hatten klare Konturen. Die Kanten waren scharf und nicht abgerundet, die Oberflächen waren glatt, ohne Rillen und/oder Erhebungen, und mechanisch fest. Die Rauheit konnte deutlich verringert werden, so dass die Rauigkeit der Elemente nach der Behandlung gemittelt Ra = 1,9 und Rz = 14 betrug.

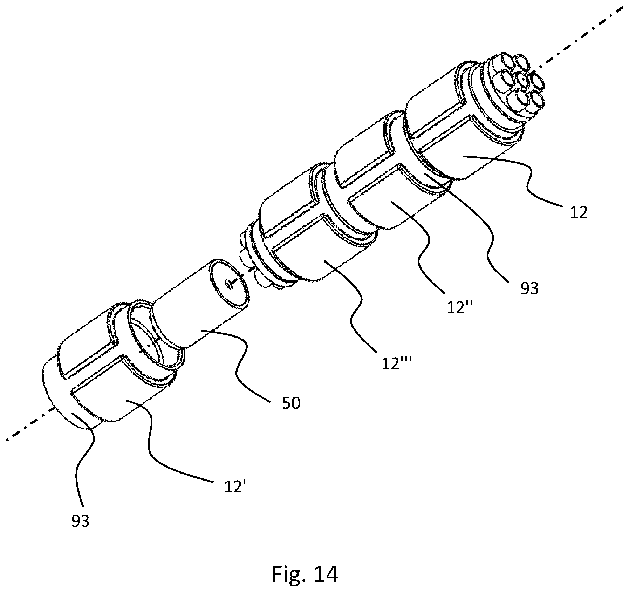

**Fig. 14** zeigt eine Ausführungsform eines erfindungsgemäßen Wärmereaktors 90 in Explosionsdarstellung bzw. in einem zerlegten Zustand.

Im Beispiel der Fig. 14 ist der Wärmereaktor 90 zerlegbar ausgeführt, wie beispielsweise werkzeuglos zu öffnen, um Behandlungsmedium B einzufüllen, wobei das Befüllen mit im vorliegenden Beispiel mittels einer Kapsel 50 geschieht, die als Einwegkartuschen ausgeführt sein kann.

In alternativen Ausführungsformen kann der Wärmereaktor 90 zum Nachfüllen mit Behandlungsmedium B nicht geöffnet werden, sondern wird dieser durch das obere Ende und/oder durch einen dafür vorgesehenen Einfüllbereich mit Behandlungsmedium B befüllt, bevorzugt in einer vordefinierten Menge.

Am Wärmereaktor 90 der Fig. 14 sind beispielhaft vier Heizvorrichtungen 12, 12',12", 12‴ gut zu erkennen, hierin als zweite bis fünfte Heizvorrichtung bezeichnet. Hierzu wird auf die Beschreibung der Fig. 7ff Bezug genommen.

**Fig. 15** zeigt einen Blick in das Innere des Wärmereaktors 90, in welches ein mögliches Inlay 91b eingebracht ist.

**Fig. 15a** zeigt das Inlay 91b aus Fig. 15.

### Bezugszeichenliste

- 1: Kammer
- 3: seitliche Wandung
- 5: Boden
- 5a: Bodenabschnitt
- 7: Deckel
- 9: Gestell
- 9a: Aufnahmevorrichtung für Polymerelemente
- 11: erste Heizvorrichtung
- 12: zweite Heizvorrichtung
- 12': dritte Heizvorrichtung
- 12": vierte Heizvorrichtung
- 12‴: fünfte Heizvorrichtung
- 12a: Aufnahme für zweite Heizvorrichtung; Heizfassung
- 13: Wärmerippen
- 15: Sicke
- 17: Unterdruckleitung
- 17a: Bypassleitung
- 17b: Leitung
- 19: Kühlkörper
- 20: Lochblech; mechanischer Schutz der Umwälzvorrichtung
- 21: Umwälzvorrichtung; Propeller
- 21a: Antriebswelle
- 22: Flügel
- 22a: Flügel
- 23: Magnetantrieb
- 24: Mitnehmerverbindung
- 25: Antrieb; Motor
- 25a: Antriebswelle
- 26: umlaufendes Segment
- 26': umlaufende Einhausung
- 27: Permanentmagnet
- 28: Wellendurchführung

- 29: ferromagnetisches Metall; Magnetfeldabnehmer
- 30: Scharnier
- 31: Dichtung
- 33: Kühler an Unterdruckleitung
- 40: Luftleitplatte
- 50: Aufnahmevorrichtung für das Behandlungsmedium; Behandlungsmedium-Pad; Kapsel für Behandlungsmedium
- 51: Induktionsfeld
- 53: thermische Isolierung
- 53': thermische Isolierung
- 54: Abstandselement
- 55: elektrische Kontakte
- 57: Axiallager
- 70: Nadelventil
- 71: Kapselgehäuse
- 72: Verbindungsleitung
- 73: Alukapsel
- 77: Deckel
- 77a: Scharnier
- 79: Adapter (innen)
- 80: Schwabbelventil
- 81: Auflager zur Abdichtung
- 90: Wärmereaktor
- 91: Rohr
- 91b: Inlay
- 93: Manschettenadapter; Metallelement
- 95: Ventil
- 95a: Ventil
- 95b: Ventil; Abführventil
- 97: Leitblech
- 97a: Leitdeckel

- 100: Vorrichtung
- 200: Steuervorrichtung
- B: Behandlungsmedium

- P: Polymerelemente
- X: prozessrelevante Oberfläche
- Y: Breite Leitblech
- Y': Wirksame (projizierte) Breite Leitblech
- Z: Höhe Leitblech
- Z': Wirksame (projizierte) Höhe Leitblech

- S1: Verfahrensschritt
- S2: Verfahrensschritt
- S3: Verfahrensschritt
- a): Verfahrensschritt
- b): Verfahrensschritt
- c): Verfahrensschritt

## Patentansprüche

1. Vorrichtung (100) zur Behandlung von Polymerelementen (P), die durch einen additiven Herstellungsprozess erhalten wurden, mittels eines Behandlungsmediums (B), umfassend
- eine Kammer (1) zur Aufnahme der zu behandelnden Polymerelemente (P), wobei die Kammer (1) eine seitliche Wandung (3), einen Boden (5) und eine, vorzugsweise stirnseitige oder obere, Öffnung aufweist;
- einen Deckel (7) oder eine Tür oder Klappe zum Verschließen der Öffnung der Kammer (1);
- optional: eine Aufnahmevorrichtung (9a) zum Lagern der Polymerelemente (P) im Inneren der Kammer (1);
- eine erste Heizvorrichtung (11), und optional eine zweite Heizvorrichtung (12); und
- optional: eine Vakuum- oder Unterdruckvorrichtung oder einen Anschluss hierfür; **dadurch gekennzeichnet dass**:
- wenigstens einen Wärmereaktor (90), welcher wenigstens eine Heizvorrichtung (12, 12', 12", 12‴) aufweist, angeordnet in oder an einem Rohr (91) des Wärmereaktors (90), wobei der Wärmereaktor (90) weiter eine Aufnahmevorrichtung (50) für das Behandlungsmedium (B) in flüssigem Zustand aufweist oder hiermit verbunden ist.

2. Vorrichtung (100) nach Anspruch 1, wobei eine Umwälzvorrichtung (21) in der Kammer (1) vorgesehen ist.

3. Vorrichtung (100) nach einem der vorangegangenen Ansprüche, weiter aufweisend eine Öffnung der Kammer (1) oder ihrer Wandung (3) oder ihres Bodens (5) zu einem Äußeren der Kammer (1), wobei die Vorrichtung (100) ein Ventil (95) aufweist zum Öffnen und Verschließen der Öffnung gegenüber dem Äußeren, wobei die Öffnung zusätzlich zu dem Anschluss für die Vakuum- oder Unterdruckvorrichtung oder die
Unterdruckleitung (17)vorgesehen ist.

4. Vorrichtung (100) nach dem vorangegangenen Anspruch, wobei die Steuervorrichtung (200) programmiert ist, um die Vakuum- oder Unterdruckvorrichtung zum Absaugen aus dem Inneren der Kammer (1) oder zum Anstreben von Unterdruck in der Kammer (1) anzusteuern und zeitgleich, oder zeitlich überlappend, hierzu das Ventil (95) derart zu betätigen, dass über die Öffnung vom Äußeren her Gas oder Luft in die Kammer (1) einströmen kann.

5. Vorrichtung (100) nach einem der vorangegangenen Ansprüche, wobei in der Kammer (1) wenigstens eine Vorrichtung zur Änderung der Strömungsrichtung und/oder Strömungseigenschaften vorgesehen ist, insbesondere ausgestaltet als ein Leitblech.

6. Vorrichtung (100) nach einem der vorangegangenen Ansprüche, wobei der Wärmereaktor (90) angeordnet ist, um ganz oder im Wesentlichen außerhalb der Kammer (1) vorgesehen zu sein, und/oder derart, dass sein Inneres über eine Öffnung der Kammer (1) oder ihrer Wandung (3) oder ihres Bodens (5) mit dem Inneren der Kammer (1) in Fluidverbindung steht oder gebracht werden kann.

7. Vorrichtung (100) nach einem der vorangegangenen Ansprüche, weiter aufweisend einen Kondensator, welcher zwischen der Kammer (1) und der Vakuum- oder Unterdruckvorrichtung angeordnet ist, z. B**.** in der Unterdruckleitung (17) oder dem Anschluss für die Vakuum- oder Unterdruckvorrichtung oder die Unterdruckleitung (17).

8. Vorrichtung (100) nach einem der vorangegangenen Ansprüche, weiter aufweisend eine Mehrzahl von Heizvorrichtungen (11), die an Deckel (7), Boden (5) und/oder Wandung (3) vorgesehen sein können.

9. Vorrichtung (100) nach einem der vorangegangenen Ansprüche, wobei Deckel (7), Boden (5) und/oder Wandung (3) aus wärmeleitfähigem Material, insbesondere Aluminium, gefertigt sind oder ein solches Material aufweisen.

10. Vorrichtung (100) nach einem der vorangegangenen Ansprüche, weiter aufweisend ein herausnehmbares Gestell (9) mit der Aufnahmevorrichtung (9a) zum Aufnehmen und/oder Lagern der Polymerelemente (P) im Inneren der Kammer (1), wobei das Gestell (9) aufweist oder verbunden ist mit
- dem Magnetfeldabnehmer (29); und
- einer Umwälzvorrichtung (21); und weiter optional
- der Aufnahmevorrichtung (9a) für die zu bearbeiteten Polymerelemente (P).

11. Vorrichtung (100) nach einem der vorangegangenen Ansprüche, wobei die Vorrichtung (100) nicht mit einer weiteren Kammer in Fluidverbindung steht, insbesondere nicht mit einer solchen, aus welcher das Behandlungsmedium (B) der Kammer (1) vorgewärmt zugeführt werden würde, oder wobei die Kammer (1) zugleich das Reservoir für das Behandlungsmedium (B) ist.

12. Verfahren zur Behandlung oder Oberflächenbehandlung von Polymerelementen (P), die durch einen additiven Herstellungsprozess erhalten wurden, umfassend
- Bereitstellen einer Vorrichtung (100), nach einem der vorangegangenen Ansprüche;
- Bereitstellen der zu behandelnden Polymerelemente (P) in der Kammer (1) der Vorrichtung (100);
- Bereitstellen eines Behandlungsmediums (B) außerhalb oder in der Kammer (1);
ferner umfassend als weitere Schritte
a) einen Erwärmungsschritt zum Erwärmen der Polymerelemente (P) in der Kammer (1) unter Einsatz der ersten Heizvorrichtung (11);
b) einen Verdampfungsschritt zum Verdampfen des Behandlungsmediums (B) außerhalb oder in der Kammer (1) mittels der ersten und/oder der zweiten Heizvorrichtung (12); und
c) optional: einen Kühlschritt zum Kühlen der Polymerelemente (P).

13. Verfahren nach Anspruch 12, wobei das Verfahren in einer Kammer (1), nicht in mehreren Kammern (1) abläuft.

14. Verfahren nach Anspruch 12 oder 13, wobei
- die Polymerelemente (P) im Erwärmungsschritt auf eine erste Temperatur erwärmt werden;
- das Behandlungsmedium (B) verdampft wird, wobei der Dampf des Behandlungsmediums (B) insbesondere auf eine zweite Temperatur erhitzt oder auf der zweiten Temperatur gehalten wird; wobei
- das auf die zweite Temperatur temperierte Behandlungsmedium/-dampf (B) für eine bestimmte Zeitdauer auf die Polymerelemente einwirkt; wobei das Einwirkenlassen des Behandlungsmediums (B) und/oder dessen Dampfs auf die Polymerelemente vorzugsweise bewirkt, dass eine Oberfläche der Polymerelemente (P) zumindest teilweise mit dem Behandlungsmedium (B) bedeckt bzw. von diesem benetzt wird, womit vorzugsweise eine Veränderung der Oberflächeneigenschaften einhergeht; und
weiter umfassend den Schritt:
- Abführen zumindest eines Teils des Behandlungsmediums (B) nach der bestimmten Zeitdauer, wobei die Polymerelemente (P) vom Beginn des Temperierens der Polymerelemente bis zum Abschluss des Abführens des Behandlungsmediums (B) in einer geschlossenen Umgebung positioniert sind.

15. Verfahren nach einem der Ansprüche 12 bis 14, wobei zeitgleich, oder zeitlich überlappend, während des Abführens zumindest eines Teils des Behandlungsmediums (B) Gas oder Luft in die Kammer (1) eingeführt oder eingelassen wird.

## Claims

1. An apparatus (100) for treating polymer elements (P), obtained by an additive manufacturing process, by means of a treatment medium (B), comprising:
- a chamber (1) for receiving the polymer elements (P) to be treated, the chamber (1) comprising a side wall (3), a base (5), and a, preferably face-side or upper, opening;
- a cover (7) or a door or flap for closing the opening of the chamber (1);
- optionally: a receiving device (9a) for storing the polymer elements (P) inside the chamber (1);
- a first heating device (11), and optionally a second heating device (12); and
- optionally: a vacuum or negative pressure device or a connection therefor;
**characterized in that** it comprises:
- at least one thermal reactor (90), which comprises at least one heating device (12, 12', 12", 12‴) arranged in or on a tube (91) of the thermal reactor (90), the thermal reactor (90) further comprising a receiving device (50) for the treatment medium (B) in a liquid state or being connected thereto.

2. The apparatus (100) according to claim 1, wherein a circulation device (21) is provided in the chamber (1).

3. The apparatus (100) according to any one of the preceding claims, further comprising an opening of the chamber (1) or of its wall (3) or of its base (5) to an exterior of the chamber (1), wherein the apparatus (100) comprises a valve (95) for opening and closing the opening relative to the exterior, wherein the opening is provided in addition to the connection for the vacuum or negative pressure device or the negative pressure line (17).

4. The apparatus (100) according to the preceding claim, wherein the control device (200) is programmed to control the vacuum or negative pressure device to evacuate the interior of the chamber (1) or to establish a negative pressure in the chamber (1) and, simultaneously or with a time overlap therewith, to actuate the valve (95) such that gas or air can flow into the chamber (1) from the exterior via the opening.

5. The apparatus (100) according to any one of the preceding claims, wherein at least one device for altering the flow direction and/or flow properties is provided in the chamber (1), in particular designed as a baffle.

6. The apparatus (100) according to any one of the preceding claims, wherein the thermal reactor (90) is arranged to be provided wholly or substantially outside the chamber (1), and/or such that its interior is or can be brought into fluid communication with the interior of the chamber (1) via an opening of the chamber (1) or of its wall (3) or of its base (5).

7. The apparatus (100) according to any one of the preceding claims, further comprising a condenser arranged between the chamber (1) and the vacuum or negative pressure device, e.g. in the negative pressure line (17) or in the connection for the vacuum or negative pressure device or for the negative pressure line (17).

8. The apparatus (100) according to any one of the preceding claims, further comprising a plurality of heating devices (11) which can be provided on the cover (7), base (5), and/or wall (3).

9. The apparatus (100) according to any one of the preceding claims, wherein the cover (7), base (5), and/or wall (3) are made of, or comprise, a thermally conductive material, in particular aluminum.

10. The apparatus (100) according to any one of the preceding claims, further comprising a removable rack (9) with the receiving device (9a) for receiving and/or storing the polymer elements (P) inside the chamber (1), wherein the rack (9) comprises or is connected to:
- the magnetic field sensor (29); and
- a circulation device (21); and further optionally
- the receiving device (9a) for the polymer elements (P) to be processed.

11. The apparatus (100) according to any one of the preceding claims, wherein the apparatus (100) is not in fluid communication with a further chamber, in particular not with such a chamber from which the treatment medium (B) would be supplied preheated to the chamber (1), or wherein the chamber (1) also constitutes the reservoir for the treatment medium (B).

12. A method for treating or surface-treating polymer elements (P) obtained by an additive manufacturing process, comprising:
- providing an apparatus (100) according to any one of the preceding claims;
- providing the polymer elements (P) to be treated in the chamber (1) of the apparatus (100);
- providing a treatment medium (B) outside or in the chamber (1);
further comprising the following further steps:
a) a heating step for heating the polymer elements (P) in the chamber (1) using the first heating device (11);
b) an evaporation step for evaporating the treatment medium (B) outside or in the chamber (1) by means of the first heating device (11) and/or the second heating device (12); and
c) optionally: a cooling step for cooling the polymer elements (P).

13. The method according to claim 12, wherein the method is carried out in one chamber (1), not in a plurality of chambers (1).

14. The method according to claim 12 or 13, wherein:
- the polymer elements (P) are heated to a first temperature in the heating step;
- the treatment medium (B) is evaporated, the vapor of the treatment medium (B) being in particular heated to a second temperature or maintained at the second temperature; wherein
- the treatment medium/vapor (B) temperature-controlled to the second temperature acts on the polymer elements for a specific period of time; wherein allowing the treatment medium (B) and/or its vapor to act on the polymer elements preferably causes a surface of the polymer elements (P) to be at least partially covered or wetted by the treatment medium (B), which is preferably accompanied by a change in the surface properties; and
further comprising the step of:
- removing at least a portion of the treatment medium (B) after the specific period of time, wherein the polymer elements (P) are positioned in a closed environment from the start of the temperature control of the polymer elements until the completion of the removal of the treatment medium (B).

15. The method according to any one of claims 12 to 14, wherein gas or air is introduced or admitted into the chamber (1) during the removal of at least a portion of the treatment medium (B) simultaneously or with a time overlap.

## Revendications

1. Un appareil (100) de traitement d'éléments polymères (P), obtenus par un procédé de fabrication additive, au moyen d'un milieu de traitement (B), comprenant :
- une chambre (1) pour recevoir les éléments polymères (P) à traiter, la chambre (1) présentant une paroi latérale (3), un fond (5) ainsi qu'une ouverture, de préférence sur la face frontale ou supérieure;
- un couvercle (7) ou une porte ou un volet pour fermer l'ouverture de la chambre (1);
- optionnellement : un dispositif de réception (9a) pour stocker les éléments polymères (P) à l'intérieur de la chambre (1);
- un premier dispositif de chauffage (11), et optionnellement un second dispositif de chauffage (12); et
- optionnellement : un dispositif de vide ou de sous-pression ou un raccord à cet effet;
**caractérisé en ce qu'**il comprend :
- au moins un réacteur thermique (90), qui présente au moins un dispositif de chauffage (12, 12', 12", 12‴) agencé dans ou sur un tuyau (91) du réacteur thermique (90), le réacteur thermique (90) présentant en outre un dispositif de réception (50) pour le milieu de traitement (B) à l'état liquide ou étant relié à celui-ci.

2. L'appareil (100) selon la revendication 1, dans lequel un dispositif de circulation (21) est prévu dans la chambre (1).

3. L'appareil (100) selon l'une quelconque des revendications précédentes, comprenant en outre une ouverture de la chambre (1) ou de la paroi (3) de celle-ci ou du fond (5) de celle-ci vers un extérieur de la chambre (1), dans lequel l'appareil (100) comprend une vanne (95) pour ouvrir et fermer l'ouverture vis-à-vis de l'extérieur, l'ouverture étant prévue en plus du raccord pour le dispositif de vide ou de sous-pression ou pour la conduite de sous-pression (17).

4. L'appareil (100) selon la revendication précédente, dans lequel le dispositif de commande (200) est programmé pour commander le dispositif de vide ou de sous-pression afin d'évacuer l'intérieur de la chambre (1) ou pour établir une sous-pression dans la chambre (1) et, simultanément ou avec un chevauchement temporel avec celle-ci, pour actionner la vanne (95) de telle sorte que du gaz ou de l'air puisse s'écouler dans la chambre (1) depuis l'extérieur via l'ouverture.

5. L'appareil (100) selon l'une quelconque des revendications précédentes, dans lequel il est prévu dans la chambre (1) au moins un dispositif pour modifier la direction d'écoulement et/ou les propriétés d'écoulement, notamment conçu sous la forme d'un déflecteur.

6. L'appareil (100) selon l'une quelconque des revendications précédentes, dans lequel le réacteur thermique (90) est agencé pour être prévu entièrement ou sensiblement à l'extérieur de la chambre (1), et/ou de telle sorte que son intérieur soit ou puisse être mis en communication fluidique avec l'intérieur de la chambre (1) via une ouverture de la chambre (1) ou de la paroi (3) de celle-ci ou du fond (5) de celle-ci.

7. L'appareil (100) selon l'une quelconque des revendications précédentes, comprenant en outre un condenseur qui est disposé entre la chambre (1) et le dispositif de vide ou de sous-pression, par exemple dans la conduite de sous-pression (17) ou dans le raccord pour le dispositif de vide ou de sous-pression ou pour la conduite de sous-pression (17).

8. L'appareil (100) selon l'une quelconque des revendications précédentes, comprenant en outre une pluralité de dispositifs de chauffage (11) qui peuvent être prévus sur le couvercle (7), le fond (5) et/ou la paroi (3).

9. L'appareil (100) selon l'une quelconque des revendications précédentes, dans lequel le couvercle (7), le fond (5) et/ou la paroi (3) sont fabriqués en un matériau thermiquement conducteur, notamment en aluminium, ou comprennent un tel matériau.

10. L'appareil (100) selon l'une quelconque des revendications précédentes, comprenant en outre un châssis amovible (9) doté d'un dispositif de réception (9a) pour recevoir et/ou stocker les éléments polymères (P) à l'intérieur de la chambre (1), dans lequel le châssis (9) comprend les éléments suivants ou est relié à ceux-ci :
- le capteur de champ magnétique (29); et
- un dispositif de circulation (21); et en outre optionnellement
- le dispositif de réception (9a) pour les éléments polymères (P) à traiter.

11. L'appareil (100) selon l'une des revendications précédentes, dans lequel l'appareil (100) n'est pas en communication fluidique avec une autre chambre, notamment pas avec une chambre depuis laquelle le milieu de traitement (B) serait amené préchauffé à la chambre (1), ou dans lequel la chambre (1) est à la fois le réservoir pour le milieu de traitement (B).

12. Un procédé de traitement ou traitement de surface d'éléments polymères (P) obtenus par un procédé de fabrication additive, comprenant :
- la fourniture d'un appareil (100) selon l'une quelconque des revendications précédentes;
- la fourniture des éléments polymères (P) à traiter dans la chambre (1) de l'appareil (100);
- la fourniture d'un milieu de traitement (B) à l'extérieur ou dans la chambre (1);
comprenant en outre les étapes supplémentaires suivantes :
a) une étape de chauffage pour chauffer les éléments polymères (P) dans la chambre (1) en utilisant le premier dispositif de chauffage (11);
b) une étape d'évaporation pour évaporer le milieu de traitement (B) à l'extérieur ou dans la chambre (1) au moyen du premier dispositif de chauffage (11) et/ou du second dispositif de chauffage (12); et
c) optionnellement : une étape de refroidissement pour refroidir les éléments polymères (P).

13. Le procédé selon la revendication 12, dans lequel le procédé est mis en œuvre dans une seule chambre (1) et non dans plusieurs chambres (1).

14. Le procédé selon la revendication 12 ou 13, dans lequel :
- les éléments polymères (P) sont chauffés à une première température lors de l'étape de chauffage;
- le milieu de traitement (B) est évaporé, la vapeur du milieu de traitement (B) étant notamment chauffée à une deuxième température ou maintenue à la deuxième température; dans lequel
- le milieu/la vapeur de traitement (B) tempéré(e) à la deuxième température agit sur les éléments polymères pendant une durée déterminée, l'action du milieu de traitement (B) et/ou de sa vapeur sur les éléments polymères ayant de préférence pour effet qu'une surface des éléments polymères (P) soit au moins partiellement recouverte ou mouillée par le milieu de traitement (B), ce qui s'accompagne de préférence d'une modification des propriétés de surface; et
comprenant en outre l'étape suivante :
- l'évacuation d'au moins une partie du milieu de traitement (B) après la durée déterminée, les éléments polymères (P) étant positionnés dans un environnement clos depuis le début de la mise à température des éléments polymères jusqu'à l'achèvement de l'évacuation du milieu de traitement (B).

15. Le procédé selon l'une des revendications 12 à 14, dans lequel, du gaz ou de l'air est introduit ou admis dans la chambre (1) pendant l'évacuation d'au moins une partie du milieu de traitement (B), simultanément ou avec un chevauchement temporel.
